# EUROPEAN PATENT APPLICATION

(11) **EP 4 848 873 A1**
(43) Date of publication of application: **02.12.2026**
(21) Application number: 25751375.4
(22) Date of filing: 24.01.2025
(51) Int. Cl.: H04W 74/0833, H04W 60/00, H04W 76/27

(54) **COMMUNICATION METHOD AND APPARATUS**

(30) Priority: 07.02.2024 CN 202410175965; 09.08.2024 CN 202411098009
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: Huawei European IPR
(86) International application number: PCT/CN2025/074983
(87) International publication number: WO 2025/167773

(57) **Abstract**

This application relates to the field of communication technologies, and provides a communication method and apparatus to improve efficiency of performing operations on a plurality of terminal devices. In the method, after an access network device receives a random access request from a terminal device, the access network device may determine, for the terminal device, an identifier to be used in a first signaling layer. This enables the access network device and a core network device to indicate the terminal device via the identifier, thereby performing an operation on the terminal device. In other words, the access network device and the core network device may assign, for each terminal device requiring operations, an identifier to be used in the first signaling layer. In this case, the access network device can independently trigger random access of each terminal device without relying on an indication from the core network device, and the core network device can perform, during random access of the terminal devices, an operation on a terminal device that has completed the random access. As a result, the efficiency of performing operations on the plurality of terminal devices can be improved.

## Description

This application claims priorities to Chinese Patent Application No. 202410175965.8, filed with the China National Intellectual Property Administration on February 7, 2024 and entitled "COMMUNICATION METHOD AND APPARATUS", and to Chinese Patent Application No. 202411098009.0, filed with the China National Intellectual Property Administration on August 9, 2024 and entitled "COMMUNICATION METHOD AND APPARATUS", both of which are incorporated herein by reference in their entireties.

### TECHNICAL FIELD

This application relates to the communication field, and in particular, to a communication method and apparatus.

### BACKGROUND

In ambient internet of things (Ambient IoT, A-IoT), when operations need to be performed on a plurality of terminal devices, a reader accesses the plurality of terminal devices based on an indication of a core network element (for example, an access and mobility management function (access and mobility management function, AMF) or a passive IoT device management function (tag management function, TMF)). In addition, after a terminal device completes random access, the core network element performs an operation on the terminal device, and after the operation on the terminal device is completed, the core network element indicates the reader to trigger random access of the next terminal device.

However, the foregoing manner suffers from low efficiency. How to improve efficiency of performing operations on the plurality of terminal devices is a key research focus.

### SUMMARY

Embodiments of this application provide a communication method and apparatus, to improve efficiency of performing operations on a plurality of terminal devices.

To achieve the foregoing objective, the following technical solutions are used in this application.

According to a first aspect, a communication method is provided. The method may be performed by an access network device, or may be performed by a component in the access network device, for example, a processor, a chip, or a chip system in the access network device, or may be implemented by a logical module or software that can implement all or some functions of the access network device. The access network device may be a device having an access function. When a terminal device is used as a reader, the terminal device is considered as an access network device. That is, in this case, the terminal device may be configured to access another terminal device, and is connected to a core network device. Alternatively, the access network device may be another device. This is not limited. The following provides descriptions by using an example in which the method is performed by the access network device. The method includes: After receiving a first random access request from a first terminal device, the access network device determines a first identifier of the first terminal device, where the first identifier indicates the first terminal device at a first signaling layer. The access network device sends the first identifier and an identifier of the first terminal device to a core network device, where the identifier of the first terminal device indicates the first terminal device at a second signaling layer. The access network device receives an operation request message from the core network device, where the operation request message is determined based on the identifier of the first terminal device, and the operation request message includes the first identifier and an operation instruction. The access network device obtains a second identifier based on the first identifier, where the second identifier indicates the first terminal device at an access control layer. The access network device sends the operation instruction and the second identifier to the first terminal device.

It can be learned from the method according to the first aspect that, after the access network device receives the random access request from the terminal device, for example, when the access network device completes a random access procedure with the terminal device, or in a process in which the access network device performs the random access procedure with the terminal device, the identifier to be used in the first signaling layer may be determined for the terminal device. This enables the access network device and the core network device to indicate the terminal device via the identifier, thereby performing an operation on the terminal device. For example, after determining the operation on the first terminal device based on the identifier of the first terminal device, the core network device may send the operation request message to the access network device, where the operation request message includes the first identifier and the operation instruction, that is, the operation request message indicates the terminal device (that is, the first terminal device) indicated by the first identifier to perform an operation indicated by the operation instruction; and the access network device may determine, based on the operation request message, to send the operation instruction to the first terminal device. That is, in this case, the access network device may send the second identifier and the operation instruction to the first terminal device, so that the first terminal device may determine, via the second identifier, that the operation instruction is an instruction sent to the first terminal device, to perform the operation indicated by the operation instruction. In other words, the access network device and the core network device may assign, for each terminal device requiring operations, the identifier to be used in the first signaling layer. In this case, the access network device can independently trigger random access of each terminal device without relying on an indication from the core network device, and the core network device can perform, during random access of the terminal devices, an operation on a terminal device that has completed the random access. That is, in this case, random access of each of the plurality of terminal devices and an operation on the terminal device may not be serial, that is, random access and an operation are performed on a next terminal device only after random access of and an operation on a terminal device is completed, so that efficiency of performing operations on a plurality of terminal devices can be improved.

It may be understood that the operation instruction and the second identifier may be two pieces of parallel information, or the second identifier may be carried in the operation instruction. A specific form may be flexibly set based on an actual situation, and is not limited.

In a possible design solution, the method according to the first aspect further includes: The access network device receives the first random access request, where the first random access request includes the second identifier. The determining the first identifier of the first terminal device includes: The access network device allocates the first identifier to the first terminal device based on the second identifier. It may be understood that the access network device may generate the first identifier based on the second identifier. In addition, the first identifier is different from the second identifier.

Optionally, the method according to the first aspect further includes: The access network device stores a context of the first terminal device, where the context of the first terminal device includes the second identifier and the first identifier. It may be understood that there is a correspondence between the first identifier and the second identifier. After allocating the first identifier to the first terminal device, the access network device may maintain the correspondence between the first identifier and the second identifier, so that the access network device subsequently determines the second identifier based on the first identifier, and sends the operation instruction to the first terminal device based on the second identifier.

Further, the operation request message further includes first indication information, and the first indication information indicates the access network device to delete the context of the first terminal device after the access network device completes an operation on the first terminal device. It may be understood that after completing the operation on the first terminal device, the access network device may no longer use the context of the first terminal device, or may not use the context of the first terminal device within a period of time after completing the operation on the first terminal device. In this way, the access network device can release the context of the first terminal device in time, thereby avoiding redundancy and improving storage efficiency.

Further, before the access network device receives the first random access request, the method according to the first aspect further includes: The access network device receives an operation task request message from the core network device, where the operation task request message includes a task identifier. The access network device broadcasts a second random access request based on the operation task request message, where the context of the first terminal device further includes the task identifier. In other words, the access network device may associate the first identifier, the second identifier, and the task identifier, that is, there is a correspondence between the first identifier, the second identifier, and the task identifier. For example, there is a correspondence between the task identifier and the first identifier, and there is a correspondence between the first identifier and the second identifier. In this way, the core network device can manage, via a task identifier, an operation task indicated by the task identifier. For example, after the operation task is completed, the core network device indicates the access network device to delete a context including the task identifier, to delete the entire context that is of the terminal device and corresponds to the completed operation task. In this way, the management may be performed at a task granularity.

Optionally, the second identifier is an identifier of a first process, the first process is used by the first terminal device in performing a random access procedure, and the first process is related to the access control layer. In other words, the first process may be used by the first terminal device to perform random access, that is, the first terminal device may perform random access in the first process. It may be understood that, when the access network device has a plurality of processes that can be used for random access, the access network device may allocate the first process to the first terminal device; or the first terminal device can independently select a process. For example, the access network device broadcasts identifiers corresponding to a plurality of processes, and the first terminal device selects a process based on the identifiers. In this case, the first process may indicate a unique terminal device, that is, the first terminal device. Therefore, the second identifier may be an identifier of the first process. It may be further understood that the first process may be further used by the first terminal device in performing an operation procedure indicated by the operation instruction, in other words, the first process may be further used by the first terminal device to perform an operation indicated by the operation instruction, that is, the first terminal device may perform the operation in the first process.

Optionally, the second identifier is a random number RN 16. It may be understood that the second identifier may be a tag (that is, a temporary identifier) temporarily used by the terminal device in a random access procedure, and may be represented by the RN 16. A value of the RN 16 may be generated by the first terminal device, or may be configured by a network side, for example, configured by the access network device, or may be predefined in a protocol. This may be specifically flexibly set based on an actual situation, and is not limited. Certainly, the second identifier may alternatively be another type of identifier. This is not limited.

In a possible design solution, the method according to the first aspect further includes: The access network device receives the first random access request, where the first random access request includes the second identifier. The determining the first identifier of the first terminal device includes: The access network device determines the second identifier as the first identifier. That is, the second identifier may be reused as the first identifier. In other words, after receiving the second identifier at the access control layer, the access network device may reuse the second identifier at the access control layer as the first identifier at the first signaling layer. That is, the access network device may assign a value of the second identifier to the first identifier. In this case, the value of the second identifier is the same as that of the first identifier. In this way, the access network device does not need to generate the first identifier, so that processing overheads of the access network device can be reduced.

Optionally, before the access network device receives the first random access request, the method according to the first aspect further includes: The access network device receives an operation task request message from the core network device, where the operation task request message includes a task identifier. The access network device broadcasts a second random access request based on the operation task request message. After the access network device determines the second identifier as the first identifier, the access network device stores a context of the first terminal device, where the context of the first terminal device includes the task identifier and the first identifier. In other words, the access network device may associate the first identifier with the task identifier, that is, there is a correspondence between the first identifier and the task identifier. In this way, the core network device can manage, via a task identifier, an operation task indicated by the task identifier. For example, after the operation task is completed, the core network device indicates the access network device to delete a context including the task identifier, to delete the entire context that is of the terminal device and corresponds to the completed operation task. In this way, the management may be performed at a task granularity.

Further, after the access network device stores the context of the first terminal device, the method according to the first aspect further includes: The access network device receives the task identifier and second indication information from the core network device, where the second indication information indicates the access network device to delete the context including the task identifier. The access network device deletes the context of the first terminal device based on the task identifier and the second indication information. It may be understood that, after determining that the operation task indicated by the task identifier is completed, the core network device may indicate the access network device to delete the context including the task identifier. In this way, an entire context of each terminal device corresponding to an operation task can be deleted. That is, the core network device does not need to send, to the access network device, a plurality of pieces of indication information for deleting the context of the terminal device, so that communication overheads of the core network device can be reduced.

Optionally, the second identifier is an identifier of a first process, the first process is used by the first terminal device in performing a random access procedure, and the first process is related to the access control layer.

Optionally, the second identifier is a random number RN 16.

In a possible design solution, before the access network device sends the first identifier and the identifier of the first terminal device to the core network device, the method according to the first aspect further includes: The first terminal device performs a random access procedure through the first process. In other words, the first terminal device may perform the random access procedure in the first process. It may be understood that the first process may be further used by the first terminal device in performing an operation procedure indicated by the operation instruction, in other words, the first process may be further used by the first terminal device to perform an operation indicated by the operation instruction, that is, the first terminal device may perform the operation in the first process. In addition, when the access network device has a plurality of processes that can be used for random access, the access network device may allocate the first process to the first terminal device; or the first terminal device may select a process. For example, the access network device broadcasts identifiers corresponding to a plurality of processes, and the first terminal device selects a process based on the identifiers.

Optionally, that the first terminal device performs the random access procedure through the first process includes: The access network device broadcasts a second random access request, where the second random access request includes an identifier of the first process, the first process is used by the terminal device in performing the random access procedure, and the first process is related to the access control layer. The access network device receives a first random access request, where the first random access request includes the identifier of the first process. The access network device sends an acknowledgment message to the first terminal device based on the first random access request, where the acknowledgment message includes the identifier of the first process. The access network device receives the identifier of the first terminal device from the first terminal device. In this way, the first terminal device can implement the random access through the first process.

Further, before the first terminal device completes the random access, the method according to the first aspect further includes: The access network device broadcasts a third random access request, where the third random access request includes an identifier of a second process, the second process is used by the terminal device in performing a random access procedure, and the second process is related to the access control layer. It may be understood that the second process is different from the first process, and the access network device may broadcast the third random access request after the access network device broadcasts the second random access request. In other words, the access network device does not need to trigger random access of a next terminal device only after the first terminal device completes the random access. That is, the access network device may trigger the random access of the next terminal device during the random access of the first terminal device, for example, within a time period of waiting for the first terminal device to feed back information, so that slot utilization of the access network device can be improved.

In a possible design solution, the operation request message may further include a third identifier that is of the first terminal device and determined by the core network device. The third identifier may indicate the first terminal device at the first signaling layer, and the third identifier may identify the first terminal device between the access network device and the core network device. In addition, the third identifier may be determined based on the identifier of the first terminal device, or may be determined based on the first identifier. In other words, the third identifier may be allocated based on the identifier of the first terminal device, or the third identifier may be allocated based on the first identifier.

In a possible design solution, after the access network device sends the operation instruction and the second identifier to the first terminal device, the method according to the first aspect further includes: The access network device receives an operation result from the first terminal device, where the operation result is a result of executing the operation instruction by the first terminal device. The access network device sends the operation result and the first identifier to the core network device. In other words, the access network device may send, to the core network device, the result of the first terminal device performing the operation indicated by the operation instruction. It may be understood that the core network device may send the operation result to a service requester (for example, a server), so that the service requester adjusts a service based on the operation result.

In a possible design solution, the core network device is an AMF or a TMF (or a passive IoT device management function AIoTMF). This may be specifically flexibly set based on an actual situation, and is not limited.

In a possible design solution, the first signaling layer is a next generation application protocol NGAP layer.

In a possible design solution, the second signaling layer is a non-access stratum NAS.

According to a second aspect, a communication method is provided. The method may be performed by a core network device, or may be performed by a component in the core network device, for example, a processor, a chip, or a chip system in the core network device, or may be implemented by a logical module or software that can implement all or some functions of the core network device. The following provides descriptions by using an example in which the method is performed by the core network device. The method includes: The core network device receives a first identifier and an identifier of a first terminal device from an access network device, where the first identifier indicates the first terminal device at a first signaling layer, and the identifier of the first terminal device indicates the first terminal device at a second signaling layer. The core network device determines an operation on the first terminal device based on the identifier of the first terminal device. The core network device sends an operation request message to the access network device, where the operation request message includes the first identifier and an operation instruction.

In a possible design solution, the operation request message further includes first indication information, and the first indication information indicates the access network device to delete the context of the first terminal device after the access network device completes an operation on the first terminal device.

In a possible design solution, the operation request message may further include a third identifier that is of the first terminal device and determined by the core network device.

In a possible design solution, before the core network device receives the first identifier and the identifier of the first terminal device from the access network device, the method according to the second aspect further includes: The core network device sends an operation task request message to the access network device, where the operation task request message includes a task identifier. After determining that an operation task indicated by the task identifier is completed, the core network device sends the task identifier and second indication information to the access network device, where the second indication information indicates the access network device to delete a context including the task identifier.

In a possible design solution, the operation on the first terminal device is an ambient IoT operation, for example, an inventory operation, a write operation, a read operation, an invalidation operation, or an information exchange operation. This may be specifically set based on an actual situation, and is not limited.

In a possible design solution, the core network device is an AMF or a TMF (or a passive IoT device management function AIoTMF).

In a possible design solution, the first signaling layer is a next generation application protocol NGAP layer.

In a possible design solution, the second signaling layer is a non-access stratum NAS.

In addition, for technical effects of the method according to the second aspect, refer to the technical effects of the method according to the first aspect. Details are not described herein again.

According to a third aspect, a communication method is provided. The method may be performed by a first terminal device, or may be performed by a component in the first terminal device, for example, a processor, a chip, or a chip system in the first terminal device, or may be implemented by a logical module or software that can implement all or some functions of the first terminal device. The following provides descriptions by using an example in which the method is performed by the first terminal device. The method includes: The first terminal device receives a second random access request from an access network device, where the second random access request includes an identifier of a first process, the first process is used by a terminal device in performing a random access procedure, and the first process is related to an access control layer. The first terminal device sends a first random access request to the access network device based on the second random access request, where the first random access request includes the identifier of the first process. The first terminal device receives an acknowledgment message from the access network device, and sends an identifier of the first terminal device to the access network device based on the acknowledgment message, where the acknowledgment message includes the identifier of the first process, and the identifier of the first terminal device indicates the first terminal device at a second signaling layer.

In a possible design solution, before the first terminal device receives the first random access request from the access network device, the method according to the third aspect further includes: The first terminal device receives a process quantity used for random access. The first terminal device determines, based on the process quantity, to participate in random access corresponding to the first process. It may be understood that the process quantity is a quantity, determined by the access network device, of processes that can be used for the random access, and the quantity is an integer greater than 1.

In addition, for technical effects of the method according to the third aspect, refer to the technical effects of the method according to the first aspect. Details are not described herein again.

According to a fourth aspect, a communication method is provided. The method may be performed by a reader, or may be performed by a component in the reader, for example, a processor, a chip, or a chip system in the reader, or may be implemented by a logical module or software that can implement all or some functions of the reader. In addition, the reader may be a terminal device. The following provides descriptions by using an example in which the method is performed by the reader. The method includes: After receiving a first random access request from a first terminal device, the reader determines a first identifier of the first terminal device, where the first identifier indicates the first terminal device at an access control layer. The reader sends the first identifier and first information to an access network device, where the first information indicates the first terminal device at a first signaling layer. The reader receives a first operation request message from the access network device, where the first operation request message includes the first identifier and an operation instruction, and the operation instruction is determined based on the first information. The reader obtains a second identifier based on the first identifier, and sends the operation instruction and the second identifier to the first terminal device, where the second identifier indicates the first terminal device at a second signaling layer.

It can be learned from the method according to the fourth aspect that, after receiving the random access request from the terminal device, the reader may determine, for the terminal device, the identifier to be used in the access control layer. This enables the reader and the access network device to indicate the terminal device via the identifier, thereby performing an operation on the terminal device. In this way, when the reader needs to perform operations on a plurality of terminal devices, the reader can independently trigger random access of each of the plurality of terminal devices without relying on an indication from the core network element, that is, the reader may determine different identifiers for the plurality of terminal devices that require random access, to distinguish between different terminal devices. In this case, the core network element may perform, during random access of the terminal devices, an operation on a terminal device that has completed the random access, that is, random access of and an operation on a latter terminal device do not need to wait until random access of and an operation on a former terminal device are completed. As a result, the efficiency of performing the operations on the plurality of terminal devices can be improved.

In a possible design solution, the method according to the fourth aspect further includes: The reader receives the first random access request, where the first random access request includes the second identifier. That the reader determines the first identifier of the first terminal device includes: The reader allocates the first identifier to the first terminal device based on the second identifier.

Optionally, the method according to the fourth aspect further includes: The reader stores a correspondence between the first identifier and the second identifier. In this way, the reader can subsequently determine the second identifier based on the first identifier, to send the operation instruction to the first terminal device based on the second identifier.

Optionally, the method according to the fourth aspect further includes: The reader stores a first context of the first terminal device, where the first context includes the first identifier and the second identifier.

Further, the first operation request message further includes first indication information, and the first indication information indicates the reader to delete the first context after the reader completes an operation on the first terminal device.

Further, the first context further includes a task identifier, and before the reader receives the first random access request, the method according to the fourth aspect further includes: The reader receives a first operation task request message from the access network device, where the first operation task request message includes the task identifier. The access network device broadcasts a second random access request based on the first operation task request message.

Further, after the reader stores the first context of the first terminal device, the method according to the fourth aspect further includes: The reader receives the task identifier and third indication information from the access network device, where the third indication information indicates the reader to delete the context including the task identifier. The reader deletes the first context based on the task identifier and the third indication information.

In a possible design solution, the method according to the fourth aspect further includes: The reader receives an operation result from the first terminal device, where the operation result is a result of the first terminal device performing an operation indicated by the operation instruction. The reader sends the operation result and the first identifier to the access network device.

In a possible design solution, the method according to the fourth aspect further includes: The reader receives the first random access request, where the first random access request includes the second identifier. That the reader determines the first identifier of the first terminal device includes: The reader determines the second identifier as the first identifier.

Optionally, before the reader receives the first random access request, the method according to the fourth aspect further includes: The reader receives a first operation task request message from the access network device, where the first operation task request message includes the task identifier. The reader broadcasts a second random access request based on the operation task request message. After the reader determines the second identifier as the first identifier, the reader stores the first context of the first terminal device, where the first context includes the task identifier and the first identifier.

Further, after the reader stores the first context of the first terminal device, the method according to the fourth aspect further includes: The reader receives the task identifier and third indication information from the access network device, where the third indication information indicates the reader to delete the context including the task identifier. The reader deletes the first context based on the task identifier and the third indication information.

In a possible design solution, the access control layer is any one of the following: a media access control MAC layer, a physical PHY layer, a packet data convergence protocol PDCP layer, a radio resource control RRC layer, or a radio link control RLC layer.

In a possible design solution, the first signaling layer is a non-access stratum NAS.

In a possible design solution, the second signaling layer is an access AS layer.

According to a fifth aspect, a communication method is provided. The method may be performed by an access network device, or may be performed by a component in the access network device, for example, a processor, a chip, or a chip system in the access network device, or may be implemented by a logical module or software that can implement all or some functions of the access network device. The following provides descriptions by using an example in which the method is performed by the access network device. The method includes: After receiving a first identifier and first information from a reader, the access network device determines a third identifier, where the first identifier indicates the first terminal device at an access control layer, the first information indicates the first terminal device at a first signaling layer, and the third identifier indicates the first terminal device at a third signaling layer. The access network device sends the third identifier and the first information to a core network element. The access network device receives a second operation request message from the core network element, where the second operation request message is determined based on the first information, and the second operation request message includes the third identifier and an operation instruction. The access network device obtains the first identifier based on the third identifier, and sends a first operation request message to the reader, where the first operation request message includes the operation instruction and the first identifier.

It can be learned from the fifth aspect that, after receiving the first identifier indicating the first terminal device at the access control layer, the access network device may determine, based on the first identifier, the third identifier to be used in the third signaling layer, and send the third identifier to the core network element. This enables the access network device and the core network element to indicate the first terminal device at the third signaling layer via the third identifier. In this way, an operation on the first terminal device is indicated.

In a possible design solution, the method according to the fifth aspect further includes: The access network device receives the first identifier and the first information. That the access network device determines the third identifier includes: The access network device allocates the third identifier to the first terminal device based on the first identifier.

Optionally, the method according to the fifth aspect further includes: The access network device stores a correspondence between the first identifier and the third identifier.

Optionally, the method according to the fifth aspect further includes: The access network device stores a second context of the first terminal device, where the second context includes the first identifier and the third identifier.

Further, the second operation request message further includes second indication information, and the second indication information indicates the access network device to delete the context of the first terminal device after the access network device completes an operation on the first terminal device.

Further, the second context further includes a task identifier, and before the access network device receives the first identifier and the first information, the method according to the fifth aspect further includes: The access network device receives a second operation task request message from the core network element, where the second operation task request message includes the task identifier. The access network device sends a first operation task request message to the reader based on the second task request message, where the first operation task request message includes the task identifier.

Further, after the access network device stores the second context of the first terminal device, the method according to the fifth aspect further includes: The access network device receives the task identifier and fourth indication information from the core network element, where the fourth indication information indicates the access network device to delete the context including the task identifier. The access network device deletes the second context based on the task identifier and the fourth indication information.

In a possible design solution, the method according to the fifth aspect further includes: The access network device receives an operation result from the reader, where the operation result is a result of the first terminal device performing an operation indicated by the operation instruction. The access network device sends the operation result and the third identifier to the core network element.

In a possible design solution, the method according to the fifth aspect further includes: The access network device receives the first identifier and the first information. That the access network device determines the third identifier includes: The access network device determines the first identifier as the third identifier.

Optionally, before the access network device receives the first identifier and the first information, the method according to the fifth aspect further includes: The access network device receives a second operation task request message from the core network element, where the second operation task request message includes the task identifier. The access network device sends a first operation task request message to the reader based on the second task request message, where the first operation task request message includes the task identifier. After the access network device determines the first identifier as the third identifier, the access network device stores the second context of the first terminal device, where the second context includes the task identifier and the third identifier.

Further, after the access network device stores the second context of the first terminal device, the method according to the fifth aspect further includes: The access network device receives the task identifier and fourth indication information from the core network element, where the fourth indication information indicates the access network device to delete the context including the task identifier. The access network device deletes the second context based on the task identifier and the fourth indication information.

In a possible design solution, the access control layer is any one of the following: a media access control MAC layer, a physical PHY layer, a packet data convergence protocol PDCP layer, an access control RRC layer, or a radio link control RLC layer.

In a possible design solution, the first signaling layer is a non-access stratum NAS.

In a possible design solution, the third signaling layer is a next generation application protocol NGAP layer.

In a possible design solution, the core network element is any one of the following: an access and mobility management function or a passive IoT device management function.

In addition, for technical effects of the method according to the fifth aspect, refer to the technical effects of the method according to the fourth aspect. Details are not described herein again.

According to a sixth aspect, a communication method is provided. The method may be performed by a core network element, or may be performed by a component in the core network element, for example, a processor, a chip, or a chip system in the core network element, or may be implemented by a logical module or software that can implement all or some functions of the core network element. In addition, the core network element may be an AMF or a TMF (AIoTMF). The following provides descriptions by using an example in which the method is performed by the core network element. The method includes: The core network element receives a third identifier and first information from an access network device, where the third identifier indicates a first terminal device at a third signaling layer, and the first information indicates the first terminal device at a first signaling layer. The core network element determines an operation on the first terminal device based on the first information, and sends a second operation request message to the access network device, where the second operation request message includes the third identifier and an operation instruction.

In a possible design solution, the second operation request message further includes second indication information, and the second indication information indicates the access network device to delete a context of the first terminal device after the access network device completes an operation on the first terminal device.

In a possible design solution, the method according to the sixth aspect further includes: The core network element stores a correspondence between an identifier of a reader and the third identifier, where the reader is configured to serve the first terminal device.

In a possible design solution, before the core network element receives the third identifier and the first information from the access network device, the method according to the sixth aspect further includes: The core network element sends a second operation task request message to the access network device, where the second operation task request message includes a task identifier. After determining that an operation task indicated by the task identifier is completed, the core network element sends the task identifier and fourth indication information to the access network device, where the fourth indication information indicates the access network device to delete a context including the task identifier.

In a possible design solution, the core network element is any one of the following: an access and mobility management function or a passive IoT device management function.

In a possible design solution, the third signaling layer is a next generation application protocol NGAP layer.

In a possible design solution, the first signaling layer is a non-access stratum NAS.

In addition, for technical effects of the method according to the sixth aspect, refer to the technical effects of the method according to the fifth aspect. Details are not described herein again.

According to a seventh aspect, a communication method is provided. The method includes: An access network device performs the method according to the first aspect, and a core network device performs the method according to the second aspect; or an access network device performs the method according to the first aspect, a core network device performs the method according to the second aspect, and a first terminal device performs the method according to the third aspect.

In addition, for technical effects of the method according to the seventh aspect, refer to the technical effects of the methods according to the first aspect and the second aspect or the technical effects of the methods according to the first aspect to the third aspect. Details are not described herein again.

According to an eighth aspect, a communication method is provided. The method includes: An access network device performs the method according to the fifth aspect, and a core network element performs the method according to the sixth aspect; or a reader performs the method according to the fourth aspect, an access network device performs the method according to the fifth aspect, and a core network element performs the method according to the sixth aspect.

In addition, for technical effects of the method according to the eighth aspect, refer to the technical effects of the methods according to the fifth aspect and the sixth aspect or the technical effects of the methods according to the fourth aspect to the sixth aspect. Details are not described herein again.

According to a ninth aspect, a communication apparatus is provided. The communication apparatus includes modules configured to perform the method according to any one of the first aspect to the sixth aspect, for example, a transceiver module and a processing module. For example, the transceiver module is configured to indicate receiving and sending functions of the communication apparatus, and the processing module is configured to perform a function of the communication apparatus other than the receiving and sending functions.

Optionally, the transceiver module may include a sending module and a receiving module. The sending module is configured to implement the sending function of the communication apparatus according to the ninth aspect, and the receiving module is configured to implement the receiving function of the communication apparatus according to the ninth aspect.

Optionally, the communication apparatus according to the ninth aspect may further include a storage module. The storage module stores a program or instructions. When the processing module executes the program or the instructions, the communication apparatus may be caused to perform the method according to any one of the first aspect to the sixth aspect.

It may be understood that the communication apparatus according to the ninth aspect may be a terminal device or a network device, or may be a chip (system) or another component or assembly that may be disposed in the terminal device or the network device, or may be an apparatus including the terminal device or the network device. This is not limited in this application.

In addition, for technical effects of the communication apparatus according to the ninth aspect, refer to the technical effects of the method according to any one of the implementations of the first aspect to the sixth aspect. Details are not described herein again.

According to a tenth aspect, a communication apparatus is provided. The communication apparatus includes a processor, and the processor is configured to execute computer instructions, to cause the communication apparatus to perform the method according to any one of the possible implementations of the first aspect to the sixth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible design solution, the communication apparatus according to the tenth aspect may further include a memory. The memory and the processor may be integrated together, or may be disposed separately. The memory may be configured to store a computer program and/or data related to the method according to any one of the first aspect to the sixth aspect.

In this embodiment of this application, the communication apparatus according to the tenth aspect may be the terminal device or the network device according to any one of the first aspect to the sixth aspect, or a chip (system) or another component or assembly that may be disposed in the terminal device or the network device, or an apparatus including the terminal device or the network device.

In addition, for technical effects of the communication apparatus according to the tenth aspect, refer to the technical effects of the method according to any one of the implementations of the first aspect to the sixth aspect. Details are not described herein again.

According to an eleventh aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect to the sixth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this embodiment of this application, the communication apparatus according to the eleventh aspect may be the terminal device or the network device according to any one of the first aspect to the sixth aspect, or a chip (system) or another component or assembly that may be disposed in the terminal device or the network device, or an apparatus including the terminal device or the network device.

In addition, for technical effects of the communication apparatus according to the eleventh aspect, refer to the technical effects of the method in any one of the implementations of the first aspect to the sixth aspect. Details are not described herein again.

According to a twelfth aspect, a communication apparatus is provided, including: a processor and a memory. The memory is configured to store a computer program, and the processor is configured to execute the computer program, to cause the communication apparatus to perform the method according to any one of the implementations of the first aspect to the sixth aspect.

In a possible design solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this embodiment of this application, the communication apparatus according to the twelfth aspect may be the terminal device or the network device according to any one of the first aspect to the sixth aspect, or a chip (system) or another component or assembly that may be disposed in the terminal device or the network device, or an apparatus including the terminal device or the network device.

In addition, for technical effects of the communication apparatus according to the twelfth aspect, refer to the technical effects of the method according to any one of the implementations of the first aspect to the sixth aspect. Details are not described herein again.

According to a thirteenth aspect, a communication apparatus is provided, configured to implement the method according to any one of the possible implementations of the first aspect to the sixth aspect.

According to a fourteenth aspect, a communication chip is provided, including: a logic circuit and a communication interface. The logic circuit is configured to execute computer instructions, the communication interface is used by the communication chip to communicate with another apparatus or chip, and when the logic circuit executes the computer instructions, the method according to any one of the implementations of the first aspect to the sixth aspect is implemented.

According to a fifteenth aspect, a communication system is provided. The communication system includes at least one of the following: an access network device configured to perform the method according to the first aspect, a core network device configured to perform the method according to the second aspect, or a first terminal device configured to perform the method according to the third aspect.

According to a sixteenth aspect, a communication system is provided. The communication system includes at least one of the following: a reader configured to perform the method according to the fourth aspect, an access network device configured to perform the method according to the fifth aspect, or a core network element configured to perform the method according to the sixth aspect.

According to a seventeenth aspect, a computer-readable storage medium is provided, including a computer program or instructions. When the computer program or the instructions are executed on a computer, the computer is caused to perform the method according to any one of the possible implementations of the first aspect to the sixth aspect.

According to an eighteenth aspect, a computer program product is provided, including a computer program or instructions. When the computer program or the instructions are executed on a computer, the computer is caused to perform the method according to any one of the possible implementations of the first aspect to the sixth aspect.

### BRIEF DESCRIPTION OF DRAWINGS

FIG. 1 is a diagram of an architecture of a 5th generation mobile communication system 5GS according to an embodiment of this application;
FIG. 2 is a diagram of an ambient internet of things A-IoT service flow according to an embodiment of this application;
FIG. 3a and FIG. 3b are a schematic flowchart of an A-IoT device operation procedure according to an embodiment of this application;
FIG. 4 is a diagram 1 of an architecture of a communication system according to an embodiment of this application;
FIG. 5 is a schematic flowchart 1 of a communication method according to an embodiment of this application;
FIG. 6 is a diagram of performing random access through a plurality of processes according to an embodiment of this application;
FIG. 7a and FIG. 7b are a schematic flowchart 2 of a communication method according to an embodiment of this application;
FIG. 8a and FIG. 8b are a schematic flowchart 3 of a communication method according to an embodiment of this application;
FIG. 9a and FIG. 9b are a schematic flowchart 4 of a communication method according to an embodiment of this application;
FIG. 10 is a diagram 2 of an architecture of a communication system according to an embodiment of this application;
FIG. 11 is a diagram of a protocol stack according to an embodiment of this application;
FIG. 12 is a schematic flowchart 5 of a communication method according to an embodiment of this application;
FIG. 13a to FIG. 13c are a schematic flowchart 6 of a communication method according to an embodiment of this application;
FIG. 14a to FIG. 14c are a schematic flowchart 7 of a communication method according to an embodiment of this application;
FIG. 15a to FIG. 15c are a schematic flowchart 8 of a communication method according to an embodiment of this application;
FIG. 16a to FIG. 16c are a schematic flowchart 9 of a communication method according to an embodiment of this application;
FIG. 17 is a diagram 1 of a structure of a communication apparatus according to an embodiment of this application; and
FIG. 18 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system (5G system (5G system, 5GS))

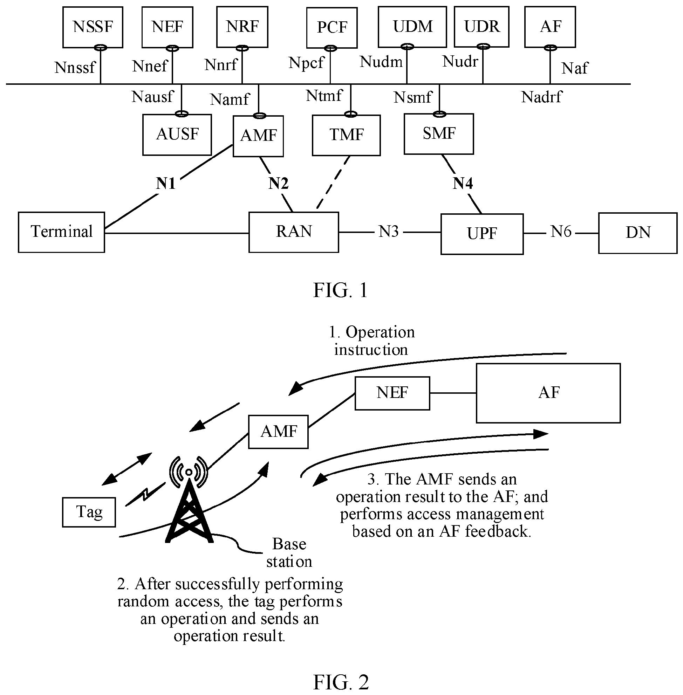

FIG. 1 is a diagram of an architecture of a 5GS. As shown in FIG. 1, the 5GS includes an access network (access network, AN) and a core network (core network, CN), and may further include a terminal device.

The terminal device may be a terminal device having a transceiver function, or a chip or a chip system that may be disposed in the terminal device. The terminal device may also be referred to as user equipment (user equipment, UE), a terminal, an access terminal, a subscriber unit (subscriber unit), a subscriber station, a mobile station (mobile station, MS), a remote station, a remote terminal, a mobile device, a user terminal, a wireless communication device, a device (device), a user agent, or a user apparatus. The terminal device in embodiments of this application may be a cellular phone, a wireless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN) or a non-terrestrial network (non-terrestrial network, NTN), or the like; may be a terminal device like an end device, a logical entity, an intelligent device, for example, a mobile phone, or an intelligent terminal, or a communication device like a server, a gateway, a base station, or a controller, or an internet of things (internet of things, IoT) device like a passive IoT device, an active IoT device, a semi-active IoT device, a sensor, an electricity meter, or a water meter; may be an uncrewed aerial vehicle (unmanned aerial vehicle or uncrewed aerial vehicle, UAV) having a communication function; or may be an ambient internet of things (ambient internet of things, AIoT) device. When the terminal is the passive IoT device, the terminal may obtain energy to receive or send data. Energy may be harvested by radio or obtained as solar energy, light energy, wind energy, water energy, heat energy, kinetic energy, and the like. A manner in which a passive or semi-active terminal obtains energy is not limited in this application. It should be understood that the passive IoT device in this application may be in a passive IoT device form, or may be in any terminal form.

The foregoing AN is for implementing an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, which may also be referred to as a radio access network (radio access network, RAN) device. The CN is mainly responsible for maintaining subscription data of a mobile network, and provides session management, mobility management, policy management, security authentication, and another function for the terminal device. The CN mainly includes a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), an application function (application function, AF), and a TMF.

As shown in FIG. 1, UE accesses a 5G network via a RAN device, and the UE communicates with the AMF through an N1 interface (N1 for short); the RAN communicates with the AMF through an N2 interface (N2 for short); the RAN communicates with the UPF through an N3 interface (N3 for short); and the SMF communicates with the UPF through an N4 interface (N4 for short), and the UPF accesses a data network (data network, DN) through an N6 interface (N6 for short). In addition, control plane functions such as the AUSF, the AMF, the SMF, the NSSF, the NEF, the NRF, the PCF, the UDM, the UDR, the AF, the NWDAF and the ADRF shown in FIG. 1 interact with each other through service-based interfaces. For example, a service-based interface provided by the AUSF externally includes Nausf; a service-based interface provided by the AMF externally includes Namf; a service-based interface provided by the SMF externally includes Nsmf; a service-based interface provided by the NSSF externally includes Nnssf; a service-based interface provided by the NEF externally includes Nnef; a service-based interface provided by the NRF externally includes Nnrf; a service-based interface provided by the PCF externally includes Npcf; a service-based interface provided by the UDM externally includes Nudm; a service-based interface provided by the UDR externally includes Nudr; a service-based interface provided by the AF externally includes Naf; and a service-based interface provided by the TMF externally includes Ntmf.

The RAN device may be a device that provides access for the terminal device. For example, the RAN device may include an access network device in a next generation mobile communication system like 6G, for example, a 6G base station. Alternatively, in the next generation mobile communication system, the network device may be named in another manner, which falls within the protection scope of this embodiment of this application. This is not limited in this application. Alternatively, the RAN device may further include a gNB in 5G, for example, a new radio (new radio, NR) system, or one or a group (including a plurality of antenna panels) of antenna panels of a base station in 5G, or may be a network node that forms a gNB, a transmission point (transmission reception point, TRP, or transmission point, TP), or a transmission measurement function (transmission measurement function, TMF), for example, a baseband unit (building base band unit, BBU), a central unit (central unit, CU) or a distributed unit (distributed unit, DU), an RSU having a base station function, a wired access gateway, or a 5G core network. Alternatively, the RAN device may further include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The UPF is mainly responsible for user data handling (forwarding, receiving, charging, and the like).

The AUSF is mainly configured to perform security authentication on the terminal device.

The AMF is mainly used for mobility management in a mobile network, for example, user location update, registration of a user with a network, and user handover.

The SMF is mainly used for session management in the mobile network, such as session setup, modification, and release. Specific functions are, for example, allocation of an internet protocol (internet protocol, IP) address to a user, and selection of a UPF that provides a data packet forwarding function.

The PCF mainly supports providing a unified policy framework to control a network behavior, and providing a policy rule for a control layer network function, and is responsible for obtaining user subscription information related to policy decisions. The PCF may provide the AMF and the SMF with policies, for example, a quality of service (quality of service, QoS) policy and a slice selection policy.

The NSSF is mainly configured to select a network slice for the terminal device.

The NEF is mainly configured to support capability and event exposure. For example, the NEF may expose some capabilities of the 5G network to a third-party application through an application programming interface (application programming interface, API), and the third-party application obtains some capabilities of the 5G network by using the AF by invoking the API provided by the NEF, so that the third-party application can control some behaviors of the 5G network and the terminal device.

The UDM is mainly configured to store user data, for example, subscription data and authentication/authorization data.

The UDR is mainly configured to store structured data. Stored content includes subscription data, policy data, structured data for exposure, and application-related data.

The AF mainly supports interaction with the CN to provide a service, for example, affecting a data routing decision-making and a policy control function, or providing some third-party services for a network side.

The TMF is mainly configured to perform transmission of service data of the terminal device, and/or is configured to perform terminal device management. For example, when the terminal device is a passive IoT device (an A-IoT device), the TMF may perform transmission and/or management of service data of the passive IoT device. It may be understood that the TMF may also be referred to as an ambient internet of things management function (ambient internet of things management function, AIoTMF) or another name. This is not limited.

### 2. A-IoT

The A-IoT may also be referred to as a passive internet of things (Passive IoT, P-IoT) or another name. In the A-IoT, some network nodes may be passive (passive), semi-passive (semi-passive), or active (active). Alternatively, some network nodes may be DT, or DO-DTT, or DO-A. It may be understood that the passive network node may be powered by energy harvesting from solar energy, radio frequency energy, wind energy, water energy, tidal energy, or the like. An energy obtaining manner is not limited. These nodes are not equipped with or do not depend on power supply devices such as batteries, but obtain energy from the environment, to support data sensing, transmission, and distributed computing. In addition, these nodes may further store the obtained energy.

The A-IoT may include an IoT terminal, a reader (reader), an IoT function, and a service requester.

The IoT terminal may also be referred to as a passive terminal. In addition, the IoT terminal may be in a passive IoT device form, a tag form, or a sensor form, or may be in any other terminal form. This is not limited.

The reader may be an access network device, such as a base station, a pole site, a micro base station, a macro base station, a relay point (such as an integrated access and backhaul node), or a mobile base station; or may be a terminal device, for example, a mobile phone, an IoT device, or a handheld reader. For details, refer to the foregoing related descriptions in "1. 5GS." Details are not described herein again. The reader may also be referred to as a reading device. The reader may perform contactless bidirectional data communication in a wireless radio frequency manner, and read from/write to an electronic passive IoT device or a radio frequency card (tag) in a wireless radio frequency manner, to identify targets and exchange data. For details, refer to conventional technologies. Details are not described herein. There are two working modes for the reader. One is that when entering an effective identification range of the reader, the tag receives a radio frequency signal sent by the reader, and sends, through energy obtained from an induced current, information stored in a chip (corresponding to a passive tag). The other is that the tag may store a part of electric energy from solar energy or the like and therefore can actively send signals of a specific frequency (which may also be referred to as a semi-passive tag or a semi-active tag), and the reader receives and decodes information, and then sends decoded information to a central information system for related data processing.

The IoT function may also be referred to as a passive IoT (network) management function, an ambient IoT function, or another name, and may be configured to: manage an IoT terminal or perform transmission of service data. The IoT function may be at least one network element in a core network, for example, the foregoing AMF or TMF. It may be understood that the AMF and the TMF may be co-deployed. When the AMF and the TMF are co-deployed, the TMF may be a function of the AMF.

The service requester may also be referred to as a service operation party or a third party, and may be a server (for example, an AF, an application server (application server, AS), a passive internet of things application function (P-IoT AF or A-IoT AF)), an application function, or another device that can send an operation instruction. In addition, the operation requester may correspond to a specific type of users, and the specific type of users may include enterprises, tenants, third parties, or companies. This is not limited. That the operation requester corresponds to the specific type of users may be understood as that the operation requester belongs to this type of users, that is, managed by this type of users.

When performing an operation on the IoT terminal, the service requester may send an operation instruction by using an IoT function. The operation instruction may include an operation of obtaining information about the IoT terminal, an inventory operation (or referred to as an inventorying operation), a read operation, a write operation, an invalidation operation (disable or kill), an information exchange operation of a passive IoT device, a command (command) operation, and the like. In addition, the operation instruction may further include information such as an area location and an identifier of the IoT terminal, to indicate the IoT terminal device that needs to perform an operation indicated by the operation instruction. For example, the service requester may send an operation instruction to the IoT function, and after receiving the instruction, the IoT function triggers the reader to perform random access of the IoT terminal; and after the random access of the IoT terminal is completed, that is, after the IoT terminal accesses the reader, the IoT function may send the operation instruction to the IoT terminal via the reader, to complete an operation on the IoT device.

For example, as shown in FIG. 2, when an AF (the foregoing service requester) is to perform an operation on a tag (the foregoing IoT terminal), the AF may send an operation instruction to an AMF (the foregoing IoT function) via an NEF. After receiving the operation instruction, the AMF may send the operation instruction to a base station (the foregoing reader). After receiving the operation instruction, the base station may trigger random access of the tag according to the operation instruction. After the random access of the tag is completed, the AMF may send the operation instruction to the tag via the base station, so that the tag completes an operation indicated by the operation instruction. It may be understood that the AMF may alternatively be replaced with a TMF. This may be specifically set based on an actual situation, and is not limited.

### 3. Initial context setup procedure

After UE establishes an RRC connection to a RAN, and the UE registers with the RAN, when the RAN sends an uplink message (for example, a NAS message or another message) to an AMF, the RAN may generate a RAN UE next generation application protocol (next generation application protocol, NGAP) ID of the UE. Subsequently, the AMF may generate an AMF UE NGAP ID of the UE, and may send the AMF UE NGAP ID to the RAN via an initial context request. After receiving the AMF UE NGAP ID, the RAN sends the RAN UE NGAP ID to the AMF. The RAN and the AMF may maintain a correspondence between the RAN UE NGAP ID and the AMF UE NGAP ID.

When the AMF sends an NGAP message to the RAN, the NGAP message may carry the AMF UE NGAP ID, and the RAN may determine, based on the foregoing correspondence, specific UE to which the NGAP message is sent. Correspondingly, when the RAN sends an NGAP message to the AMF, the NGAP message may carry the RAN UE NGAP ID, and the AMF may determine, based on the correspondence, specific UE to which the NGAP message is sent.

It may be understood that an initial context setup message may carry a plurality of information elements (information elements, IEs), for example, a message type, an AMF UE NGAP ID, a RAN UE NGAP ID, and a PDU session ID.

### 4. A-IoT device operation procedure

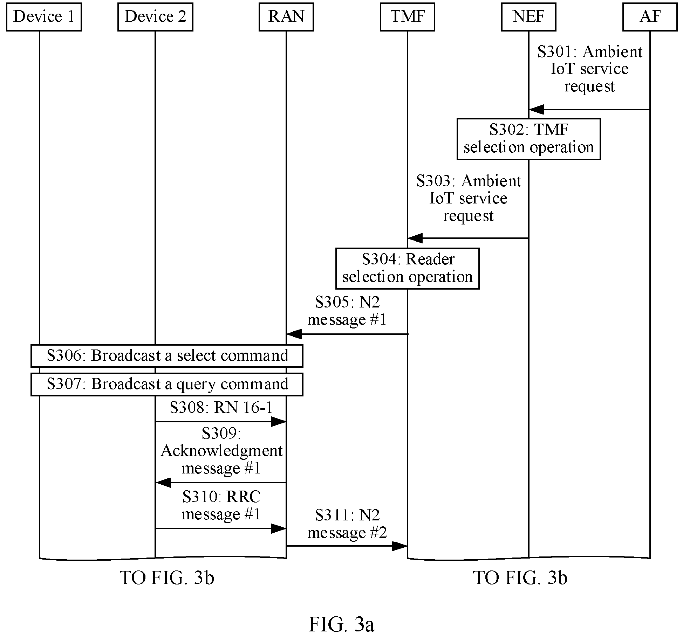

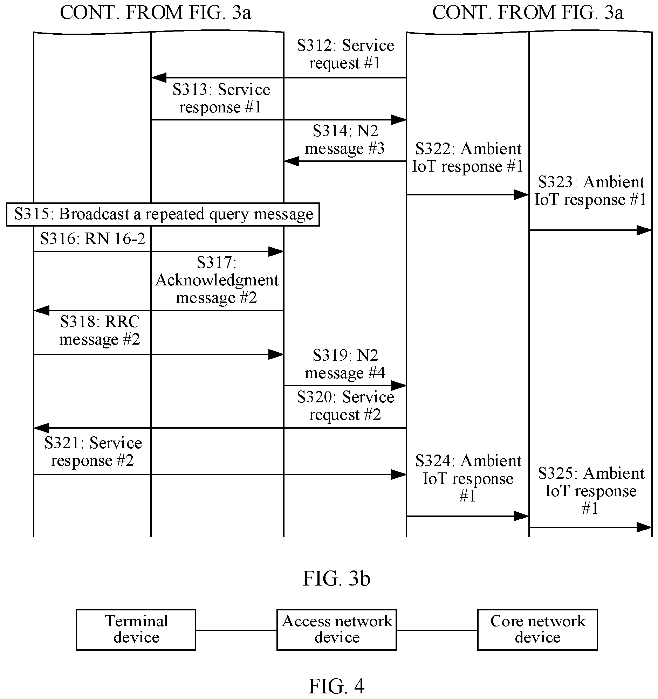

As shown in FIG. 3a and FIG. 3b, when operations are performed on a plurality of devices, after a reader (a RAN in FIG. 3a and FIG. 3b) completes random access of one device, the reader needs to trigger random access of a next device based on an indication of an IoT function (a TMF is used as an example in FIG. 3a and FIG. 3b). In this case, the reader and the IoT function may send, based on an interaction time sequence, an operation instruction to an IoT terminal that completes random access. For example, after an IoT terminal #1 randomly accesses the reader, the IoT function sends an operation instruction to the IoT terminal #1 via the reader. After the IoT terminal #1 completes an operation indicated by the operation instruction, the IoT function indicates the reader to enable random access of a next IoT terminal, and after the random access of the next IoT terminal is completed, the IoT function performs an operation on the IoT terminal, to complete all operations. The following specifically describes an A-IoT tag operation procedure 1.

S301: An AF sends an ambient IoT service request (Nnef_AmbientIoT_service request) to an NEF. Correspondingly, the NEF receives the ambient IoT service request from the AF.

The ambient IoT service request may include at least one of the following: an identifier of a service requester, an operation type, a to-be-operated device identifier (for example, a device list), or a to-be-operated geographical range. The identifier of the service requester may indicate the service requester, and may be an identifier (identity, ID) of the AF, an internet protocol address (internet protocol address, IP) of the AF, a port number of the AF, or the like. The operation type may be a read operation, a write operation, an invalidation operation, or the like. This may be specifically set based on an actual situation, and is not limited. The device identifier may include identifiers of devices on which operations need to be performed, for example, an identifier of a device 1 and an identifier of a device 2. The to-be-operated geographical range may include a geographical range in which a device on which an operation needs to be performed is located, and may be represented by using an identifier such as a TA identifier, a cell identifier, longitude and latitude, a coordinate value, or a CAG identifier. It may be understood that a device on which an operation needs to be performed may be indicated by using the to-be-operated device identifier or the to-be-operated geographical range, and the device on which the operation needs to be performed may be set based on an actual situation. This is not limited. In addition, when the ambient IoT service request includes the read operation and the device list, it may indicate that read operations are performed on devices in the device list, that is, read operations are performed on the device 1 and the device 2 in the device list. S302: The NEF performs a TMF selection operation.

S302: The NEF performs a TMF selection operation.

The NEF selects, based on the ambient IoT service request, a TMF that needs to be used. It may be understood that the TMF can perform operations on the device 1 and the device 2. In other words, the NEF may determine a TMF based on devices on which operations need to be performed, for example, determine a TMF based on the device 1 and the device 2.

S303: The NEF sends an ambient IoT service request to the TMF. Correspondingly, the TMF receives the ambient IoT service request from the NEF.

For the ambient IoT service request, refer to the foregoing related descriptions in "S301". Details are not described herein again.

It may be understood that the AF may provide the ambient IoT service request to the TMF via the NEF, or may provide the ambient IoT service request to the TMF in a subscription manner. This may be specifically set based on an actual situation, and is not limited.

In addition, after receiving the ambient IoT service request, the TMF may perform authentication on an operation corresponding to the ambient IoT service request, to confirm that the service requester can obtain a core network service corresponding to the operation. For example, the TMF may query a UDM/UDR for subscription data, to determine whether there is the corresponding core network service for the operation. After completing the authentication, the TMF may request a reader to trigger a random access procedure for a device in the device list.

S304: The TMF performs a reader selection operation.

The TMF determines, based on the ambient IoT service request, a RAN (that is, a reader) that needs to be used. It may be understood that the RAN can access the device 1 and the device 2. In other words, the TMF may determine, based on devices on which operations need to be performed, a RAN that can randomly access the devices, for example, determine the TMF based on the device 1 and the device 2.

S305: The TMF sends an N2 message (message, Msg) #1 to the RAN. Correspondingly, the RAN receives the N2 message #1 from the TMF.

The N2 message #1 may be used to trigger the RAN to perform random access procedures on devices on which operations need to be performed. The N2 message #1 may include at least one of the following: a random access indication mode 2, masks corresponding to identifiers of the devices on which the operations need to be performed, or a random access indication. The random access indication mode 2 may indicate the reader (that is, the RAN) to broadcast a repeated query (QueryRep) message based on an indication of an IoT function (that is, the TMF) when the reader performs random access of a plurality of devices. The masks corresponding to the identifiers of the devices on which the operations need to be performed may be a mask corresponding to the identifier of the device 1 and a mask corresponding to the identifier of the device 2. The masks may be generated by the TMF, or may be generated by the AF. When the masks are generated by the AF, the AF may send the generated masks to the TMF. The random access indication may trigger random access procedures performed by the reader. An existing paging (Paging) message may be reused as the random access indication, or a new indication information element may be used. This is not limited.

S306: The RAN broadcasts a select (Select) command.

The select command carries device scopes of devices, for example, carries masks, including, for example, electronic product codes (electronic product codes, EPCs) or public land mobile (communication) network (public land mobile network, PLMN) IDs in some specific ranges. The device scopes include devices on which operations need to be performed, that is, the device 1 and the device 2. It may be understood that the device scopes may be the masks corresponding to the identifiers of the devices on which the operations need to be performed.

After detecting the select command, a device determines whether the device is in the device scope in the select command. If the device is in the device scope, after the RAN subsequently broadcasts a query (Query) command, the device feeds back information indicating the device, that is, sends a random access request; or if the device is not in the device scope, the device does not perform any operation after the RAN subsequently broadcasts a query command.

S307: The RAN broadcasts a query command.

The query command may be understood as a random access request or a random access instruction sent by the RAN to each device that requires random access, so that a device that receives the query command feeds back information to the RAN, to perform random access. It may be understood that the device is in the foregoing device scope.

After broadcasting the select command, the RAN may continue to broadcast the query command.

S308: The device 2 sends a random number (random number, RN) 16-1 to the RAN. Correspondingly, the RAN receives the RN 16-1 from the device 2.

When determining that the device 2 is in the device scope in the select command, the device 2 may feed back one RN 16-1 to the RAN in a contention manner. The RN 16-1 may be used by the RAN to identify the device 2. In addition, the RN 16-1 may be generated by the device 2, or may be configured by a network side. This is not limited.

S309: The RAN sends an acknowledgment message #1 to the device 2 based on the RN 16-1 sent by the device 2. Correspondingly, the device 2 receives the acknowledgment message #1 from the RAN.

The acknowledgment message #1 may also be referred to as an ACK command, which may include the RN 16-1 sent by the device 2. In this way, after receiving the acknowledgment message #1, the device 2 may determine, based on the RN 16-1 in the acknowledgment message #1, that the acknowledgment message #1 is a message sent to the device 2, to determine that the RAN receives a random access request sent by the device 2.

S310: The device 2 sends a radio resource control (radio resource control, RRC) message #1 to the RAN based on the acknowledgment message #1. Correspondingly, the RAN receives the RRC message #1 from the device 2.

The RRC message #1 includes the identifier of the device 2. The identifier of the device 2 may be an EPC or other information that can identify the device 2. This is not limited. It may be understood that the RAN cannot determine the identifier of the device 2, that is, the RAN cannot decode information (for example, non-access stratum (non-access stratum, NAS) information in the RRC message #1) including the identifier of the device 2, to obtain the identifier of the device 2.

It may be understood that S306 to S310 are a random access procedure between the device 2 and the RAN, and this procedure is merely an example of an implementation. The random access between the device 2 and the RAN may alternatively be performed in another manner. This is not limited.

S311: The RAN sends an N2 message #2 to the TMF based on the RRC message #1. Correspondingly, the TMF receives the N2 message #2 from the RAN.

The N2 message #2 may represent a case where the device 2 has randomly accessed the RAN, that is, the device 2 is already in the network. The N2 message #2 may include the identifier of the device 2.

It may be understood that the RAN forwards, to the TMF, the information that is in the RRC message #1 and includes the identifier of the device 2. That is, the RAN cannot determine the identifier of the device 2, and the TMF may decode the information including the identifier of the device 2, to obtain the identifier of the device 2. In addition, after receiving the N2 message #2, the TMF may determine that the device 2 has randomly accessed the RAN, and thus perform the operation on the device 2.

S312: The TMF sends a service request #1 to the device 2. Correspondingly, the device 2 receives the service request #1 from the TMF.

The service request may include a read operation and the identifier of the device 2, that is, the service request indicates the device 2 to perform the read operation.

S313: After completing the operation corresponding to the service request #1, the device 2 sends a service response #1 to the TMF. Correspondingly, the TMF receives the service response #1 from the device 2.

The service response #1 includes data (denoted as data #1) stored in a storage area by the device 2. It may be understood that, when the device 2 is indicated to perform different operations, service responses are also different.

S314: The TMF sends an N2 message #3 to the RAN. Correspondingly, the RAN receives the N2 message #3 from the TMF.

The N2 message #3 indicates the RAN to continue to perform random access, that is, indicates the RAN to trigger random access of a next device, that is, indicates the RAN to send a repeated query message.

S315: The RAN broadcasts the repeated query message.

The repeated query message may be understood as that the RAN broadcasts a random access request or a random access instruction, so that after receiving the repeated query message, a device that requires random access feeds back information to the RAN, to perform random access. It may be understood that, in this case, the device that requires the random access does not include a device that has completed random access, for example, the device 2.

S316: The device 1 sends an RN 16-2 to the RAN. Correspondingly, the RAN receives the RN 16-2 from the device 1.

When determining that the device 1 is in the device scope in the select command, the device 1 feeds back one RN 16-2 to the RAN in a contention manner. It may be understood that the RN 16-2 may be generated by the device 1, or may be configured by a network side. This is not limited.

S317: The RAN sends an acknowledgment message #2 to the device 1 based on the RN 16-2 sent by the device 1. Correspondingly, the device 1 receives the acknowledgment message #2 from the RAN.

The acknowledgment message #2 is similar to the foregoing acknowledgment message #1, and may include the RN 16-2 sent by the device 1. In this way, after receiving the acknowledgment message #2, the device 1 may determine, based on the RN 16-2 in the acknowledgment message #2, that the acknowledgment message #2 is a message sent to the device 1, to determine that the RAN receives a random access request sent by the device 1.

S318: The device 1 sends an RRC message #2 to the RAN based on the acknowledgment message #2. Correspondingly, the RAN receives the RRC message #2 from the device 1.

The RRC message #2 is similar to the foregoing RRC message #1, and may include the identifier of the device 1. The identifier of the device 1 may be an EPC or other information that can identify the device 1. This is not limited. It may be understood that the RAN cannot determine the identifier of the device 1, that is, the RAN cannot decode information (for example, NAS information in the RRC message #2) including the identifier of the device 1, to obtain the identifier of the device 1.

S319: The RAN sends an N2 message #4 to the TMF based on the RRC message #2. Correspondingly, the TMF receives the N2 message #4 from the RAN.

The N2 message #4 may represent a case where the device 1 has randomly accessed the RAN, that is, the device 1 is already in the network. The N2 message #4 may include the identifier of the device 1.

It may be understood that the RAN forwards, to the TMF, the information that is in the RRC message #2 and includes the identifier of the device 1. That is, the RAN cannot determine the identifier of the device 1, and the TMF may decode the information including the identifier of the device 1, to obtain the identifier of the device 1. In addition, after receiving the N2 message #4, the TMF may determine that the device 1 has randomly accessed the RAN, and thus perform the operation on the device 1.

S320: The TMF sends a service request #2 to the device 1. Correspondingly, the device 1 receives the service request #2 from the TMF.

The service request may include a read operation and the identifier of the device 1, that is, the service request indicates the device 1 to perform the read operation.

S321: After completing the operation corresponding to the service request #2, the device 1 sends a service response #2 to the TMF. Correspondingly, the TMF receives the service response #2 from the device 1.

The service response #2 includes data (denoted as data #2) stored in a storage area by the device 1. It may be understood that, when the device 2 is indicated to perform different operations, service responses are also different.

S322: After receiving the service response #1, the TMF sends an ambient IoT response (Nnef_ AmbientIoT_service response) #1 to the NEF. Correspondingly, the NEF receives the ambient IoT response #1 from the TMF.

The ambient IoT response #1 indicates an operation result of performing the read operation by the device 2, and may include the identifier of the AF, the identifier of the device 2, and the data #1.

It may be understood that S322 may be performed after S313 or S314, and S322 may be performed simultaneously with the operation (for example, S315 to S318) performed the RAN. This may be specifically flexibly set based on an actual situation, and is not limited.

S323: After receiving the ambient IoT response #1 from the TMF, the NEF sends an ambient IoT response #1 to the AF. Correspondingly, the AF receives the ambient IoT response #1 from the NEF.

S324: After receiving the service response #2, the TMF sends an ambient IoT response #2 to the NEF. Correspondingly, the NEF receives the ambient IoT response #2 from the TMF.

The ambient IoT response #2 indicates an operation result of performing the read operation by the device 1, and may include the identifier of the AF, the identifier of the device 1, and the data #2.

S325: After receiving the ambient IoT response #2 from the TMF, the NEF sends an ambient IoT response #2 to the AF. Correspondingly, the AF receives the ambient IoT response #2 from the NEF.

It may be understood that, when a quantity of devices on which operations need to be performed is greater than 2, for an operation on another device, refer to the operation on the device 1. Details are not described herein again.

It can be learned that, in the procedure shown in FIG. 3a and FIG. 3b, the RAN can trigger random access of a next device, that is, send a repeated query message (that is, S315) only based on an indication of the TMF (that is, S314). In addition, the RAN triggers the random access of the next device only after completing an operation on a device, and performs an operation on the device after the random access of the next device is completed.

However, the foregoing manner suffers from low efficiency. To be specific, random access of each of the plurality of terminal devices and an operation on the terminal device are serial, and random access of and an operation on a latter terminal device are performed only after an operation on a former terminal device is completed. Therefore, how to improve efficiency of performing the operations on the plurality of terminal devices is a key research focus.

For the foregoing technical problem, embodiments of this application provide the following technical solutions, to improve efficiency of performing operations on a plurality of terminal devices.

The following describes technical solutions of this application with reference to the accompanying drawings.

The technical solutions in embodiments of this application may be applied to various communication systems, for example, a 4th generation (4th generation, 4G) mobile communication system like a long term evolution (long term evolution, LTE) system, a 5th generation (5th generation, 5G) mobile communication system like a new radio (new radio, NR) system, and a communication system evolved after 5G, like a 6th generation (6th generation, 6G) mobile communication system, or may be applied to a wireless fidelity (wireless fidelity, Wi-Fi) system, a vehicle-to-everything (vehicle-to-everything, V2X) communication system, a device-to-device (device-to-device, D2D) communication system, an internet of vehicles communication system, and the like.

All aspects, embodiments, or features are presented in this application by describing a system that may include a plurality of devices, assemblies, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" represent giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. Terms "of (of)", "corresponding, relevant (corresponding, relevant)", and "corresponding (corresponding)" may be sometimes interchangeably used. It should be noted that meanings expressed by the terms are matchable when differences of the terms are not emphasized. In addition, "/" mentioned in this application may indicate an "or" relationship.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

For ease of understanding embodiments of this application, a communication system shown in FIG. 4 is first used as an example to describe in detail a communication system applicable to an embodiment of this application. For example, FIG. 4 is a diagram 1 of an architecture of a communication system to which a communication method according to an embodiment of this application is applicable.

As shown in FIG. 4, the communication system, applicable to the foregoing 5GS, includes an access network device, a core network device, and a terminal device.

The access network device may be a device having an access function, which may be a reader. For details, refer to the foregoing related descriptions in "2. A-IoT". Details are not described herein again. It may be understood that when the terminal device is used as a reader, the terminal device may be considered as an access network device. That is, in this case, the terminal device may be configured to access another terminal device, and is connected to the core network device. Certainly, the access network device may alternatively be another device. This is not limited. It may be understood that when the access network device is a reader, the reader may be a terminal device or another device (for example, an access network device). This may be specifically set based on an actual situation, and is not limited. The core network device may be configured to manage a first terminal device, and may be the foregoing IoT function, for example, an AMF or a TMF. For details, refer to the foregoing related descriptions of "2. A-IoT". Details are not described herein again. The terminal device may include at least one terminal device. For a device form of the terminal device, refer to the foregoing related descriptions in "1. 5GS". Details are not described herein again.

It may be understood that, when the core network device is the TMF (AIoTMF), a protocol layer, for example, a protocol layer such as N2 tag management information layer or an AIoT NGAP layer, may be set between the access network device and the TMF, so that the access network device and the TMF can interact with each other. A name of the protocol layer between the access network device and the TMF is not limited in embodiments of this application.

In the communication system, the access network device may determine, for a terminal device on which an operation needs to performed, an identifier to be used in a first signaling layer, and send the identifier to the core network device. This enables the access network device and the core network device to indicate the terminal device at the first signaling layer via the identifier, thereby performing the operation on the terminal device. For example, the access network device may determine, for the terminal device, the first identifier to be used in the first signaling layer, and send the first identifier and an identifier of the terminal device to the core network device; after determining the operation on the terminal device based on the identifier of the terminal device, the core network device sends an operation request message to the access network device; and the access network device may determine a second identifier based on the first identifier included in the operation request message, and send the second identifier and an operation instruction in the operation request message to the terminal device, so that the terminal device can determine, based on the second identifier, that the operation instruction is an instruction sent to the terminal device, and execute the operation instruction. In this way, when the access network device needs to perform operations on a plurality of terminal devices, the access network device can independently trigger random access of each of the plurality of terminal devices, that is, there is no need for the access network device to rely on an indication from the core network device to trigger random access of a terminal device. In this case, the core network device can perform, during random access of the terminal devices, an operation on a terminal device that has completed the random access, that is, random access of and an operation on a latter terminal device do not need to wait until random access of and an operation on a former terminal device are completed. As a result, the efficiency of performing the operations on the plurality of terminal devices can be improved.

It may be understood that FIG. 4 is a simplified diagram of an example for ease of understanding. The communication system may further include another network device and/or another terminal device not shown in FIG. 4.

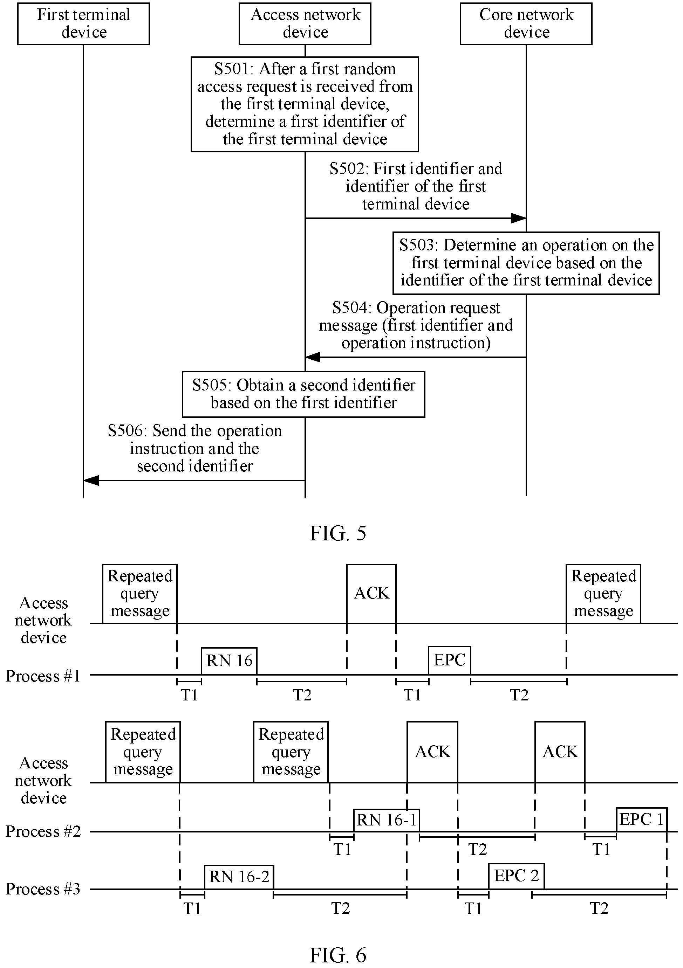

For ease of understanding, the following specifically describes, with reference to FIG. 5, a communication method provided in an embodiment of this application.

For example, FIG. 5 is a schematic flowchart 1 of a communication method according to an embodiment of this application. The method is applicable to interaction between the terminal device, the access network device, and the core network device in the foregoing communication system. For ease of understanding, the following uses a first terminal device as an example to describe the communication method.

As shown in FIG. 5, a procedure of the communication method is as follows.

S501: After receiving a first random access request from the first terminal device, the access network device determines a first identifier of the first terminal device.

The first random access request may be used to request random access to the access network device. In different random access procedures, the first random access request may vary. For example, after the access network device broadcasts a second random access request, the first random access request may be a message used to request to access the access network device and sent by the first terminal device to the access network device based on the second random access request. The second random access request may indicate the terminal device that needs to randomly access the access network device to send, to the access network device, a message for requesting to access the access network device. In addition, the second random access request may be a paging message, or may be the query command in the foregoing "4. A-IoT device operation procedure". For details, refer to the foregoing related descriptions. Details are not described herein again. It may be understood that this embodiment of this application may be used in different random access procedures. Specifically, the first random access request may be determined based on an actual situation. In addition, the "first random access request" and the "second random access request" in this embodiment of this application are merely example expressions, and both may be replaced with any possible expression. This is not limited in embodiments of this application.

"After the access network device receives the first random access request" may be understood as "after the access network device receives the first random access request and before the first terminal device registers with the access network device (or a network)". In other words, a corresponding time period after the access network device receives the first random access request may be understood as a time period after the access network device receives the first random access request and the first terminal device is not registered with the access network device. That is, the access network device determines the first identifier in the time period. It may be understood that, if the first terminal device needs to register with the access network device, after the first terminal device registers with the access network device, the access network device and the core network device perform an initial context setup procedure of the first terminal device. For details, refer to the foregoing related descriptions of the foregoing "3. Initial context setup procedure". Details are not described herein again. After the initial context setup procedure is completed, the access network device and the core network device may maintain a correspondence for an identifier of the first terminal device, so that the access network device and the core network device can determine, based on the identifier in a message and the correspondence, that the message is a message for the first terminal device. That is, in this embodiment of this application, within the corresponding time period after the access network device receives the first random access request from the first terminal device, after the first terminal device registers with the access network device, the access network device and the core network device do not perform the initial context setup procedure that needs to be performed.

"After the access network device receives the first random access request" may also be understood as "when the access network device completes the random access procedure with the first terminal device". For example, for the foregoing "4. A-IoT device operation procedure", the access network device (the foregoing RAN) may determine the first identifier when receiving a message (that is, S310) sent by the first terminal device (the foregoing device 2) and including the identifier of the first terminal device. It may be understood that this is merely an example. In different random access procedures, a time point at which the access network device completes the random access procedure with the first terminal device may be correspondingly determined. This is not limited.

"After the access network device receives the first random access request" may also be understood as "in a process of performing the random access procedure". For example, for the foregoing "4. A-IoT device operation procedure", the first identifier may be determined when the access network device (the foregoing RAN) sends an acknowledgment message (that is, S309) to the first terminal device (the foregoing device 2) based on the first random access request. It may be understood that this is merely an example. Different processes for performing the random access procedures may be determined based on different random access procedures. This may be specifically determined based on an actual situation, and is not limited.

The first identifier may indicate the first terminal device at a first signaling layer. The first signaling layer may be a protocol layer between the access network device and the core network device, for example, an NGAP layer or an A-IoT NGAP layer. The "A-IoT NGAP layer" in embodiments of this application is merely an example expression, and may be replaced with any possible expression. This is not limited in embodiments of this application. It may be understood that the first signaling layer may alternatively be another layer. This may be specifically set based on an actual situation, and is not limited. The first identifier may be a temporarily used identifier (namely, a temporary identifier), and the first identifier may have a plurality of formats, for example, a format of the foregoing NGAP ID may be reused. This may be specifically set based on an actual situation, and is not limited. The first identifier may be determined based on information sent by the first terminal device in the random access procedure. For example, the first identifier may be allocated to the first terminal device based on the information. For another example, the information may be determined as the first identifier. The following provides descriptions in different cases.

Case 1: The first identifier is allocated based on the information sent by the first terminal device in the random access procedure.

In this case, before the access network device determines the first identifier of the first terminal device, the communication method may further include: The access network device receives the first random access request, where the first random access request includes the second identifier. Determining the first identifier of the first terminal device may specifically include: The access network device allocates the first identifier to the first terminal device based on the second identifier.

The second identifier may indicate the first terminal device at an access control layer. It may be understood that the second identifier may identify the first terminal device between the access network device and the first terminal device, that is, the access network device may identify that a terminal device indicated by the second identifier is the first terminal device. The second identifier may be a temporarily used identifier (namely, a temporary identifier), for example, an RN 16, or may be other information that can represent the first terminal device. It may be understood that the second identifier may be autonomously generated by the first terminal device, or may be configured by a network side, or may be predefined in a protocol. This may be specifically flexibly set based on an actual situation, and is not limited. The access control layer may be a protocol layer between a terminal device (for example, the first terminal device) and the access network device, and may include at least one of the following: a media access control (media access control, MAC) layer, a physical (physical, PHY) layer, a packet data convergence protocol (packet data convergence protocol, PDCP) layer, an RRC layer, or a radio link control (radio link control, RLC) layer. For each protocol layer, refer to conventional technologies. Details are not described herein. It may be understood that the access control layer may alternatively be another layer. This may be specifically set based on an actual situation, and is not limited.

The second identifier may alternatively be an identifier of a first process. The first process may be used by the first terminal device in performing the random access procedure, in other words, the first process may be used by the first terminal device to perform the random access procedure, that is, the first terminal device may perform random access in the first process. In addition, the first process is related to the access control layer, that is, the first process may be a process at the access control layer. In this case, the access network device may have a plurality of processes used for random access, that is, different terminal devices may perform random access through different processes. For example, the access network device determines that there are two processes used for random access, and there are two terminal devices on which operations need to be performed. In this case, the two terminal devices may perform random access through different processes. Alternatively, if there are three terminal devices on which operations need to be performed, one of the three terminal devices may perform random access through one process, and the other two terminal devices may perform random access through the other process. It may be understood that one process corresponds to an operation on one terminal device within one time period, to be specific, when one process is used by one terminal device, the process can be used by another terminal device only after the terminal device completes all operations. That is, a unique terminal device may be determined via an identifier of a process, to be specific, when the first terminal device uses the first process, the first terminal device may be determined via the identifier of the first process. It may be understood that the first process may be further used by the first terminal device in performing an operation procedure corresponding to an operation instruction (described below), in other words, the first process may be further used by the first terminal device to perform an operation indicated by an operation instruction, that is, the first terminal device may perform the operation in the first process.

In Case 1, allocating the first identifier to the first terminal device based on the second identifier may be understood as generating the first identifier based on the second identifier, that is, after receiving the second identifier, the access network device may generate the first identifier based on the second identifier. In this case, the second identifier is different from the first identifier. It may be understood that there is a correspondence between the first identifier and the second identifier. After allocating the first identifier to the first terminal device based on the second identifier, the access network device may maintain the correspondence between the second identifier and the first identifier, so that the access network device subsequently determines the second identifier based on the first identifier, to determine the first terminal device based on the second identifier.

Moreover, in addition to being carried in the first random access request, the second identifier may alternatively be carried in another message sent by the first terminal device in the random access procedure. For example, for the foregoing "4. A-IoT device operation procedure", the second identifier may alternatively be carried in an RRC message (the RRC message #1 in S310) sent by the first terminal device to the access network device based on the acknowledgment message. An operation of carrying the second identifier in the another message is similar to the operation of carrying the second identifier in the first random access request. Reference may be made for understanding, and details are not described herein again.

Case 2: The information sent by the first terminal device in the random access procedure is determined as the first identifier.

In this case, before the access network device determines the first identifier of the first terminal device, the communication method may further include: The access network device receives the first random access request, where the first random access request includes the second identifier. Determining the first identifier of the first terminal device may specifically include: The access network device determines the second identifier as the first identifier.

The second identifier may indicate the first terminal device at the access control layer, and may be the RN 16 or the identifier of the first process. For details, refer to the foregoing related descriptions in "Case 1". Details are not described herein again.

In Case 2, the second identifier may be reused as the first identifier. In other words, after receiving the second identifier at the access control layer, the access network device may reuse the second identifier at the access control layer as the first identifier at the first signaling layer. That is, the access network device may assign a value of the second identifier to the first identifier. In this case, the value of the second identifier is the same as that of the first identifier. In this way, the access network device does not need to generate the first identifier, so that processing overheads of the access network device can be reduced. In addition, after determining the second identifier as the first identifier, the access network device may maintain a correspondence between the second identifier and the first identifier, so that the access network device subsequently determines the second identifier based on the first identifier, to determine the first terminal device based on the second identifier. Alternatively, the access network device may not maintain a correspondence between the second identifier and the first identifier, but when determining the second identifier based on the first identifier in a subsequent operation, assigns a value of the first identifier to the second identifier; or when the first identifier is determined based on the second identifier in a subsequent operation, assigns a value of the second identifier to the first identifier.

It may be understood that, in addition to being carried in the first random access request, the second identifier may alternatively be carried in another message sent by the first terminal device in the random access procedure. For example, for the foregoing "4. A-IoT device operation procedure", the second identifier may alternatively be carried in an RRC message (the RRC message #1 in S310) sent by the first terminal device to the access network device based on the acknowledgment message. In addition, an operation of carrying the second identifier in the another message is similar to the operation of carrying the second identifier in the first random access request. Reference may be made for understanding, and details are not described herein again.

The foregoing content describes manners of determining the first identifier based on the information sent by the first terminal device in the random access procedure. It may be understood that the access network device may alternatively determine the first identifier in another manner. This is not limited. After determining the first identifier in another manner, the access network device may associate the first identifier with the second identifier. In this case, there is a correspondence between the first identifier and the second identifier, and the access network device may maintain the correspondence, so that the access network device subsequently determines the second identifier based on the first identifier, to determine the first terminal device based on the second identifier.

In addition, when a plurality of terminal devices have accessed the network, the access network device may determine the first identifier of the first terminal device after receiving the first random access request from the first terminal device.

S502: The access network device sends the first identifier and the identifier of the first terminal device to the core network device. Correspondingly, the core network device receives the first identifier and the identifier of the first terminal device from the access network device.

For the first identifier, refer to the foregoing related descriptions in "S501". Details are not described herein again.

The identifier of the first terminal device may indicate the first terminal device at a second signaling layer, and is an EPC of the terminal device, or may be other information that can identify the terminal device. This is not limited. The identifier of the first terminal device may be sent by the first terminal device to the access network device. For example, the first terminal device sends the identifier to the access network device in the random access procedure. For example, after receiving the first random access request, the access network device may send the acknowledgment message to the first terminal device. After receiving the acknowledgment message, the first terminal device may send the identifier of the first terminal device to the access network device. For details, refer to the foregoing related descriptions in "4. A-IoT device operation procedure". Details are not described herein again. It may be understood that the access network device cannot determine the identifier of the first terminal device, that is, the access network device cannot decode the identifier of the first terminal device, for example, decode information (for example, special NAS information such as AIoT NAS information) that carries the identifier of the first terminal device, to obtain the identifier of the first terminal device. The foregoing second signaling layer may be a protocol layer between a terminal device (for example, the first terminal device) and the core network device, and may be a NAS layer. It may be understood that the second signaling layer may alternatively be another layer. This may be specifically set based on an actual situation, and is not limited. In addition, the first signaling layer and the second signaling layer may be different.

After determining the first identifier, the access network device may send the first identifier and the identifier of the first terminal device to the core network device, to notify the core network device that the first terminal device has completed the random access, that is, the core network device is in the network. A message in the conventional technologies, for example, an N2 message, or a new message, for example, a message of another interface may be reused as a message used to send the first identifier and the identifier of the first terminal device. This may be specifically set based on an actual situation, and is not limited. It may be understood that the identifier of the first terminal device may be carried in a NAS message (or information), and the NAS message (or information) may be in the message used to send the first identifier and the identifier of the first terminal device. For example, the first identifier is an N2 message, the identifier of the first terminal device is a NAS message, and the NAS message may be carried in the N2 message, that is, the access network device sends an N2 message to the core network device, where the N2 message includes the first identifier and a NAS message, and the NAS message carries the identifier of the first terminal device.

After receiving the first identifier and the identifier of the first terminal device from the access network device, the core network device may store a correspondence between the first identifier and the first terminal device, and may maintain the correspondence. In this way, after subsequently receiving information including the first identifier, the core network device may determine, based on the correspondence and the first identifier, that the information is information for the first terminal device. It may be understood that the core network device may further associate the first identifier, the identifier of the first terminal device, and a task identifier corresponding to an operation task (described below), that is, there is a correspondence between the first identifier, the identifier of the first terminal device, and the task identifier. In this case, the core network device may maintain the correspondence. In addition, when the core network device interacts with a plurality of network devices, the core network device may further associate the first identifier, the identifier of the first terminal device, the task identifier, and an identifier of the access network device, that is, there is a correspondence between the first identifier, the identifier of the first terminal device, the task identifier, and the identifier of the access network device, so that when performing an operation on the first terminal, the core network device may determine, based on the correspondence, an access network device that needs to send an operation instruction.

S503: The core network device determines an operation (denoted as an operation #1) on the first terminal device based on the identifier of the first terminal device.

The operation #1 may be an ambient IoT operation, for example, a write operation, an inventory operation, a read operation, an invalidation operation, or an information exchange operation. This may be specifically set based on an actual situation, and is not limited.

The core network device may determine the operation #1 from stored operations on a plurality of terminal devices based on the identifier of the first terminal device. The stored operations on the plurality of terminal devices may be sent by a service requester (for example, an AF) to the core network device. For example, before performing operations on the plurality of terminal devices, the core network device may receive a service request from the service requester. The service request may include an operation on each of the plurality of terminal devices, for example, the service request may include a read operation, the identifier of the first terminal device, and an identifier of a second terminal device. That is, the service request may be used to request to perform the read operation on the first terminal device and the second terminal device. For details, refer to the foregoing related descriptions in "4. A-IoT device operation procedure". Details are not described herein again. Certainly, the stored operations on the plurality of terminal devices may alternatively be preconfigured or predefined in a protocol. This may be specifically flexibly set based on an actual situation.

S504: The core network device sends an operation request message to the access network device. Correspondingly, the access network device receives the operation request message from the core network device.

The operation request message is determined based on the identifier of the first terminal device. The operation request message may be used to request the terminal device indicated by the first identifier to perform the operation (that is, the foregoing operation #1) indicated by the operation instruction, and may include at least one of the following: the first identifier or the operation instruction. The operation instruction may indicate to perform the foregoing operation #1, that is, the operation instruction may include the operation #1. It may be understood that the "operation request message" and the "operation instruction" in embodiments of this application are merely examples of expressions. The "operation request message" may be replaced with any possible expression, and the "operation instruction" may be replaced with any possible expression. This is not limited in embodiments of this application.

After determining the operation #1, the core network device may send an operation request message to the access network device based on the operation #1 and the correspondence between the identifier of the first terminal device and the first identifier, so that the access network device sends an operation instruction to the first terminal device based on the operation request message. It may be understood that, after receiving the operation request message, the access network device may not obtain content of the operation instruction. That is, in this case, the access network device may not know the foregoing operation #1.

S505: The access network device obtains the second identifier based on the first identifier.

For the second identifier, refer to the foregoing related descriptions in "S501". Details are not described herein again.

After receiving the operation request message, the access network device needs to send the operation instruction in the operation request message to a terminal device (that is, the first terminal device) indicated by the first identifier, so that the terminal device performs the operation indicated by the operation instruction. In this case, the access network device needs to determine an identifier indicating the first terminal device at the access control layer, that is, the access network device needs to determine the identifier based on the first identifier. For example, when there is the correspondence between the first identifier and the second identifier, the access network device may obtain the second identifier through indexing based on the first identifier; or when the first identifier is the same as the second identifier, the access network device may assign the value of the first identifier to the second identifier, to obtain the second identifier.

S506: The access network device sends the operation instruction and the second identifier to the first terminal device. Correspondingly, the first terminal device receives the operation instruction and the second identifier from the access network device.

For the operation instruction, refer to the foregoing related descriptions in "S504". Details are not described herein again. For the second identifier, refer to the foregoing related descriptions in "S501". Details are not described herein again. It may be understood that the operation instruction and the second identifier may be two pieces of parallel information, or the second identifier may be carried in the operation instruction. A specific form may be flexibly set based on an actual situation, and is not limited. In addition, the access network device may not know the operation instruction. In this case, the access network device may transparently transmit the operation instruction to the first terminal device based on the operation request message, for example, send the operation instruction via a NAS message.

The access network device sends a second identifier to the first terminal device, so that the terminal device that receives an operation instruction can determine, based on the second identifier carried in the operation instruction, whether the operation instruction is an instruction sent to the terminal device, thereby ensuring that the operation instruction is sent to the first terminal device. In addition, the access network device sends the operation instruction to the first terminal device, so that the first terminal device can execute the operation instruction, that is, complete the foregoing operation #1. In other words, after receiving the operation instruction from the access network device, the first terminal device may perform an operation indicated by the operation instruction. For example, when the operation instruction is a read operation, the first terminal device may send, to the access network device, data information stored in a storage area of the first terminal device. For another example, when the operation instruction is a write operation, the first terminal device may store, in a storage area of the first terminal device, to-be-written data information in the operation instruction.

In conclusion, in this embodiment of this application, the access network device may determine, for the first terminal device, the first identifier to be used in the first signaling layer, and send the first identifier and the identifier of the first terminal device to the core network device. The core network device may determine, based on the identifier of the first terminal device, the operation instruction that needs to be executed by the first terminal device, and send the operation instruction and the first identifier to the access network device, so that the access network device obtains the second identifier through indexing based on the first identifier, and sends the operation instruction and the second identifier to the first terminal device. In this case, the first terminal device may determine, based on the second identifier, that the operation instruction is the instruction sent to the first terminal device, to perform the operation indicated by the operation instruction. It may be understood that the first terminal device may be any one of terminal devices on which operations need to be performed. That is, the access network device may determine, for a terminal device, an identifier to be used in a first signaling layer. This enables the access network device and the core network device to indicate the terminal device via the identifier, thereby performing an operation on the terminal device. In this way, when the access network device needs to perform operations on a plurality of terminal devices, the access network device can independently trigger random access of each of the plurality of terminal devices, and when a terminal device performs random access, the core network device may perform an operation on the terminal device that has completed the random access. That is, for the plurality of terminal devices on which the operations need to be performed, random access of and an operation on a latter terminal device do not need to wait until random access of and an operation on a former terminal device are completed. This can improve efficiency of performing the operations on the plurality of terminal devices.

Optionally, with reference to the foregoing embodiment, after the first terminal device completes the operation instruction, the communication method may further include: The first terminal device sends an operation result to the access network device. Correspondingly, the access network device receives the operation result from the first terminal device, where the operation result is a result of executing the operation instruction by the first terminal device. The access network device sends the operation result and the first identifier to the core network device. Correspondingly, the core network device receives the operation result and the first identifier from the access network device. In other words, the access network device may send, to the core network device, the result of the first terminal device performing the operation indicated by the operation instruction. The core network device may send the operation result to the service requester (for example, the AF), so that the service requester adjusts a service based on the operation result.

It may be understood that different operation instructions correspond to different results. For example, when the operation instruction is the read operation, the operation result may be the data information stored in the storage area of the first terminal device; for another example, when the operation instruction is the write operation, the operation result may be that the first terminal device has stored, in the storage area of the first terminal device, the to-be-written data information in the operation instruction.

Optionally, with reference to the foregoing embodiment, for Case 1, after the access network device allocates the first identifier to the first terminal device based on the second identifier, the communication method may further include: The access network device stores a context of the first terminal device, where the context of the first terminal device may include the first identifier and/or the second identifier. It may be understood that the context of the first terminal device may further include the correspondence between the first identifier and the second identifier, and the access network device may maintain the correspondence. That is, in this case, the context of the first terminal device may include at least one of the following: the first identifier, the second identifier, or the correspondence between the first identifier and the second identifier. In this way, after receiving the message carrying the first identifier, the access network device can determine the second identifier based on the context of the first terminal device, for example, the first identifier and the correspondence, to determine the first terminal device based on the second identifier.

Further, the operation request message may further include first indication information, and the first indication information indicates the access network device to delete (release) the context of the first terminal device after the access network device completes an operation on the first terminal device.

After receiving the operation request message, the access network device may delete (or release) the context of the first terminal device after completing the operation on the first terminal device. In different cases, a time point at which the access network device completes the operation on the first terminal device may vary. For example, when the access network device does not need to send, to the core network device, an operation result of executing an operation instruction #a1 by the first terminal device, that the access network device completes an operation on the first terminal device may be understood as that the access network device completes sending the operation instruction #a1 to the first terminal device. Alternatively, when the access network device needs to send, to the core network device, an operation result of executing an operation instruction #a1 by the first terminal device, that the access network device completes an operation on the first terminal device may be understood as that the access network device completes sending, to the core network device, the operation result of executing the operation instruction #a1 by the first terminal device. The operation instruction #a1 may be a last operation instruction sent by the access network device to the first terminal device. The context of the first terminal device may include the first identifier and the second identifier. For details, refer to the foregoing related descriptions in "Case 1". Details are not described herein again. After completing the operation on the first terminal device, the access network device deletes the context of the first terminal device, so that the access network device can release the context of the first terminal device in time, thereby avoiding redundancy and improving storage efficiency.

It may be understood that after completing the operation on the first terminal device, the core network device may delete (or release) the context of the first terminal device. The context of the first terminal device may include at least one of the following: the first identifier, the identifier of the first terminal device, and the identifier of the access network device. For details, refer to the foregoing related descriptions of "S502". Details are not described herein again. In different cases, a time point at which the core network device completes the operation on the first terminal device may vary. Still refer to the foregoing example, when the core network device does not need the access network device to feed back the operation result of executing the operation instruction #a1 by the first terminal device, that the core network device completes the operation on the first terminal device may be understood as that the core network device completes sending the operation instruction #a1 to the access network device. Alternatively, when the core network device needs the access network device to feed back the operation result of executing the operation instruction #a1 by the first terminal device, that the core network device completes the operation on the first terminal device may be understood as that the core network device receives, from the access network device, the operation result of executing the operation instruction #a1 by the first terminal device. After completing the operation on the first terminal device, the core network device deletes the context of the first terminal device, so that the core network device can release the context of the first terminal device in time, thereby avoiding redundancy and improving storage efficiency.

In addition, the access network device may alternatively periodically delete the context of the first terminal device, for example, the access network device deletes the context of the first terminal device each time preset duration elapses. The access network device may alternatively delete the context of the first terminal device based on an indication of a device other than the core network device. The access network device may alternatively autonomously determine whether the operation on the first terminal device is completed, and after determining that the operation on the first terminal device is completed, delete the context of the first terminal device, that is, do not need to delete the context of the first terminal device based on the foregoing first indication information. When the access network device autonomously determines whether the operation on the first terminal device is completed, after determining that the operation on the first terminal device is completed, the access network device may send, to the core network device, information indicating to delete the context of the first terminal device, so that the core network device deletes the context of the first terminal device.

Further, when storing the context of the first terminal device, the access network device may further associate the context of the first terminal device with an operation task. In this case, when storing the context of the first terminal device, the access network device may further store a task identifier (task ID) of the operation task. The task identifier may be preset, predefined in a protocol, or sent by the core network device to the access network device. In addition, the "task identifier" in embodiments of this application is merely an example expression, and the "task identifier" may be replaced with any possible expression, for example, an "event identifier". This is not limited in embodiments of this application. It may be understood that there is a correspondence between the task identifier, the first identifier, and the second identifier, that is, there is a correspondence between the task identifier and the first identifier, and there is a correspondence between the first identifier and the second identifier. In addition, the access network device may maintain the correspondences. It may be understood that, in this case, the context of the first terminal device may include at least one of the following: the first identifier, the second identifier, the task identifier, the correspondence between the first identifier and the second identifier, or the correspondence between the first identifier and the task identifier.

For example, before the access network device receives the first random access request, the communication method may further include: The core network device sends an operation task request message to the access network device. Correspondingly, the access network device receives the operation task request message from the core network device, where the operation task request message includes the task identifier. The access network device broadcasts a second random access request based on the operation task request message, where the context of the first terminal device further includes the task identifier. The operation task request message may be a request sent by the core network device to the access network device for random access of a plurality of terminal devices. For details, refer to the foregoing related descriptions of the N2 message #1 in "S305". Details are not described herein again. In addition, the operation task request message may further indicate the access network device to store a context of a terminal device on which an operation needs to be performed, for example, the foregoing context of the first terminal device. The task identifier may be an identifier of a task corresponding to the operation task request message. It may be understood that the entire operation corresponding to the operation task request message may be used as a task, and the task identifier may be understood as an identifier of the task. In other words, the operation task may include an operation on the first terminal device, or the operation task may include operations on a plurality of terminal devices on which the operations need to be performed. In this way, the core network device can manage, via a task identifier, an operation task indicated by the task identifier. For example, after the operation task is completed, the core network device indicates the access network device to delete a context including the task identifier, to delete the entire context that is of the terminal device and corresponds to the completed operation task. In this way, the management may be performed at a task granularity.

It may be understood that the core network device may obtain the task identifier from the service requester. For example, when the service requester includes an NEF and an AF, the NEF may generate a task identifier based on a service request sent by the AF, to identify, via the task identifier, an operation corresponding to the service request, and send the task identifier to the core network device. The core network device may alternatively generate a task identifier based on an operation task. This is not limited.

In this case, after the access network device stores the context of the first terminal device, the communication method may further include: After determining that the operation task indicated by the task identifier is completed, the core network device sends the task identifier and second indication information to the access network device. Correspondingly, the access network device receives the task identifier and the second indication information from the core network device, where the second indication information indicates the access network device to delete the context including the task identifier. The access network device deletes the context of the first terminal device based on the task identifier and the second indication information.

When determining that an operation result corresponding to each terminal device in an operation task is received, the core network device may determine that the operation task is completed. For example, there are three terminal devices on which operations need to be performed, and after the core network device receives operation results of the three terminal devices, the core network device may determine that the operation task is completed. Alternatively, after sending an operation instruction to each terminal device in an operation task, the core network device may determine that the operation task is completed. For example, there are four terminal devices on which operations need to be performed, and after the core network device sends, to the access network device, operation instructions corresponding to the four terminal devices, the core network device may determine that the operation task is completed. This is not limited. After determining that the operation task is completed, the core network device sends the task identifier and the second indication information to the access network device, so that the access network device can delete contexts that are of a plurality of terminal devices and correspond to the operation task, to manage the entire task.

It may be understood that the core network device may alternatively send the task identifier and the second indication information to the access network device when receiving deletion indication information from the service requester. The deletion indication information indicates to delete the context including the task identifier, and may include the task identifier. The "deletion indication information" in embodiments of this application is merely an example expression, and the "deletion indication information" may be replaced with any possible expression, for example, a "deletion instruction". This is not limited in embodiments of this application.

It may be further understood that after determining that the operation task indicated by the task identifier is completed, the core network device may delete (or release) the context of the first terminal device. The context of the first terminal device may include at least one of the following: the first identifier, the identifier of the first terminal device, the task identifier, and the identifier of the access network device. For details, refer to the foregoing related descriptions of "S502". Details are not described herein again. After completing the operation on the first terminal device, the core network device deletes the context of the first terminal device, so that the core network device can release the context of the first terminal device in time, thereby avoiding redundancy and improving storage efficiency.

In addition, the access network device may alternatively periodically delete the context of the first terminal device, for example, the access network device deletes the context of the first terminal device each time preset duration elapses. The access network device may alternatively delete the context of the first terminal device based on an indication of a device other than the core network device. Alternatively, the access network device may alternatively autonomously determine whether the operation task is completed. After determining that the operation task is completed, the access network device deletes the context corresponding to the operation task, namely, the context including the task identifier, that is, the context of the first terminal device. To be specific, in this case, the access network device does not need to delete the context of the first terminal device based on the second indication information. When the access network device autonomously determines whether the operation is completed, after determining that the operation task is completed, the access network device may send, to the core network device, the information indicating to delete the context corresponding to the operation task, or the information used to delete the context including the task identifier, so that the core network device deletes the context corresponding to the operation task, that is, the context including the task identifier.

Optionally, with reference to the foregoing embodiment, for Case 2, after the access network device determines the second identifier as the first identifier, the access network device may associate the first identifier of the first terminal device with a task. That is, the access network device may store the context of the first terminal device, where the context of the first terminal device may include at least one of the following: the first identifier, the second identifier, or a task identifier of the task. The task identifier may be preset, predefined in a protocol, or sent by the core network device to the access network device. It may be understood that there is a correspondence between the task identifier and the first identifier, and there is a correspondence between the first identifier and the second identifier. The access network device may maintain the two correspondences. In addition, the context of the first terminal device may further include the correspondence between the task identifier and the first identifier, and/or the correspondence between the first identifier and the second identifier.

For example, before the access network device receives the first random access request, the communication method may further include: The core network device sends an operation task request message to the access network device. Correspondingly, the access network device receives the operation task request message from the core network device, where the operation task request message includes the task identifier. The access network device broadcasts a second random access request based on the operation task request message. After the access network device determines the second identifier as the first identifier, the access network device stores a context of the first terminal device, where the context of the first terminal device includes the task identifier and the first identifier. For the operation task request message and the task identifier, refer to the foregoing related descriptions. Details are not described herein again. In this way, the core network device can manage, via a task identifier, an operation task indicated by the task identifier. For example, after the operation task is completed, the core network device indicates the access network device to delete a context including the task identifier, to delete the entire context that is of the terminal device and corresponds to the completed operation task. In this way, the management may be performed at a task granularity.

In this case, after the access network device stores the context of the first terminal device, the communication method may further include: After determining that the operation task indicated by the task identifier is completed, the core network device sends the task identifier and second indication information to the access network device. Correspondingly, the access network device receives the task identifier and the second indication information from the core network device, where the second indication information indicates the access network device to delete (or release) the context including the task identifier. The access network device deletes (releases) the context of the first terminal device based on the task identifier and the second indication information. For details, refer to the foregoing related descriptions. Details are not described herein again.

It may be understood that the core network device may alternatively send the task identifier and the second indication information to the access network device when receiving deletion indication information from the service requester. For the deletion indication information, refer to the foregoing related descriptions. Details are not described herein again.

It may be further understood that after determining that the operation task indicated by the task identifier is completed, the core network device may delete (or release) the context of the first terminal device. The context of the first terminal device may include at least one of the following: the first identifier, the identifier of the first terminal device, the task identifier, and the identifier of the access network device. For details, refer to the foregoing related descriptions. Details are not described herein again.

In addition, the access network device may alternatively periodically delete the context of the first terminal device; the access network device may alternatively delete the context of the first terminal device based on an indication of a device other than the core network device; or the access network device may alternatively autonomously determine whether the operation task is completed, and after determining that the operation task is completed, delete the context corresponding to the operation task. For details, refer to the foregoing related descriptions. Details are not described herein again. When the access network device autonomously determines whether the operation is completed, after determining that the operation task is completed, the access network device may send, to the core network device, the information indicating to delete the context corresponding to the operation task, or the information used to delete the context including the task identifier, so that the core network device deletes the context corresponding to the operation task, that is, the context including the task identifier.

Optionally, with reference to the foregoing embodiment, before the access network device receives the first random access request from the first terminal device, the communication method may further include: The core network device sends third indication information to the access network device. Correspondingly, the access network device receives the third indication information from the core network device, where the third indication information indicates the access network device to autonomously trigger random access of each of the plurality of terminal devices when the access network device is accessed by the plurality of terminal devices. In other words, the core network device may indicate the access network device to autonomously trigger random access of each of the plurality of terminals, that is, after completing random access of one terminal device, the core network device does not need to wait for an indication from the core network device to trigger random access of a next terminal device. In this way, slot utilization of the access network device can be improved.

Optionally, with reference to the foregoing embodiment, before the access network device sends the first identifier and the identifier of the first terminal device to the core network device, the communication method may further include: The access network device broadcasts a second random access request. Correspondingly, the first terminal device receives the second random access request from the access network device, where the second random access request includes an identifier of a first process, the first process is used by the terminal device in performing a random access procedure, and the first process is related to the access control layer. The first terminal device sends the first random access request to the access network device based on the second random access request. Correspondingly, the access network device receives the first random access request, where the first random access request includes the identifier of the first process. The access network device sends an acknowledgment message to the first terminal device based on the first random access request. Correspondingly, the first terminal device receives the acknowledgment message from the access network device, where the acknowledgment message includes the identifier of the first process. The first terminal device sends the identifier of the first terminal device to the access network device based on the acknowledgment message. Correspondingly, the access network device receives the identifier of the first terminal device from the first terminal device.

For the second random access request, refer to the foregoing related descriptions in "S501". Details are not described herein again. The second random access request includes the identifier of the first process, so that a terminal device (for example, the first terminal device) that determines to perform random access in the first process can send a random access request to the access network device after receiving the second random access request.

The first process may be used by the first terminal device to perform random access, that is, the first terminal device may perform random access in the first process. The first process may be further used by the first terminal device in performing an operation procedure indicated by the operation instruction, in other words, the first process may be further used by the first terminal device to perform an operation indicated by the operation instruction, that is, the first terminal device may perform the operation in the first process. The first process may be one of a plurality of processes determined by the access network device for random access. There are a plurality of relationships between a quantity of the plurality of processes and a quantity of the plurality of terminal devices on which the operations need to be performed. Details are described below.

The quantity of the plurality of processes may be less than the quantity of the plurality of terminal devices. In this case, at least some terminal devices in the plurality of processes use a same process. It may be understood that, when the at least some terminal devices use the same process, an operation on a latter terminal device is started only after an operation on a former terminal device ends. That is, the at least some terminal devices sequentially use the same process. In other words, one terminal device may be determined through one process. For example, there are three processes, namely, a process #b1 to a process #b3, and there are four terminal devices, namely, a terminal device #b1 to a terminal device #b4. In this case, the terminal device #b1 may perform random access through the process #b1, the terminal device #b2 may perform random access through the process #b2, and the terminal device #b3 and the terminal device #b4 may perform random access through the process #b3. For example, the terminal device #b3 first performs random access through the process #b3, and the terminal device #b4 performs random access through the process #b3 only after the random access of and a corresponding operation on the terminal device #b3 are completed.

The quantity of the plurality of processes may be equal to the quantity of the plurality of terminal devices. In this case, the plurality of terminal devices may perform random access through different processes. For example, there are three processes, namely, a process #c1 to a process #c3, and there are three terminal devices, namely, a terminal device #c1 to a terminal device #c3. In this case, the terminal device #c1 may perform random access through the process #c1, the terminal device #c2 may perform random access through the process #c2, and the terminal device #c3 may perform random access through the process #c3.

The quantity of the plurality of processes may be greater than the quantity of the plurality of terminal devices. In this case, the plurality of terminal devices may perform random access through at least some of the plurality of processes, and the plurality of terminal devices may perform random access through different processes. For example, there are six processes, namely, a process #d1 to a process #d6, and there are three terminal devices, namely, a terminal device #d1 to a terminal device #d3. In this case, the terminal device #d1 may perform random access through the process #d1, the terminal device #d2 may perform random access through the process #d3, and the terminal device #d3 may perform random access through the process #d5.

The first random access request includes the identifier of the first process, so that the access network device can determine, based on the identifier of the first process in the first random access request, that the first random access request is a request for the first process. It may be understood that the first random access request may further include the RN 16 corresponding to the first terminal device. In this case, for Case 1 and Case 2, the second identifier may be the identifier of the first process or the RN 16. This may be specifically determined based on an actual situation, and details are not described again. It may be understood that, when the second identifier is the identifier of the first process, the first random access request may further include the RN 16, and when the access network device receives the first random access request, the access network device may maintain a correspondence between the identifier of the first process and the RN 16. In this case, the context of the first terminal device may include at least one of the following: the identifier of the first process, the RN 16, or the correspondence between the identifier of the first process and the RN 16.

The acknowledgment message may be a message sent by the access network device for the first random access request, and may be an ACK command. The acknowledgement message may further include the RN 16.

Before the access network device sends the first identifier and the identifier of the first terminal device to the core network device, the first terminal device may perform random access through the first process. That is, when the access network device broadcasts the second random access request for the first process, the first terminal device may send the first random access request to the access network device based on the second random access request, to request to access the access network device. In this way, the first terminal device can implement the random access through the first process. It may be understood that, when the first terminal device performs random access in the foregoing manner, the access network device may determine the first identifier after receiving the first random access request; or may determine the first identifier after receiving the identifier of the first terminal device. This may be specifically set based on an actual situation, and is not limited.

In addition, the access network device may allocate the first process to the first terminal device. Alternatively, it may be preset or predefined in a protocol that the first terminal performs random access through the first process. Alternatively, the first terminal device can independently select the first process. For example, the access network device may broadcast a process quantity (a quantity of processes) used for random access or an identifier of a process used for random access, and the first terminal device may select the first process based on the process quantity or the identifier to perform random access. A manner of determining the first process may be flexibly set based on an actual situation, and is not limited.

For example, before the access network device broadcasts the second random access request, the communication method may further include: The access network device broadcasts a process quantity used for random access. Correspondingly, the first terminal device receives the process quantity. The first terminal device determines, based on the process quantity, to participate in random access corresponding to the first process.

For example, the access network device broadcasts five processes, to be specific, there are the five processes that can be used for random access, for example, a process #a1 to a process #5. The terminal device #a1 may select the process #a1 to perform random access, and the terminal device #a2 may select the process #a3 to perform random access.

For example, before the access network device broadcasts the second random access request, the communication method may further include: The access network device broadcasts process identifiers of a plurality of processes used for random access. Correspondingly, the first terminal device receives the process identifiers. The first terminal device determines, based on the process identifiers, to participate in random access corresponding to the first process.

For example, the access network device broadcasts three process identifiers, for example, a process ID #1 to a process ID #3, and a terminal device #a11 may select a process corresponding to the process ID #1 to perform random access.

After the first terminal device determines to participate in the random access corresponding to the first process, when the first terminal device receives the second random access request that includes the identifier of the first process, the first terminal device may send the first random access request based on the random access request. It may be understood that each of the plurality of terminal devices on which the operations need to be performed may determine, based on the process quantity or the process identifier, a process in which the terminal device participates. When the plurality of terminal devices select a same process to perform random access, the random access may be performed in a contention manner, and a terminal device that fails in contention subsequently performs random access again.

Further, before the first terminal device completes the random access, the communication method may further include: The access network device broadcasts a third random access request, where the third random access request includes an identifier of a second process. The second process is used by the terminal device in performing a random access procedure, and the second process is related to the access control layer, in other words, the second process may be a process at the access control layer. It may be understood that the second process is different from the first process. In other words, the access network device does not need to trigger random access of a next terminal device only after the first terminal device completes the random access. That is, the access network device may trigger the random access of the next terminal device during the random access of the first terminal device, so that slot utilization of the access network device can be improved.

For example, as shown in FIG. 6, there are two terminal devices on which operations need to be performed. If random access of the two terminal devices is performed through one process (a process #1 in FIG. 6), random access of a next terminal device can be triggered only after one terminal device completes access. To be specific, the access network device sends a repeated query message again only after an operation from a 1^{st} repeated query message to an EPC in FIG. 6 is completed, to trigger the random access of the next terminal device. If the access network device is separately accessed by the two terminal devices through two processes (a process #2 and a process #3 in FIG. 6), in other words, the two terminal devices separately perform random access through the two processes, the access network device may send a repeated query message again in a time period (T2 in FIG. 6) in which the access network device waits for the terminal device to return an acknowledgment message in a 1^{st} random access procedure, to trigger random access of a next terminal device. In this way, slot utilization of the access network device can be improved.

It may be understood that the foregoing content is described for a specific random access procedure. Embodiments of this application are further applicable to another random access procedure. When embodiments of this application are applicable to different random access procedures, the random access procedures may adaptively change, so that the first terminal device implements the random access through the first process.

Optionally, with reference to the foregoing embodiment, after the core network device receives the first identifier and the identifier of the first terminal device from the access network device, the communication method may further include: The core network device determines a third identifier of the first terminal device. The third identifier may indicate the first terminal device at the first signaling layer, and the third identifier may identify the first terminal device between the access network device and the core network device. The third identifier may be determined based on the identifier of the first terminal device, or may be determined based on the first identifier. In other words, the third identifier may be allocated based on the identifier of the first terminal device, or the third identifier may be allocated based on the first identifier. It may be understood that, after determining the third identifier, the core network device may associate the third identifier with the first identifier. That is, in this case, there is a correspondence between the third identifier and the first identifier, and the core network device may maintain the correspondence. In addition, when storing the context of the first terminal device, the core network device may store the correspondence between the third identifier and the first identifier. That is, in this case, the context of the first terminal device corresponding to the core network device includes the correspondence between the third identifier and the first identifier. In this case, when deleting the context of the first terminal device, the access network device may delete the correspondence between the third identifier and the first identifier.

Further, the operation request message may further include the third identifier that is of the first terminal device and determined by the core network device. After receiving the operation request message, the access network device may determine, based on the third identifier and the first identifier that are carried in the operation request message, that there is a correspondence between the third identifier and the first identifier, and maintain the correspondence. In addition, when storing the context of the first terminal device, the access network device may store the correspondence between the third identifier and the first identifier. That is, in this case, the context of the first terminal device includes the correspondence between the third identifier and the first identifier. In this case, when deleting the context of the first terminal device, the access network device may delete the correspondence between the third identifier and the first identifier.

It may be understood that, in embodiments of this application, the access network device may also be understood as a reader, or the access network device may be replaced with a reader. The reader may be a terminal device or another device having a reader function. For details of the reader, refer to the foregoing related descriptions in "2. A-IoT". Details are not described herein again.

In addition, in this embodiment of this application, names of the messages, the instructions, the signaling layers, the protocol layers, and the identifiers are merely an example expression, and the messages, the instructions, the signaling layers, the protocol layers, and the identifiers may also be replaced with any possible expression. This is not limited in embodiments of this application. In addition, the instruction in embodiments of this application may alternatively be replaced with an information element, information, or a message. This may be specifically set based on an actual situation, and is not limited.

The foregoing describes, with reference to the method embodiment, the overall procedure of the communication method provided in embodiments of this application. For ease of understanding, the following describes the foregoing method by using three specific scenarios.

### Scenario 1:

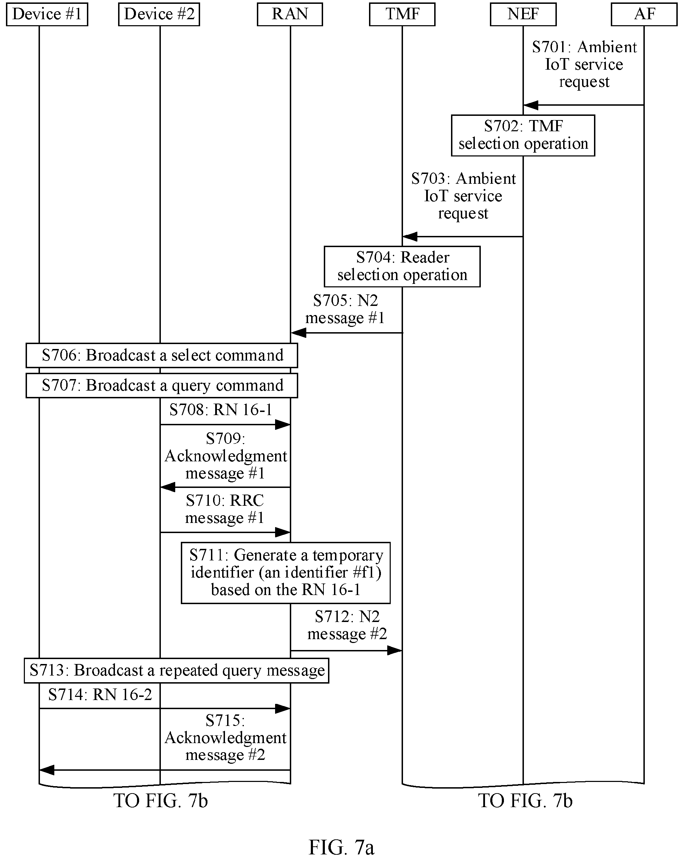

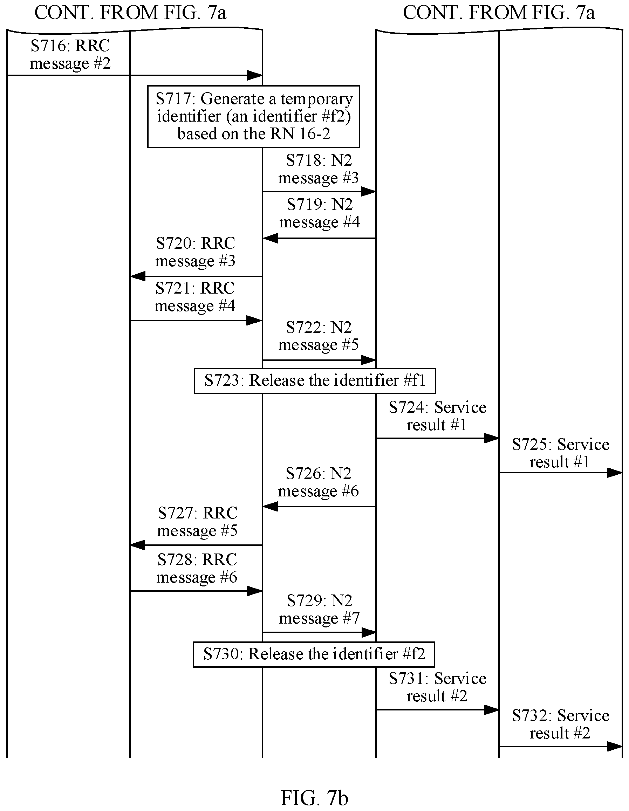

FIG. 7a and FIG. 7b are a schematic flowchart 2 of a communication method according to an embodiment of this application. The method is applicable to the communication system shown in FIG. 4, and mainly relates to interaction between a RAN (the foregoing access network device), a TMF (the foregoing core network device), a device #1, a device #2, an NEF, and an AF. In Scenario 1, when operations need to be performed on the device #1 and the device #2, the RAN allocates a temporarily used identifier to a device based on an identifier in a random access request sent by the device (the device #1 or the device #2), and identifies uplink and downlink signaling via the identifier, to complete an operation on the device.

S701: The AF sends an ambient IoT service request to the NEF. Correspondingly, the NEF receives the ambient IoT service request from the AF.

The ambient IoT service request includes an identifier of the AF, a read operation, and a device list. The device list includes an identifier of the device #1 and an identifier of the device #2. It may be understood that the read operation may alternatively be replaced with another operation based on an actual situation, for example, an inventory operation or a write operation.

S702: The NEF performs a TMF selection operation.

S703: The NEF sends an ambient IoT service request to the TMF. Correspondingly, the TMF receives the ambient IoT service request from the NEF.

S704: The TMF performs a reader selection operation.

S705: The TMF sends an N2 message #1 to the RAN. Correspondingly, the RAN receives the N2 message #1 from the TMF.

The N2 message #1 corresponds to the foregoing operation task request message.

Optionally, the N2 message #1 may further include a task identifier of an operation task.

S706: The RAN broadcasts a select command.

S707: The RAN broadcasts a query command.

The query command corresponds to the foregoing second random access request.

S708: The device #2 sends an RN 16-1 to the RAN. Correspondingly, the RAN receives the RN 16-1 from the device #2.

It may be understood that a message used to send the RN 16-1 corresponds to the foregoing first random access request. In addition, the RN 16-1 corresponds to the foregoing second identifier.

S709: The RAN sends an acknowledgment message #1 to the device #2 based on the RN 16-1 sent by the device #2. Correspondingly, the device #2 receives the acknowledgment message #1 from the RAN.

The acknowledgment message #1 includes the RN 16-1, and the acknowledgment message #1 corresponds to the foregoing acknowledgment message.

S710: The device #2 sends an RRC message #1 to the RAN based on the acknowledgment message #1. Correspondingly, the RAN receives the RRC message #1 from the device #2.

Optionally, the RRC message #1 includes the RN 16-1.

S711: The RAN generates a temporary identifier (denoted as an identifier #f1) based on the RN 16-1.

The identifier #f1 corresponds to the foregoing first identifier.

It may be understood that, after generating the identifier #f1, the RAN may store a context of the device #2, and maintain a correspondence between the RN 16-1 and the identifier #f1. The context of the device #2 includes the RN 16-1 and the identifier #f1.

S712: The RAN sends an N2 message #2 to the TMF based on the RRC message #1. Correspondingly, the TMF receives the N2 message #2 from the RAN.

The N2 message #2 includes the identifier of the device #2 and the identifier #f1, and information carrying the identifier of the device #2 may be NAS information.

S713: The RAN broadcasts a repeated query message.

S714: The device #1 sends an RN 16-2 to the RAN. Correspondingly, the RAN receives the RN 16-2 from the device #1.

It may be understood that a message used to send the RN 16-2 corresponds to the foregoing first random access request. In addition, the RN 16-2 corresponds to the second identifier, and the RN 16-1 is different from the RN 16-2.

S715: The RAN sends an acknowledgment message #2 to the device #1 based on the RN 16-2 sent by the device #1. Correspondingly, the device #1 receives the acknowledgment message #2 from the RAN.

The acknowledgment message #2 includes the RN 16-2, and the acknowledgment message #2 corresponds to the foregoing acknowledgment message.

S716: The device 1 sends an RRC message #2 to the RAN based on the acknowledgment message #2. Correspondingly, the RAN receives the RRC message #2 from the device #1.

Optionally, the RRC message #2 includes the RN 16-2.

S717: The RAN generates a temporary identifier (denoted as an identifier #f2) based on the RN 16-2.

The identifier #f2 corresponds to the foregoing first identifier.

It may be understood that, after generating the identifier #f2, the RAN may store a context of the device #1, and maintain a correspondence between the RN 16-2 and the identifier #f2. The context of the device #1 includes the RN 16-2 and the identifier #f2.

S718: The RAN sends an N2 message #3 to the TMF based on the RRC message #2. Correspondingly, the TMF receives the N2 message #3 from the RAN.

The N2 message #3 includes the identifier of the device #1 and the identifier #f2, and information carrying the identifier of the device #1 may be NAS information.

S719: The TMF sends an N2 message #4 to the RAN. Correspondingly, the RAN receives the N2 message #4 from the TMF.

The N2 message #4 includes a service request, the identifier #f1, and end indication information. When the service request is a read operation, the read operation may include a location (for example, storage area information) that the device needs to read. The N2 message #4 corresponds to the foregoing operation request message, the service request corresponds to the foregoing operation instruction, and the end indication information corresponds to the foregoing first indication information.

It may be understood that S719 may be performed after the device #2 completes random access, for example, S719 is performed during random access of the device #1 after the device #2 completes the random access, for example, after S713 and before S714. This may be specifically set based on an actual situation, and is not limited.

S720: The RAN sends an RRC message #3 to the device #2 based on the N2 message #4. Correspondingly, the device #2 receives the RRC message #3 from the RAN.

The RRC message #3 includes a service request and the RN 16-1.

S721: The device #2 sends an RRC message #4 to the RAN based on the RRC message #3. Correspondingly, the RAN receives the RRC message #4 from the device #2.

The RRC message #4 includes a service response #1, and the service response #1 corresponds to the foregoing operation result. For details, refer to the foregoing related descriptions. Details are not described herein again.

Optionally, the RRC message #4 may include the RN 16-1.

S722: The RAN sends an N2 message #5 to the TMF based on the RRC message #3. Correspondingly, the TMF receives the N2 message #5 from the RAN.

The N2 message #5 includes the service response and the identifier #f1.

S723: The RAN and the TMF release the identifier #f1.

In other words, the RAN and the TMF delete the context of the device #2.

S724: The TMF sends a service result #1 to the NEF. Correspondingly, the NEF receives the service result #1 from the TMF.

The service result #1 includes the identifier of the AF, the identifier of the device #1, and data, and the data is a result obtained by performing an operation by the device #1.

S725: The NEF sends a service result #1 to the AF. Correspondingly, the AF receives the service result #1 from the NEF.

S726: The TMF sends an N2 message #6 to the RAN. Correspondingly, the RAN receives the N2 message #6 from the TMF.

The N2 message #6 includes a service request, the identifier #f2, and end indication information. The N2 message #6 corresponds to the foregoing operation request message, the service request corresponds to the foregoing operation instruction, and the end indication information corresponds to the foregoing first indication information.

It may be understood that S726 may be performed after the device #1 completes random access. For example, S726 may be performed after the device #1 completes the random access and before the device #2 undergoes an operation, for example, after S716 and before S719. This may be specifically set based on an actual situation, and details are not described herein again.

S727: The RAN sends an RRC message #5 to the device #1 based on the N2 message #6. Correspondingly, the device #1 receives the RRC message #5 from the RAN.

The RRC message #5 includes a service request and the RN 16-2, and the service request and the RN 16-2 correspond to the foregoing operation instruction. For details, refer to the foregoing related descriptions. Details are not described herein again.

S728: The device #1 sends an RRC message #6 to the RAN based on the RRC message #5. Correspondingly, the RAN receives the RRC message #6 from the device #1.

The RRC message #6 includes a service response #2, and the service response #2 corresponds to the foregoing operation result. For details, refer to the foregoing related descriptions. Details are not described herein again.

Optionally, the RRC message #6 may include the RN 16-2.

S729: The RAN sends an N2 message #7 to the TMF based on the RRC message #6. Correspondingly, the TMF receives the N2 message #7 from the RAN.

The N2 message #7 includes the service response and the identifier #f2.

S730: The RAN and the TMF release the identifier #f2.

In other words, the RAN and the TMF delete the context of the device #1.

S731: The TMF sends a service result #2 to the NEF. Correspondingly, the NEF receives the service result #2 from the TMF.

The service result #2 includes the identifier of the AF, the identifier of the device #2, and data, and the data is a result obtained by performing an operation by the device #1.

S732: The NEF sends a service result #2 to the AF. Correspondingly, the AF receives the service result #2 from the NEF.

It may be understood that, for S701 to S732, refer to the foregoing related descriptions of "S301 to S325" and the embodiment shown in FIG. 5. Details are not described herein again. In addition, the foregoing messages (for example, the N2 message and a NAS message) may be replaced with other types of messages based on an actual situation. This is not limited.

It may be further understood that, when the N2 message #1 includes the task identifier of the operation task, the access network device may further store the task identifier when the access network device stores the contexts of the device #1 and the device #2, so that the core network device may indicate the access network device to delete contexts including the task identifier, to delete the contexts of the device #1 and the device #2. In this case, after receiving the N2 message #7 from the access network device, the core network device may send, to the access network device, information indicating to delete the contexts including the task identifier. In addition, the N2 message #4 and the N2 message #6 may not carry the end indication information.

### Scenario 2:

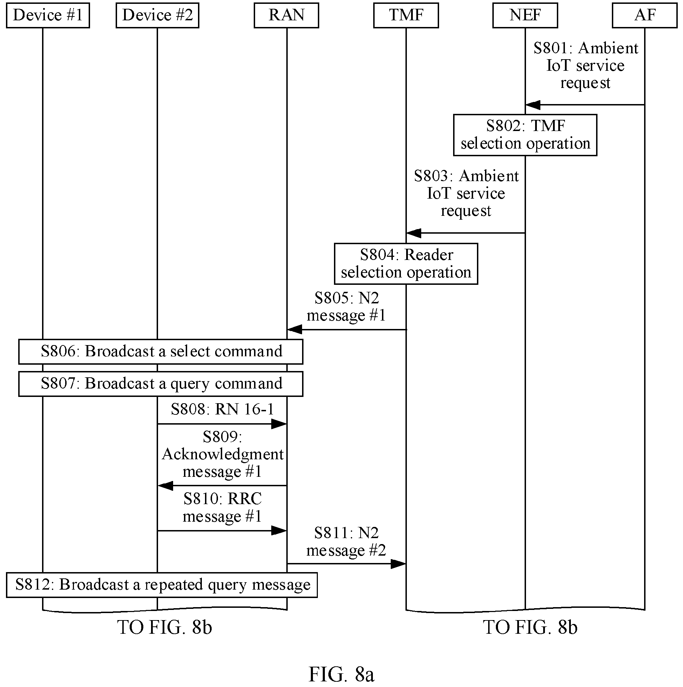

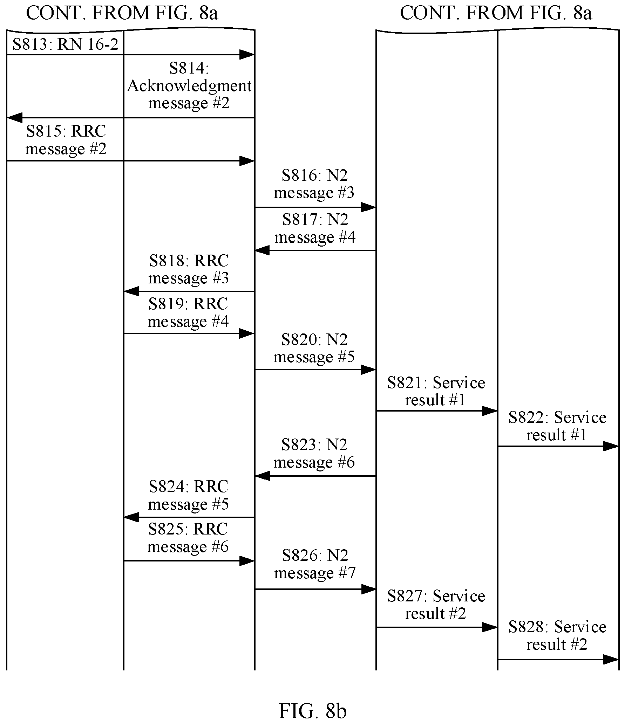

FIG. 8a and FIG. 8b are a schematic flowchart 3 of a communication method according to an embodiment of this application. The method is applicable to the communication system shown in FIG. 4, and mainly relates to interaction between a RAN (the foregoing access network device), a TMF (the foregoing core network device), a device #1, a device #2, an NEF, and an AF. In Scenario 2, when operations need to be performed on the device #1 and the device #2, the RAN determines, as a temporarily used identifier, an identifier in a random access request sent by the device (the device #1 or the device #2), and identifies uplink and downlink signaling via the identifier, to complete an operation on the device.

S801: The AF sends an ambient IoT service request to the NEF. Correspondingly, the NEF receives the ambient IoT service request from the AF.

S802: The NEF performs a TMF selection operation.

S803: The NEF sends an ambient IoT service request to the TMF. Correspondingly, the TMF receives the ambient IoT service request from the NEF.

S804: The TMF performs a reader selection operation.

S805: The TMF sends an N2 message #1 to the RAN. Correspondingly, the RAN receives the N2 message #1 from the TMF.

The N2 message #1 corresponds to the foregoing operation task request message.

Optionally, the N2 message #1 may further include a task identifier of an operation task.

S806: The RAN broadcasts a select command.

S807: The RAN broadcasts a query command.

The query command corresponds to the foregoing second random access request.

S808: The device #2 sends an RN 16-1 to the RAN. Correspondingly, the RAN receives the RN 16-1 from the device #2.

It may be understood that a message used to send the RN 16-1 corresponds to the foregoing first random access request, and the RN 16-1 corresponds to a second identifier.

S809: The RAN sends an acknowledgment message #1 to the device #2 based on the RN 16-1 sent by the device #2. Correspondingly, the device #2 receives the acknowledgment message #1 from the RAN.

The acknowledgment message #1 includes the RN 16-1, and the acknowledgment message #1 corresponds to the foregoing acknowledgment message.

S810: The device #2 sends an RRC message #1 to the RAN based on the acknowledgment message #1. Correspondingly, the RAN receives the RRC message #1 from the device #2.

Optionally, the RRC message #1 includes the RN 16-1.

S811: The RAN sends an N2 message #2 to the TMF based on the RRC message #1. Correspondingly, the TMF receives the N2 message #2 from the RAN.

The N2 message #2 includes an identifier of the device #2 and the RN 16-1, and information carrying the identifier of the device #2 may be NAS information. It may be understood that the RN 16-1 corresponds to the foregoing first identifier. That is, the RAN determines the second identifier as the first identifier.

S812: The RAN broadcasts a repeated query message.

S813: The device #1 sends an RN 16-2 to the RAN. Correspondingly, the RAN receives the RN 16-2 from the device #1.

It may be understood that a message used to send the RN 16-2 corresponds to the foregoing first random access request. In addition, the RN 16-2 corresponds to the foregoing second identifier, and the RN 16-2 is different from the RN 16-1.

S814: The RAN sends an acknowledgment message #2 to the device #1 based on the RN 16-2 sent by the device #1. Correspondingly, the device #1 receives the acknowledgment message #2 from the RAN.

The acknowledgment message #2 includes the RN 16-2, and the acknowledgment message #2 corresponds to the foregoing acknowledgment message.

S815: The device #1 sends an RRC message #2 to the RAN based on the acknowledgment message #2. Correspondingly, the RAN receives the RRC message #2 from the device #1.

Optionally, the RRC message #2 includes the RN 16-2.

S816: The RAN sends an N2 message #3 to the TMF based on the RRC message #2. Correspondingly, the TMF receives the N2 message #3 from the RAN.

The N2 message #3 includes an identifier of the device #1 and the RN 16-2, and information carrying the identifier of the device #1 may be NAS information. It may be understood that the RN 16-2 corresponds to the foregoing first identifier. That is, the RAN determines the second identifier as the first identifier.

S817: The TMF sends an N2 message #4 to the RAN. Correspondingly, the RAN receives the N2 message #4 from the TMF.

The N2 message #4 includes a service request, the RN 16-1, and end indication information. The N2 message #4 corresponds to the foregoing operation request message, the service request corresponds to the foregoing operation instruction, and the end indication information corresponds to the foregoing first indication information.

It may be understood that S817 may be performed after the device #2 completes random access, for example, S817 is performed during random access of the device #1 after the device #2 completes the random access, for example, after S810 and before S815. This may be specifically set based on an actual situation, and is not limited.

S818: The RAN sends an RRC message #3 to the device #2 based on the N2 message #4. Correspondingly, the device #2 receives the RRC message #3 from the RAN.

The RRC message #3 includes a service request and the RN 16-1.

S819: The device #2 sends an RRC message #4 to the RAN based on the RRC message #3. Correspondingly, the RAN receives the RRC message #4 from the device #2.

The RRC message #4 includes a service response #1, and the service response #1 corresponds to the foregoing operation result.

Optionally, the RRC message #4 may include the RN 16-1.

S820: The RAN sends an N2 message #5 to the TMF based on the RRC message #3. Correspondingly, the TMF receives the N2 message #5 from the RAN.

The N2 message #5 includes the service response and the RN 16-1.

S821: The TMF sends a service result #1 to the NEF. Correspondingly, the NEF receives the service result #1 from the TMF.

The service result #1 includes the identifier of the AF, the identifier of the device #1, and data, and the data is a result obtained by performing an operation by the device #1.

S822: The NEF sends a service result #1 to the AF. Correspondingly, the AF receives the service result #1 from the NEF.

S823: The TMF sends an N2 message #6 to the RAN. Correspondingly, the RAN receives the N2 message #6 from the TMF.

The N2 message #6 includes a service request, the RN 16-2, and end indication information. The N2 message #6 corresponds to the foregoing operation request message, the service request corresponds to the foregoing operation instruction, and the end indication information corresponds to the foregoing first indication information. For details, refer to the foregoing related descriptions. Details are not described herein again.

It may be understood that S823 may be performed after the device #1 completes random access. For example, S823 may be performed after the device #1 completes the random access and before the device #2 undergoes an operation, for example, after S815 and before S817. This may be specifically set based on an actual situation, and details are not described herein again.

S824: The RAN sends an RRC message #5 to the device #1 based on the N2 message #6. Correspondingly, the device #1 receives the RRC message #5 from the RAN.

The RRC message #5 includes a service request and the RN 16-2.

S825: The device #1 sends an RRC message #6 to the RAN based on the RRC message #5. Correspondingly, the RAN receives the RRC message #6 from the device #1.

The RRC message #6 includes a service response #2, and the service response #2 corresponds to the foregoing operation result.

Optionally, the RRC message #6 may include the RN 16-2.

S826: The RAN sends an N2 message #7 to the TMF based on the RRC message #6. Correspondingly, the TMF receives the N2 message #7 from the RAN.

The N2 message #7 includes the service response and the RN 16-2.

S827: The TMF sends a service result #2 to the NEF. Correspondingly, the NEF receives the service result #2 from the TMF.

The service result #2 includes the identifier of the AF, the identifier of the device #2, and data, and the data is a result obtained by performing an operation by the device #1.

S828: The NEF sends a service result #2 to the AF. Correspondingly, the AF receives the service result #2 from the NEF.

It may be understood that, for S801 to S828, refer to the foregoing related descriptions of "S301 to S325" and the embodiment shown in FIG. 5. Details are not described herein again. In addition, the foregoing messages (for example, the N2 message and a NAS message) may be replaced with other types of messages based on an actual situation. This is not limited. It may be further understood that, when the N2 message #1 includes the task identifier of the operation task, the access network device may further store the task identifier when the access network device stores contexts of the device #1 and the device #2, so that the core network device may indicate the access network device to delete contexts including the task identifier, to delete the contexts of the device #1 and the device #2. For details, refer to the foregoing related descriptions in Scenario 1. Details are not described herein again.

In addition, when the device #1 and the device #2 perform random access through different processes, the devices can be further indicated based on identifiers of the processes between the access network device and the core network device.

### Scenario 3:

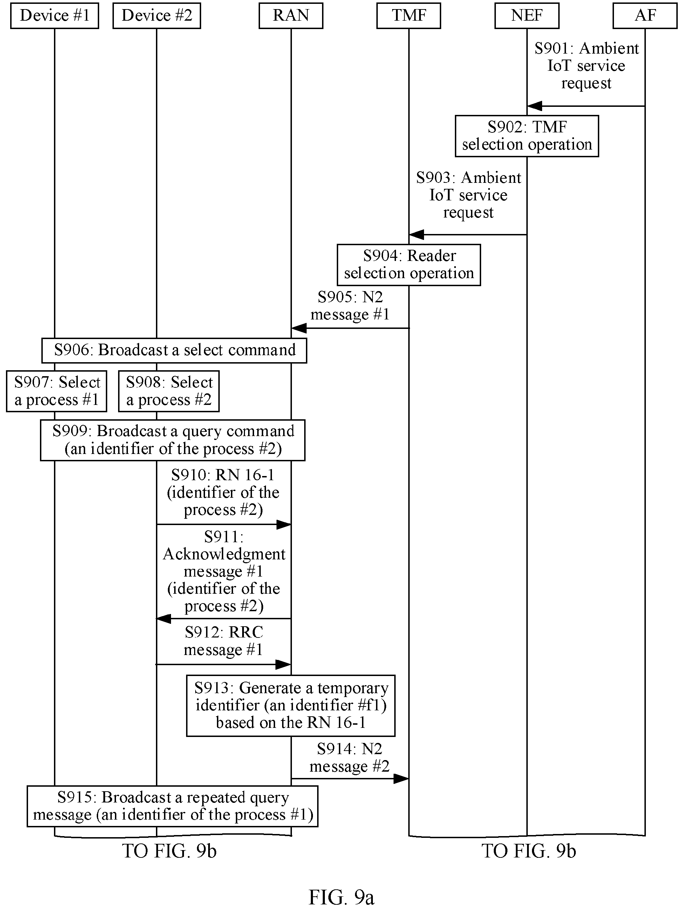

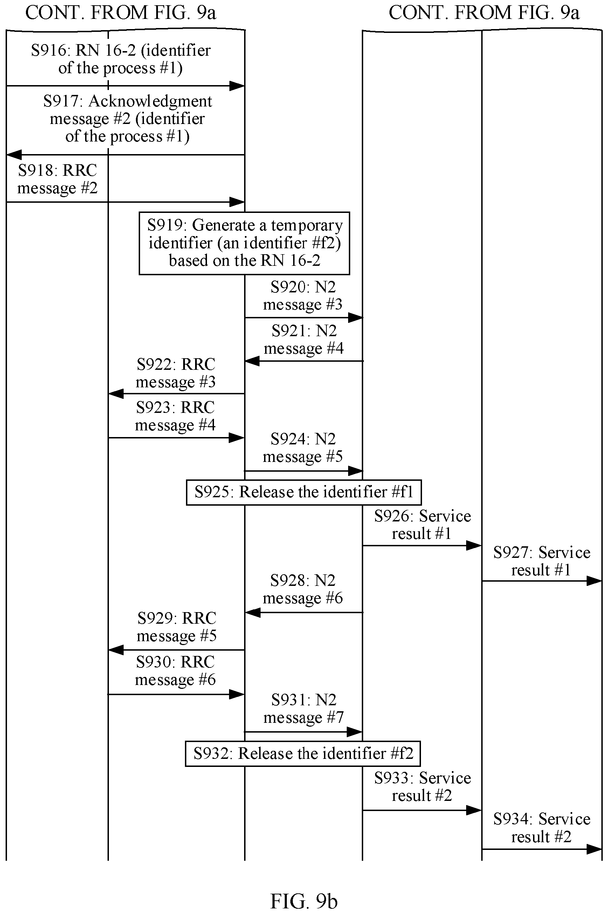

FIG. 9a and FIG. 9b are a schematic flowchart 4 of a communication method according to an embodiment of this application. The method is applicable to the communication system shown in FIG. 4, and mainly relates to interaction between a RAN (the foregoing access network device), a TMF (the foregoing core network device), a device #1, a device #2, an NEF, and an AF. In Scenario 3, when operations need to be performed on the device #1 and the device #2, the RAN sets, based on an identifier in a random access request sent by the device (the device #1 or the device #2), an identifier temporarily used by the device, and identifies uplink and downlink signaling via the identifier, to complete an operation on the device. In addition, the device #1 and the device #2 may perform random access through different processes.

S901: The AF sends an ambient IoT service request to the NEF. Correspondingly, the NEF receives the ambient IoT service request from the AF.

The ambient IoT service request includes an identifier of the AF, a read operation, and a device list. The device list includes an identifier of the device #1 and an identifier of the device #2. It may be understood that the read operation may alternatively be replaced with another operation based on an actual situation, for example, an inventory operation or a write operation.

S902: The NEF performs a TMF selection operation.

S903: The NEF sends an ambient IoT service request to the TMF. Correspondingly, the TMF receives the ambient IoT service request from the NEF.

S904: The TMF performs a reader selection operation.

S905: The TMF sends an N2 message #1 to the RAN. Correspondingly, the RAN receives the N2 message #1 from the TMF.

The N2 message #1 corresponds to the foregoing operation task request message.

Optionally, the N2 message #1 may further include a task identifier of an operation task.

S906: The RAN broadcasts a select command.

The select command includes a process quantity that can be used for random access. When the process quantity is 2, a random access procedure may be performed through two processes.

S907: The device #1 selects a process #1 according to the select command.

That is, the device #1 selects the process #1 to perform subsequent random access.

S908: The device #2 selects a process #2 according to the select command.

That is, the device #2 selects the process #2 to perform subsequent random access.

It may be understood that S907 and S908 may be performed simultaneously, or may be performed in sequence. This is not limited.

S909: The RAN broadcasts a query command.

The query command includes an identifier of the process #2, that is, the RAN requests the device that selects the process #2 to perform random access. The query command corresponds to the foregoing second random access request.

S910: The device #2 sends an RN 16-1 to the RAN. Correspondingly, the RAN receives the RN 16-1 from the device #2.

It may be understood that the device #2 further sends the identifier of the process #2 to the RAN.

S911: The RAN sends an acknowledgment message #1 to the device #2 based on the RN 16-1 sent by the device #2. Correspondingly, the device #2 receives the acknowledgment message #1 from the RAN.

The acknowledgment message #1 includes the RN 16-1 and the identifier of the process #2, and the acknowledgment message #1 corresponds to the foregoing acknowledgment message. For details, refer to the foregoing related descriptions. Details are not described herein again.

S912: The device #2 sends an RRC message #1 to the RAN based on the acknowledgment message #1. Correspondingly, the RAN receives the RRC message #1 from the device #2.

Optionally, the RRC message #1 may include the RN 16-1 and/or the identifier of the process #2.

S913: The RAN generates a temporary identifier (denoted as an identifier #f1) based on the RN 16-1.

The identifier #f1 corresponds to the foregoing first identifier.

It may be understood that, after generating the identifier #f1, the RAN may store a context of the device #2, and maintain a correspondence between the RN 16-1 and the identifier #f1. The context of the device #2 includes the RN 16-1 and the identifier #f1.

S914: The RAN sends an N2 message #2 to the TMF based on the RRC message #1. Correspondingly, the TMF receives the N2 message #2 from the RAN.

The N2 message #2 includes the identifier of the device #2 and the identifier #f1, and information carrying the identifier of the device #2 may be NAS information.

S915: The RAN broadcasts a repeated query message.

The repeated query message includes an identifier of the process #1, that is, the RAN requests the device that selects the process #1 to perform random access.

S916: The device #1 sends an RN 16-2 to the RAN. Correspondingly, the RAN receives the RN 16-2 from the device #1.

It may be understood that the device #1 further sends the identifier of the process #2 to the RAN.

S917: The RAN sends an acknowledgment message #2 to the device #1 based on the RN 16-2 sent by the device #1. Correspondingly, the device #1 receives the acknowledgment message #2 from the RAN.

The acknowledgment message #2 includes the RN 16-2 and the identifier of the process #1, and the acknowledgment message #2 corresponds to the foregoing acknowledgment message. For details, refer to the foregoing related descriptions. Details are not described herein again.

S918: The device 1 sends an RRC message #2 to the RAN based on the acknowledgment message #2. Correspondingly, the RAN receives the RRC message #2 from the device #1.

Optionally, the RRC message #2 may include the RN 16-2 and/or the identifier of the process #1.

S919: The RAN generates a temporary identifier (denoted as an identifier #f2) based on the RN 16-2.

The identifier #f2 corresponds to the foregoing first identifier.

It may be understood that, after generating the identifier #f2, the RAN may store a context of the device #1, and maintain a correspondence between the RN 16-2 and the identifier #f2. The context of the device #1 includes the RN 16-2 and the identifier #f2.

S920: The RAN sends an N2 message #3 to the TMF based on the RRC message #2. Correspondingly, the TMF receives the N2 message #3 from the RAN.

The N2 message #3 includes the identifier of the device #1 and the identifier #f2, and information carrying the identifier of the device #1 may be NAS information.

S921: The TMF sends an N2 message #4 to the RAN. Correspondingly, the RAN receives the N2 message #4 from the TMF.

The N2 message #4 includes a service request, the identifier #f1, and end indication information. The N2 message #4 corresponds to the foregoing operation request message, the service request corresponds to the foregoing operation instruction, and the end indication information corresponds to the foregoing first indication information. For details, refer to the foregoing related descriptions. Details are not described herein again.

It may be understood that S921 may be performed after the device #2 completes random access, for example, S921 is performed during random access of the device #1 after the device #2 completes the random access, for example, after S915 and before S916. This may be specifically set based on an actual situation, and is not limited.

S922: The RAN sends an RRC message #3 to the device #2 based on the N2 message #4. Correspondingly, the device #2 receives the RRC message #3 from the RAN.

The RRC message #3 includes a service request and the RN 16-1.

S923: The device #2 sends an RRC message #4 to the RAN based on the RRC message #3. Correspondingly, the RAN receives the RRC message #4 from the device #2.

The RRC message #4 includes a service response #1, and the service response #1 corresponds to the foregoing operation result. For details, refer to the foregoing related descriptions. Details are not described herein again.

Optionally, the RRC message #4 may include the identifier #f1.

S924: The RAN sends an N2 message #5 to the TMF based on the RRC message #3. Correspondingly, the TMF receives the N2 message #5 from the RAN.

The N2 message #5 includes the service response #1 and the identifier #f1.

S925: The RAN and the TMF release the identifier #f1.

In other words, the RAN and the TMF delete the context of the device #2.

S926: The TMF sends a service result #1 to the NEF. Correspondingly, the NEF receives the service result #1 from the TMF.

The service result #1 includes the identifier of the AF, the identifier of the device #1, and data, and the data is a result obtained by performing an operation by the device #1.

S927: The NEF sends a service result #1 to the AF. Correspondingly, the AF receives the service result #1 from the NEF.

S928: The TMF sends an N2 message #6 to the RAN. Correspondingly, the RAN receives the N2 message #6 from the TMF.

The N2 message #6 includes a service request, the identifier #f2, and end indication information. The N2 message #6 corresponds to the foregoing operation request message, the service request corresponds to the foregoing operation instruction, and the end indication information corresponds to the foregoing first indication information. For details, refer to the foregoing related descriptions. Details are not described herein again.

It may be understood that S928 may be performed after the device #1 completes random access. For example, S928 may be performed after the device #1 completes the random access and before the device #2 undergoes an operation, for example, after S918 and before S921. This may be specifically set based on an actual situation, and details are not described herein again.

S929: The RAN sends an RRC message #5 to the device #1 based on the N2 message #6. Correspondingly, the device #1 receives the RRC message #5 from the RAN.

The RRC message #5 includes a service request and the RN 16-2.

S930: The device #1 sends an RRC message #6 to the RAN based on the RRC message #5. Correspondingly, the RAN receives the RRC message #6 from the device #1.

The RRC message #6 includes a service response #2, and the service response #2 corresponds to the foregoing operation result. For details, refer to the foregoing related descriptions. Details are not described herein again.

Optionally, the RRC message #6 may include the identifier #f2.

S931: The RAN sends an N2 message #7 to the TMF based on the RRC message #6. Correspondingly, the TMF receives the N2 message #7 from the RAN.

The N2 message #7 includes the service response #2 and the identifier #f2.

S932: The RAN and the TMF release the identifier #f2.

In other words, the RAN and the TMF delete the context of the device #1.

S933: The TMF sends a service result #2 to the NEF. Correspondingly, the NEF receives the service result #2 from the TMF.

The service result #2 includes the identifier of the AF, the identifier of the device #2, and data, and the data is a result obtained by performing an operation by the device #1.

S934: The NEF sends a service result #2 to the AF. Correspondingly, the AF receives the service result #2 from the NEF.

It may be understood that, for S901 to S934, refer to the foregoing related descriptions of "S301 to S325" and the embodiment shown in FIG. 5. Details are not described herein again. In addition, the foregoing messages (for example, the N2 message and a NAS message) may be replaced with other types of messages based on an actual situation. This is not limited.

It may be further understood that, when the N2 message #1 includes the task identifier of the operation task, the access network device may further store the task identifier when the access network device stores the contexts of the device #1 and the device #2, so that the core network device may indicate the access network device to delete contexts including the task identifier, to delete the contexts of the device #1 and the device #2. For details, refer to the foregoing related descriptions in Scenario 1. Details are not described herein again.

In addition, the temporary identifier may be further generated based on the identifier of the process, that is, the identifier #f1 is generated based on the identifier of the process #2 in S913. In this case, the information sent by the access network device to the device #2 may carry the identifier of the process #2, for example, carry the identifier of the process #2 in S922. The identifier #f2 is generated based on the identifier of the process #1 in S919. In this case, the information sent by the access network device to the device #1 may carry the identifier of the process #1, for example, carry the identifier of the process #1 in S929.

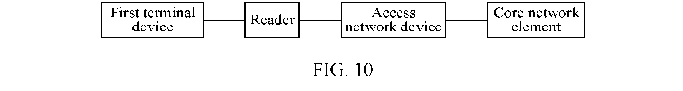

The foregoing describes, in detail with reference to FIG. 6 to FIG. 9a and FIG. 9b, the communication method applicable to the communication system shown in FIG. 4. It may be understood that embodiments of this application are further applicable to another communication system. For ease of understanding embodiments of this application, a communication system shown in FIG. 10 is first used as an example to describe in detail a communication system applicable to an embodiment of this application. For example, FIG. 10 is a diagram 2 of an architecture of a communication system to which a communication method according to an embodiment of this application is applicable.

As shown in FIG. 10, the communication system is applicable to the foregoing 5GS, and includes a first terminal device, a reader, an access network device, and a core network element.

For the first terminal device and the access network device, refer to the foregoing related descriptions in "1. 5GS". Details are not described herein again.

The reader may be a terminal device. That is, in this case, the terminal device may be used as a reader. For details, refer to the foregoing related descriptions in "2. A-IoT". Details are not described herein again.

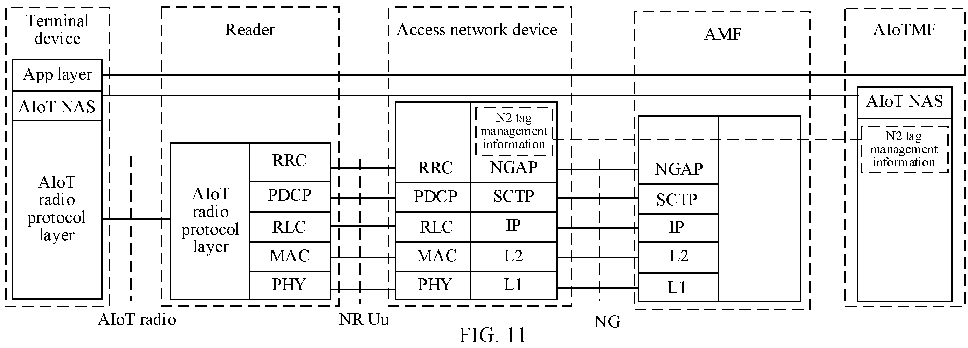

The core network element may be an AMF or an AIoTMF (TMF). For details, refer to the foregoing related descriptions in "1. 5GS". Details are not described herein again. It may be understood that, as shown in FIG. 11, when the core network element is the AIoTMF, a protocol layer, for example, a protocol layer such as N2 tag management information layer or an AIoT NGAP layer shown in FIG. 11, may be set between the access network device and the AIoTMF, so that the access network device and the AIoTMF can interact with each other. It may be further understood that a name of a protocol layer between the access network device and the AIoTMF is not limited in embodiments of this application. In addition, in FIG. 11, for protocol layers (such as an RRC layer and a PHY layer) between the first terminal device (a terminal device in FIG. 11), a reader, an access network device, an AMF, and an AIoTMF, refer to the related descriptions in the conventional technologies. Details are not described herein.

In a communication system, a reader may determine, for a first terminal device on which an operation needs to be performed, a first identifier to be used in an access control layer, and send the first identifier to an access network device. This enables the reader and the access network device to indicate the first terminal device at the access control layer via the first identifier, thereby performing the operation on the first terminal device. In addition, after receiving the first identifier, the access network device may determine, based on the first identifier, a third identifier to be used in a third signaling layer, and send the third identifier to the core network element. This enables the access network device and the core network element to indicate the first terminal device at the third signaling layer via the third identifier, and an operation on the first terminal device is indicated. In this way, when the reader needs to perform operations on a plurality of terminal devices, the reader can independently trigger random access of each of the plurality of terminal devices, that is, the reader may determine different identifiers for the plurality of terminal devices that require random access, to distinguish between different terminal devices. In this case, the core network element may perform, during random access of the terminal devices, an operation on a terminal device that has completed random access, that is, random access of and an operation on a latter terminal device do not need to wait until random access of and an operation on a former terminal device are completed. As a result, the efficiency of performing the operations on the plurality of terminal devices can be improved.

It may be understood that FIG. 10 is a simplified diagram of an example for ease of understanding. The communication system may further include another network device and/or another terminal device not shown in FIG. 10.

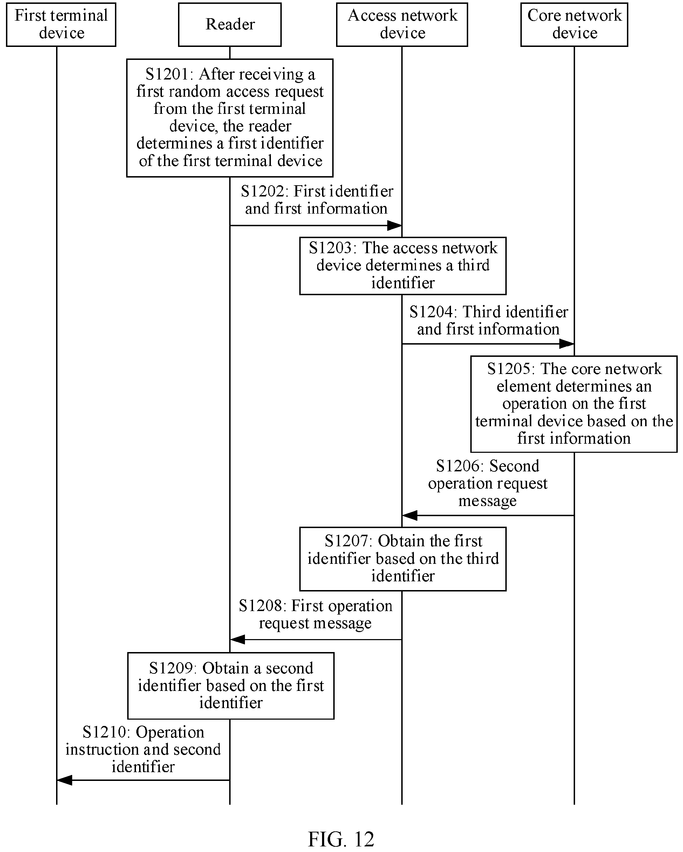

For ease of understanding, the following specifically describes, with reference to FIG. 12, a communication method provided in an embodiment of this application.

For example, FIG. 12 is a schematic flowchart 5 of a communication method according to an embodiment of this application. The method is applicable to interaction between the first terminal device, the reader, the access network device, and the core network element in the foregoing communication system. For ease of understanding, the following uses the first terminal device as an example to describe the communication method.

S1201: After receiving a first random access request from the first terminal device, a reader determines a first identifier of the first terminal device.

The first random access request may be used to request random access to the reader. In different random access procedures, the first random access request may vary. For the first random access request, refer to the foregoing related descriptions in "S501". For example, the access network device in S501 may be replaced with the reader for understanding. Details are not described again.

"After the reader receives the first random access request" may also be understood as "when the reader completes a random access procedure between the first terminal device and the reader, or after the reader completes the random access procedure between the first terminal device and the reader". "After the reader receives the first random access request" may be further understood as "in a process in which the reader performs a random access procedure of the first terminal device". For details of the foregoing two cases, refer to the foregoing related descriptions in "S501". For example, the access network device in S501 may be replaced with the reader for understanding. Details are not described again.

The first identifier indicates the first terminal device at an access control layer. In other words, the first identifier may identify the first terminal device between the reader and the access network device, that is, the reader and the access network device may identify or determine a terminal device indicated by a second identifier as the first terminal device. The access control layer is a protocol layer between the reader and the access network device, for example, a MAC layer, a PHY layer, a PDCP layer, an RRC layer, or an RLC layer. For a specific principle of each protocol layer, refer to the conventional technologies. Details are not described herein.

The first identifier may be determined based on information sent by the first terminal device in a random access procedure. For example, the reader may allocate the first identifier to the first terminal device based on the information. For another example, the reader may determine the information as the first identifier. The following provides descriptions in different cases.

Case 12.1: The reader allocates (or generates) the first identifier based on the information sent by the first terminal device in the random access procedure.

In this case, before the reader determines the first identifier of the first terminal device, the communication method may further include: The first terminal device sends a first random access request. Correspondingly, the reader receives the first random access request, where the first random access request includes a second identifier. That the reader determines the first identifier of the first terminal device may specifically include: The reader allocates the first identifier to the first terminal device based on the second identifier.

The second identifier indicates the first terminal device at a second signaling layer. In other words, the second identifier may identify the first terminal device between the first terminal device and the reader, that is, the reader may identify or determine a terminal device indicated by the second identifier as the first terminal device. The second identifier may be a temporarily used identifier (namely, a temporary identifier), for example, an RN 16, or may be other information that can represent the first terminal device, for example, IP address/port number information, frequency band/frequency information, temporary name information, geographical location information, or interface information of the first terminal. It may be understood that the second identifier may be autonomously generated by the first terminal device, or may be configured by a network side, or may be predefined in a protocol. This may be specifically flexibly set based on an actual situation, and is not limited.

The second signaling layer may be a protocol layer between a terminal device (for example, the first terminal device) and the reader, for example, an access (Access, AS) layer or an AIoT AS layer.

It may be understood that the second identifier is different from the first identifier, and there is a correspondence between the first identifier and the second identifier. After the reader allocates the first identifier to the first terminal device based on the second identifier, the reader may store (or maintain) the correspondence between the second identifier and the first identifier, so that the reader subsequently determines the second identifier based on the first identifier, to send information to the first terminal device based on the second identifier

It may be further understood that, in addition to being carried in the first random access request, the second identifier may alternatively be carried in another message sent by the first terminal device in the random access procedure. For example, after receiving the first random access request sent by the first terminal device, the reader sends an acknowledgment message to the first terminal device; and after receiving the acknowledgment message, the first terminal device sends, to the reader, the second identifier and information (for example, an identifier of the first terminal device) indicating the first terminal device. An operation of carrying the second identifier in the another message is similar to the operation of carrying the second identifier in the first random access request. Reference may be made for understanding, and details are not described herein again.

Case 12.2: The reader determines, as the first identifier, the information sent by the first terminal device in the random access procedure.

In this case, before the reader determines the first identifier of the first terminal device, the communication method may further include: The first terminal device sends a first random access request. Correspondingly, the reader receives the first random access request, where the first random access request includes a second identifier. That the reader determines the first identifier of the first terminal device may specifically include: The reader determines the second identifier as the first identifier.

The second identifier indicates the first terminal device at a second signaling layer. For the second identifier and the second signaling layer, refer to the foregoing related descriptions in "Case 12.1". Details are not described herein again.

In Case 12.2, the second identifier may be used as the first identifier, that is, the first identifier is the same as the second identifier. In other words, after receiving the second identifier, the reader may reuse the second identifier as the second signaling layer. For example, the reader may assign a value of the second identifier to the first identifier. In this case, the value of the second identifier is the same as that of the first identifier.

S1202: The reader sends the first identifier and first information to the access network device. Correspondingly, the access network device receives the first identifier and the first information from the reader.

The first information indicates the first terminal device at a first signaling layer. The first information may be an identifier of a terminal device. The identifier may be a third-party identifier, for example, an EPC of the first terminal device, or identifier information allocated by an operator to the terminal device, or a combination of the third-party identifier and the identifier information allocated by the operator to the terminal device. In this case, the first information may be a part of the identifier (a part of the ID) or a full identifier (full ID) of the terminal device. This may be specifically flexibly set based on an actual situation, and is not limited. Alternatively, the first information may be other information that can indicate or identify the terminal device, for example, a temporary identifier (for example, an SAE-temporary mobile subscriber identity (SAE-temporary mobile subscriber identity, S-TMSI) or a globally unique temporary UE identity (globally unique temporary UE identity, GUTI)), or mask information allocated by a core network to the first terminal device. The first information may be sent by the first terminal device to the reader. For example, the first terminal device sends the first information to the reader in the random access procedure. For details, refer to the foregoing related descriptions in "S502". For example, the identifier of the first terminal device and the access network device in S502 are respectively replaced with the first information and the reader for understanding. Details are not described again.

It may be understood that the reader cannot determine the first information, that is, the reader cannot decode the first information. For details, refer to the foregoing related descriptions in "S502". For example, the identifier of the first terminal device and the access network device in S502 are respectively replaced with the first information and the reader for understanding. Details are not described again.

In this embodiment of this application, after determining the first identifier, the reader may send the first identifier and the first information to the access network device, so that the access network device sends the first information to the core network element. A message in the conventional technologies, for example, an access stratum message (for example, an RRC message), or a newly defined message, for example, a message of another interface may be reused as a message used to send the first identifier and the first information. This may be specifically set based on an actual situation, and is not limited. It may be understood that the first information may be carried in an AIoT NAS message (or information), and the AIoT NAS message (or information) may be in the message used to send the first identifier and the identifier of the first terminal device.

S1203: After receiving the first identifier and the first information from the reader, the access network device determines a third identifier.

The third identifier indicates the first terminal device at a third signaling layer. In other words, the third identifier may identify the first terminal device between the access network device and the core network element, that is, the access network device and the core network element may identify or determine a terminal device indicated by the third identifier as the first terminal device. The third signaling layer may be a protocol layer between the access network device and the core network element. It may be understood that when the core network element varies, the third signaling layer varies. For example, when the core network element is an AMF, the third signaling layer may be an NGAP layer. Alternatively, when the core network element is an AIoTMF, the third signaling layer is a protocol layer between the access network device and the AIoTMF, for example, a protocol such as the AIoT NGAP in FIG. 11.

The third identifier may be determined based on the first identifier. For example, the access network device may allocate the third identifier to the first terminal device based on the first identifier. For another example, the access network device may determine the first identifier as the third identifier. The following provides descriptions in different cases.

Case 12.3: The access network device allocates (generates) the third identifier to the first terminal device based on the first identifier.

In this case, after the access network device receives the first identifier and the first information, that the access network device determines the third identifier may specifically include: The access network device allocates the third identifier to the first terminal device based on the first identifier.

It may be understood that the first identifier is different from the third identifier, and there is a correspondence between the first identifier and the third identifier. After the access network device allocates the third identifier to the first terminal device based on the first identifier, the access network device may store (or maintain) the correspondence between the first identifier and the third identifier, so that the access network device subsequently determines the first identifier based on the third identifier, to send related information of the first terminal device to the reader based on the first identifier.

Case 12.4: The access network device determines the first identifier as the third identifier.

In this case, after the access network device receives the first identifier and the first information, that the access network device determines the third identifier may specifically include: The access network device determines the first identifier as the third identifier.

In Case 12.4, the first identifier may be reused as the third identifier, that is, the third identifier is the same as the first identifier. In other words, after receiving the first identifier, the access network device may reuse the first identifier as the third signaling layer. For example, the access network device may assign a value of the first identifier to the third identifier. In this case, the value of the third identifier is the same as that of the first identifier. In this way, the access network device does not need to generate the third identifier, so that processing overheads of the access network device can be reduced.

S1204: The access network device sends the third identifier and the first information to the core network element. Correspondingly, the core network element receives the third identifier and the first information from the access network device.

After determining the third identifier, the access network device may send the third identifier and the first information to the core network element.

It may be understood that a message in the conventional technologies, for example, an N2 message, or a newly defined message, for example, a message of another interface may be reused as a message used to send the first identifier and the first information. This may be specifically flexibly set based on an actual situation, and is not limited. It may be understood that the first information may be carried in an AIoT NAS message (or information), and the AIoT NAS message (or information) may be in the message used to send the third identifier and the first information.

It may be further understood that, after receiving the first information, the core network element may store or maintain a correspondence between the first information and the third identifier. In addition, the core network element may further associate the first identifier, the identifier of the first terminal device, and a task identifier corresponding to an operation task (described below), that is, there is a correspondence between the first identifier, the identifier of the first terminal device, and the task identifier. In this case, the core network device may store or maintain the correspondence. For details, refer to the foregoing related descriptions in "S502". For example, the identifier of the first terminal device and the access network device in S502 are respectively replaced with the first information and the reader for understanding. Details are not described again.

S1205: The core network element determines an operation (denoted as an operation #1) on the first terminal device based on the first information.

For the operation #1, refer to the foregoing related descriptions in "S503". Details are not described again.

The core network element may determine the operation #1 from stored operations on a plurality of terminal devices based on the first information. The stored operations on the plurality of terminal devices may be operations sent by a service requester (for example, an AF) to the core network device. For details, refer to the foregoing related descriptions in "S503". Details are not described herein again.

S1206: The core network element sends a second operation request message to the access network device. Correspondingly, the access network device receives the second operation request message from the core network element.

The second operation request message may be used to request a terminal device indicated by the third identifier to perform an operation (that is, the foregoing operation #1) indicated by an operation instruction. In addition, the second operation request message may include at least one of the following: the third identifier or the operation instruction. The operation instruction may indicate to perform the operation #1. In addition, the operation instruction may be carried in a NAS message (or information). It may be understood that the core network element may determine the foregoing operation #1 based on the first information, that is, the second operation request message is determined based on the first information.

S1207: The access network device obtains the first identifier based on the third identifier.

After receiving the second operation request message, the access network device may obtain the first identifier based on the third identifier in the second operation request message. For example, when the access network device stores the correspondence between the third identifier and the first identifier, after receiving the second operation request message, the access network device may obtain the first identifier through indexing based on the third identifier in the second operation request message.

It may be understood that, after receiving the second operation request message, the access network device needs to send the operation instruction in the second operation request message to the reader, so that the reader sends the operation instruction to the terminal device (that is, the first terminal device) indicated by the third identifier, and the terminal device performs the operation indicated by the operation instruction. In this case, the access network device needs to determine an identifier corresponding to the third identifier at the access control layer, in other words, the access network device needs to determine, based on the third identifier, an identifier corresponding to the access control layer.

S1208: The access network device sends a first operation request message to the reader. Correspondingly, the reader receives the first operation request message from the access network device.

The first operation request message may be used to request a terminal device indicated by the first identifier to perform an operation (that is, the foregoing operation #1) indicated by an operation instruction. In addition, the first operation request message may include at least one of the following: the first identifier or the operation instruction.

S1209: The reader obtains the second identifier based on the first identifier.

After receiving the first operation request message, the reader may obtain the second identifier based on the first identifier in the first operation request message. For example, when the reader stores the correspondence between the first identifier and the second identifier, after receiving the first operation request message, the reader may obtain the second identifier through indexing based on the first identifier in the first operation request message.

It may be understood that, after receiving the first operation request message, the reader needs to send the operation instruction in the first operation request message to the terminal device (that is, the first terminal device) indicated by the first identifier, so that the terminal device performs the operation indicated by the operation instruction. In this case, the reader needs to determine an identifier corresponding to the first identifier at the second signaling layer, to send an operation instruction to the first terminal device based on the identifier.

S1210: The reader sends the operation instruction and the second identifier to the first terminal device. Correspondingly, the first terminal device receives the operation instruction and the second identifier from the reader.

It may be understood that the operation instruction and the second identifier may be two pieces of parallel information, or the second identifier may be carried in the operation instruction. A specific form may be flexibly set based on an actual situation, and is not limited.

The reader sends the second identifier to the first terminal device, so that the terminal device that receives an operation instruction can determine, based on the second identifier carried in the operation instruction, whether the operation instruction is an instruction sent to the terminal device, thereby ensuring that the operation instruction is sent to the first terminal device. In addition, the reader sends the operation instruction to the first terminal device, so that the first terminal device can perform an operation indicated by the operation instruction, that is, complete the foregoing operation #1. In other words, after the first terminal device receives the operation instruction and the second identifier, the first terminal device performs the operation indicated by the operation instruction. For details, refer to the foregoing related descriptions in "S506". Details are not described herein again.

It may be understood that the reader may alternatively not send the second identifier to the first terminal device, but send the operation instruction to the first terminal device based on the second identifier. For example, a frequency corresponding to the second identifier may be preconfigured or predefined in a protocol. After obtaining the second identifier based on the first identifier, the reader may send the operation instruction on the frequency corresponding to the second identifier. Correspondingly, the first terminal device may receive the operation instruction on the frequency.

In conclusion, in this embodiment of this application, the reader may determine, for the first terminal device on which an operation needs to be performed, the first identifier to be used in the access control layer, so that the first terminal device can be indicated for the reader and the access network device via the first identifier, enabling exchange of related information of the first terminal device. In addition, the access device may determine, for the first terminal device based on the first identifier, the third identifier to be used in the third signaling layer, so that the first terminal device can be indicated for the access network device and the core network element via the third identifier, enabling exchange of related information of the first terminal device. In this way, when the reader needs to perform operations on terminal devices, the reader can independently trigger random access of each of a plurality of terminal devices, that is, the reader may determine different identifiers for the plurality of terminal devices that initiate random access, to distinguish between different terminal devices. In this case, the core network element may perform, during random access of the terminal devices, an operation on a terminal device that has completed random access, that is, random access of and an operation on a latter terminal device do not need to wait until random access of and an operation on a former terminal device are completed. As a result, the efficiency of performing the operations on the plurality of terminal devices can be improved.

Optionally, with reference to the foregoing embodiment, after the first terminal device receives the operation instruction and the second identifier, the communication method may further include: The first terminal device sends an operation result to the reader. Correspondingly, the reader receives the operation result from the first terminal device, where the operation result is a result of the first terminal device performing the operation indicated by the operation instruction. The reader sends the operation result and the first identifier to the access network device. Correspondingly, the access network device receives the operation result from the reader. The access network device sends the operation result and the third identifier to the core network element. Correspondingly, the core network element receives the operation result and the third identifier from the access network device.

It may be understood that the core network element may determine the operation result of the first terminal device based on the third identifier and the operation result. In addition, after determining the operation result of the first terminal device, the core network element sends the operation result to the service requester (for example, the AF), so that the service requester adjusts a service based on the operation result. In addition, when the operation instruction varies, the corresponding result also varies. For details, refer to the foregoing related descriptions in the embodiment shown in FIG. 5. Details are not described herein again.

Optionally, with reference to the foregoing embodiment, for Case 12.1, after the reader allocates the first identifier to the first terminal device based on the second identifier, the communication method may further include: The reader stores the correspondence between the first identifier and the second identifier. In this way, the reader can send related information of the first terminal device between the first terminal device and the access network device. For example, after subsequently receiving, from the access network device, a message including the first identifier, the reader may determine the second identifier based on the correspondence between the first identifier and the second identifier, to send, to the first terminal device based on the second identifier, information corresponding to the message.

Optionally, with reference to the foregoing embodiment, for Case 12.2, after the access network device allocates the third identifier to the first terminal device based on the first identifier, the communication method may further include: The access network device stores a correspondence between the first identifier and the third identifier. In this way, the access network device can send related information of the first terminal device between the core network element and the reader. For example, after subsequently receiving, from the core network element, a message including the third identifier, the access network device may determine the first identifier based on the correspondence between the first identifier and the third identifier, to send, to the reader based on the first identifier, information corresponding to the message.

Optionally, with reference to the foregoing embodiment, after the core network element receives the third identifier and the first information from the access network device, the communication method may further include: The core network element stores a correspondence between an identifier of the reader and the third identifier, where the reader is configured to serve the first terminal device.

The identifier of the reader may be an identifier of the reader. For example, when the reader is a terminal device, the identifier of the reader may be an identifier of the terminal device, for example, a subscription permanent identifier (subscription permanent identifier, SUPI), a subscription concealed identifier (Subscription concealed identifier, SUCI), a GUTI, a TMSI (an S-TMSI or a 5G-S-TMSI), or the like, or may be a reader identifier (reader ID). The identifier may be allocated by the operator or a third party. This is not limited.

The identifier of the reader may alternatively be an identifier indicating the reader for the core network element (AIoTMF) and the access network device, for example, an NGAP ID. For example, a signaling layer between the access network device and the AIoTMF may be an AIoT NGAP layer, and the AIoT NGAP layer may be used to transmit signaling of the reader between the access network device and the AIoTMF. In this case, after receiving a RAN AIoTMF NGAP pair or a reader (UE) AIoTMF NGAP ID, the RAN or the AIoTMF may identify, based on the received RAN AIoTMF NGAP pair or reader (UE) AIoTMF NGAP ID, a specific reader, that is, a reader corresponding to the identifier, and forwards signaling based on the identified reader. It may be understood that a combination of a reader (UE) RAN AIoT NGAP ID and the reader (UE) AIoTMF NGAP ID identifies information about a reader (UE) on an AIoT NGAP, and the combination may be referred to as the RAN AIoTMF NGAP pair.

In this embodiment of this application, the core network element stores the correspondence between the identifier of the reader and the third identifier, so that the core network element can determine or identify the corresponding reader based on the identifier of the reader, that is, the reader configured to execute an operation task.

Optionally, with reference to the foregoing embodiment, for Case 12.1, after the reader allocates the first identifier to the first terminal device based on the second identifier, the communication method may further include: The reader stores a first context of the first terminal device, where the first context includes the first identifier and/or the second identifier.

The first context may be understood as all information related to the first terminal device, or the first context may be understood as a part of information related to the first terminal device, for example, the correspondence between the first identifier and the second identifier. It may be understood that, in the first context, there is the correspondence between the first identifier and the second identifier, in other words, the first context may include the correspondence between the first identifier and the second identifier. In this case, the first context may include at least one of the following: the first identifier, the second identifier, or the correspondence between the first identifier and the second identifier. In this way, after receiving a message carrying the first identifier, the reader can determine the second identifier based on the first context, for example, the first identifier and the correspondence between the first identifier and the second identifier, to send information to the first terminal device based on the second identifier.

Further, the first operation request message further includes first indication information, and the first indication information indicates the reader to delete (or release) the first context after the reader completes an operation on the first terminal device.

After receiving the first operation request message, the reader may delete (or release) the first context after completing the operation on the first terminal device. In different cases, time points at which the reader completes the operation on the first terminal device may be different. For details, refer to the foregoing related descriptions in the embodiment shown in FIG. 5 for understanding. For example, the access network device in the embodiment shown in FIG. 5 is replaced with the reader for understanding. Details are not described herein again.

In this embodiment of this application, the reader deletes (or releases) the first context based on the first indication information after completing the operation on the first terminal device, so that the reader can release storage space in time, thereby avoiding redundancy and improving storage efficiency.

It may be understood that, in addition to deleting the first context based on the first indication information, the reader may alternatively periodically delete the first context. Alternatively, the reader may delete the first context based on an indication of another device. Alternatively, the reader can independently determine whether the operation on the first terminal device is not completed, and delete the first context after determining that the operation on the first terminal device is completed.

Further, when storing the first context, the reader may associate the first context with an operation task. In this case, when storing the first context, the reader may further store a task identifier (task ID) corresponding to the operation task. For the task identifier, refer to the foregoing related descriptions in the embodiment shown in FIG. 5. Details are not described herein again. It may be understood that there is a correspondence between the task identifier, the first identifier, and the second identifier. For example, there is a correspondence between the task identifier and the first identifier, and there is a correspondence between the first identifier and the second identifier. In addition, the reader may maintain the correspondences. In this case, the first context may include at least one of the following: the first identifier, the second identifier, the task identifier, the correspondence between the first identifier and the second identifier, or the correspondence between the first identifier and the task identifier.

For example, the first context further includes the task identifier, and before the reader receives the first random access request, the communication method may further include: The access network device sends a first operation task request message to the reader. Correspondingly, the reader receives the first operation task request message from the access network device, where the first operation task request message includes the task identifier. The access network device broadcasts a second random access request based on the first operation task request message.

The first operation task request message is used to request the reader to perform (or initiate) random access to the plurality of terminal devices. In addition, the first operation task request message may further indicate the reader to store a context of a terminal device on which an operation needs to be performed, for example, the foregoing first context. The task identifier may be an identifier of a task corresponding to the operation task request message. For details, refer to the foregoing related descriptions in the embodiment shown in FIG. 5. Details are not described again. It may be understood that the task identifier may be sent by the core network element to the access network device (described below). In addition, the foregoing first operation task request message is similar to the operation task request message in the embodiment shown in FIG. 5. Mutual reference may be made for understanding, and details are not described herein again.

In this embodiment of this application, the access network device sends, to the reader, the first operation task request message carrying the task identifier, so that the core network element or the access network device can manage, via the task identifier, the operation task indicated by the task identifier. For example, after the operation task is completed, the reader is indicated to delete a context including the task identifier, to delete the entire context that is of the terminal device and corresponds to the completed operation task. In this way, the core network element or the access network device can manage the reader at a task granularity.

Further, after the reader stores the first context of the first terminal device, the communication method may further include: The access network device sends the task identifier and third indication information to the reader. Correspondingly, the reader receives the task identifier and the third indication information from the access network device, where the third indication information indicates the reader to delete a context including the task identifier. The reader deletes the first context based on the task identifier and the third indication information.

When receiving deletion indication information from the core network device or another device, the access network device may send the task identifier and the third indication information to the reader, where the deletion indication information may indicate the access network device and/or the reader to delete the context including the task identifier. Alternatively, after determining that the operation task indicated by the task identifier is completed, for example, after receiving the operation result corresponding to the task identifier, the access network device may send the task identifier and the third indication information to the reader. In this way, the reader can delete or release the first context in time, thereby avoiding redundancy and improving storage efficiency.

In addition, the reader may alternatively periodically delete the first context. For details, refer to the foregoing related descriptions. Details are not described herein again.

Optionally, with reference to the foregoing embodiment, for Case 12.2, before the reader receives the first random access request, the communication method may further include: The access network device sends a first operation task request message to the reader. Correspondingly, the reader receives the first operation task request message from the access network device, where the first operation task request message includes the task identifier. The reader broadcasts a second random access request based on the operation task request message. After the reader determines the second identifier as the first identifier, the reader stores a first context of the first terminal device, where the first context includes the task identifier and the first identifier.

For the first operation request message and the task identifier, refer to the foregoing related descriptions. Details are not described herein again.

In other words, after the reader determines the second identifier as the first identifier, the reader may associate the first identifier with the task identifier (or the task). In this case, there is a correspondence between the task identifier and the first identifier, and there is a correspondence between the first identifier and the second identifier. The reader may maintain the two correspondences. In addition, the first context may include at least one of the following: the first identifier, the second identifier, the task identifier, the correspondence between the task identifier and the first identifier, or the correspondence between the first identifier and the second identifier. For example, the first context includes the first identifier and the task identifier, or the first context includes the correspondence between the first identifier and the task identifier.

In this embodiment of this application, the reader stores the first context including the task identifier and the first identifier, so that the core network element or the access network device can manage, via the task identifier, the operation task indicated by the task identifier. For example, after the operation task is completed, the reader is indicated to delete a context including the task identifier, to delete the entire context that is of the terminal device and corresponds to the completed operation task. In this way, the core network element or the access network device can manage the reader at a task granularity.

Further, after the reader stores the first context of the first terminal device, the communication method may further include: The access network device sends the task identifier and third indication information to the reader. Correspondingly, the reader receives the task identifier and the third indication information from the access network device, where the third indication information indicates the reader to delete a context including the task identifier. The reader deletes the first context based on the task identifier and the third indication information.

It may be understood that, for a specific implementation in which the reader deletes the first context based on the third indication information, refer to the foregoing related descriptions for understanding. Details are not described herein again. In addition, in this embodiment of this application, the reader may alternatively periodically delete the first context. For details, refer to the foregoing related descriptions. Details are not described herein again.

Optionally, with reference to the foregoing embodiment, for Case 12.3, after the access network device allocates the third identifier to the first terminal device based on the first identifier, the communication method may further include: The access network device stores a second context of the first terminal device, where the second context includes the first identifier and the third identifier.

The second context may be understood as all information related to the first terminal device, or the second context may be understood as a part of information related to the first terminal device, for example, the correspondence between the first identifier and the third identifier. It may be understood that, in the second context, there is the correspondence between the first identifier and the third identifier, in other words, the second context may include the correspondence between the first identifier and the third identifier. In this case, the second context may include at least one of the following: the first identifier, the third identifier, or the correspondence between the first identifier and the third identifier. In this way, after receiving a message carrying the third identifier, the reader can determine the first identifier based on the second context, for example, the third identifier and the correspondence between the first identifier and the third identifier, to send related information of the first terminal device to the reader based on the first identifier.

Further, the second operation request message further includes second indication information, and the second indication information indicates the access network device to delete the context of the first terminal device after the access network device completes an operation on the first terminal device.

After receiving the second operation request message, the access network device may delete (or release) the second context after completing the operation on the first terminal device. In different cases, time points at which the access network device completes the operation on the first terminal device are different. For details, refer to the foregoing related descriptions in the embodiment shown in FIG. 5 for understanding. Details are not described herein again.

In this embodiment of this application, the access network device deletes (or releases) the second context based on the second indication information after completing the operation on the first terminal device, so that the reader can release storage space in time, thereby avoiding redundancy and improving storage efficiency.

It may be understood that, in addition to deleting the second context based on the second indication information, the access network device may alternatively periodically delete the context of the first terminal device; the access network device may alternatively delete the second context based on an indication of a device other than the core network element; or the access network device may alternatively autonomously determine whether the operation on the first terminal device is completed, and delete the second context after determining that the operation on the first terminal device is completed. For details, refer to the foregoing related descriptions in Embodiment 5. Details are not described herein again.

Further, when storing the second context, the access network device may further associate the second context with an operation task. In this case, when storing the second context, the access network device may further store a task identifier of the operation task. For the task identifier, refer to the foregoing related descriptions. Details are not described herein again. It may be understood that there is a correspondence between the task identifier, the first identifier, and the third identifier, that is, there is a correspondence between the task identifier and the first identifier, and there is a correspondence between the first identifier and the third identifier. In addition, the access network device may maintain the correspondences. In this case, the second context may include at least one of the following: the first identifier, the third identifier, the task identifier, the correspondence between the first identifier and the third identifier, or the correspondence between the first identifier and the task identifier.

For example, the second context further includes the task identifier, and before the access network device receives the first identifier and the first information, the communication method may further include: The core network element sends a second operation task request message to the access network device. Correspondingly, the access network device receives the second operation task request message from the core network element, where the second operation task request message includes the task identifier. The access network device sends a first operation task request message to the reader based on the second task request message, where the first operation task request message includes the task identifier.

For the first operation task request message and the task identifier, refer to the foregoing related descriptions. Details are not described herein again. It may be understood that the core network element may obtain the task identifier from the service requester. For details, refer to the foregoing related descriptions in the embodiment shown in FIG. 5. Details are not described herein again. The second operation task request message is used to request to perform operations on the plurality of terminal devices, for example, perform a read operation, a write operation, and the like on the terminals. In addition, the second operation task request message may further indicate the access network device to store a context of a terminal device on which an operation needs to be performed, for example, the foregoing second context.

In this embodiment of this application, the core network element sends, to the access network device, the second operation task request message carrying the task identifier, so that the core network element can manage, via the task identifier, the operation task indicated by the task identifier. For example, after the operation task is completed, the core network element indicates the access network device to delete a context including the task identifier, to delete the entire context that is of the terminal device and corresponds to the completed operation task. In this way, the core network element can manage the access network device at a task granularity.

Further, after the access network device stores the second context of the first terminal device, the communication method may further include: After determining that the operation task indicated by the task identifier is completed, the core network element sends the task identifier and fourth indication information to the access network device. Correspondingly, the access network device receives the task identifier and the fourth indication information from the core network element, where the fourth indication information indicates the access network device to delete a context including the task identifier. The access network device deletes the second context based on the task identifier and the fourth indication information.

The core network element may send the fourth indication information to the access network device when determining that the operation task is completed. There are a plurality of manners in which the core network element determines that the operation is completed. For example, when determining that an operation result corresponding to each terminal device in the received operation task is received, the core network element may determine that the operation task is completed. For another example, after sending an operation instruction to each terminal device in the operation task, the core network device may determine that the operation task is completed. For details, refer to the foregoing related descriptions in the embodiment shown in FIG. 5 for understanding. For example, the core network device in the embodiment shown in FIG. 5 is replaced with the core network element for understanding. Details are not described herein again. In this way, after the operation task is completed, the core network element can indicate the access network device to delete contexts that are of the plurality of terminal devices and correspond to the operation task, to manage the entire task.

It may be understood that the core network element may alternatively send the task identifier and the fourth indication information to the access network device when receiving deletion indication information from the service requester. For details, refer to the foregoing related descriptions in the embodiment shown in FIG. 5 for understanding. For example, the core network device in the embodiment shown in FIG. 5 is replaced with the core network element for understanding. Details are not described herein again.

It may be further understood that after determining that the operation task indicated by the task identifier is completed, the core network element may delete (or release) the context of the first terminal device. The context of the first terminal device may include at least one of the following: the third identifier, the first information, the task identifier, an identifier of the access network device, or the identifier of the reader. For details, refer to the foregoing related descriptions. Details are not described herein again. In this way, the core network element can release the context of the first terminal device in time, thereby avoiding redundancy and improving storage efficiency.

In addition, the access network device may alternatively periodically delete the second context. For details, refer to the foregoing related descriptions. Details are not described herein again.

Optionally, for Case 12.4, before the access network device receives the first identifier and the first information, the communication method may further include: The core network element sends a second operation task request message to the access network device. Correspondingly, the access network device receives the second operation task request message from the core network element, where the second operation task request message includes the task identifier. The access network device sends a first operation task request message to the reader based on the second task request message. Correspondingly, the reader receives the first operation task request message, where the first operation task request message includes the task identifier. After the access network device determines the first identifier as the third identifier, the access network device stores a second context of the first terminal device, where the second context includes the task identifier and the third identifier.

For the second operation task request message, the first operation task request message, and the task identifier, refer to the foregoing related descriptions. Details are not described herein again.

In other words, after the access network device determines the first identifier as the third identifier, the access network device may associate the third identifier with the task identifier (or the task). In this case, there is a correspondence between the task identifier and the third identifier, and there is a correspondence between the third identifier and the first identifier. The access network device may maintain the two correspondences. In addition, the second context may include at least one of the following: the first identifier, the third identifier, the task identifier, the correspondence between the task identifier and the third identifier, or the correspondence between the third identifier and the first identifier. For example, the second context includes the task identifier and the third identifier, or the second context includes the correspondence between the task identifier and the third identifier.

In this embodiment of this application, the access network device stores the second context including the task identifier and the third identifier. In this way, the core network element can manage, via the task identifier, the operation task indicated by the task identifier. For example, after the operation task is completed, the core network element indicates the access network device to delete a context including the task identifier, to delete the entire context that is of the terminal device and corresponds to the completed operation task. In this way, the core network element can manage the access network device at a task granularity.

Further, after the access network device stores the second context of the first terminal device, the communication method may further include: After determining that the operation task indicated by the task identifier is completed, the core network element sends the task identifier and fourth indication information to the access network device. Correspondingly, the access network device receives the task identifier and the fourth indication information from the core network element, where the fourth indication information indicates the access network device to delete a context including the task identifier. The access network device deletes the second context based on the task identifier and the fourth indication information.

It may be understood that, for a specific implementation in which the access network device deletes the second context based on the fourth indication information, refer to the foregoing related descriptions for understanding. Details are not described herein again. In addition, in this embodiment of this application, the access network device may alternatively periodically delete the second context. For details, refer to the foregoing related descriptions. Details are not described herein again.

It should be understood that, in this embodiment of this application, the context (context) is merely a data storage form. A specific storage form of the task identifier and the correspondence between the foregoing identifiers and a specific storage form of the foregoing identifier and the task identifier are not limited in this embodiment of this application. In addition, the NAS message (or information) in this embodiment of this application may be an AIoT NAS message (or information).

In addition, in this embodiment of this application, names of the messages, the instructions, the signaling layers, the protocol layers, and the identifiers are merely an example expression, and the messages, the instructions, the signaling layers, the protocol layers, and the identifiers may also be replaced with any possible expression. This is not limited in embodiments of this application. In addition, the instruction in embodiments of this application may alternatively be replaced with an information element, information, or a message. This may be specifically set based on an actual situation, and is not limited.

The foregoing describes, with reference to the method embodiment, the overall procedure of the communication method provided in embodiments of this application. For ease of understanding, the following describes the foregoing method by using fourth specific scenarios.

### Scenario 1:

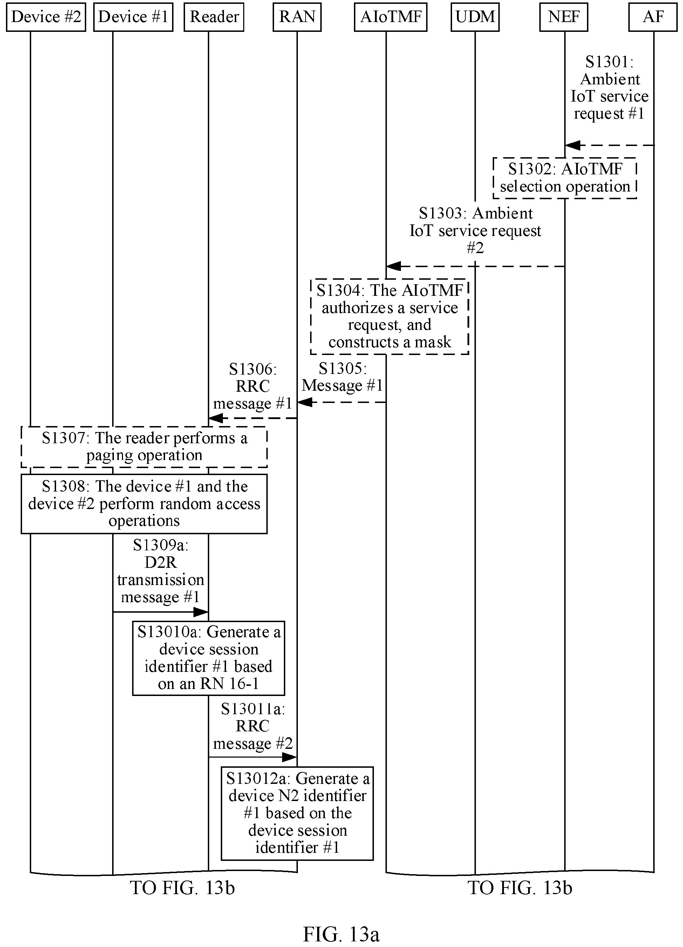

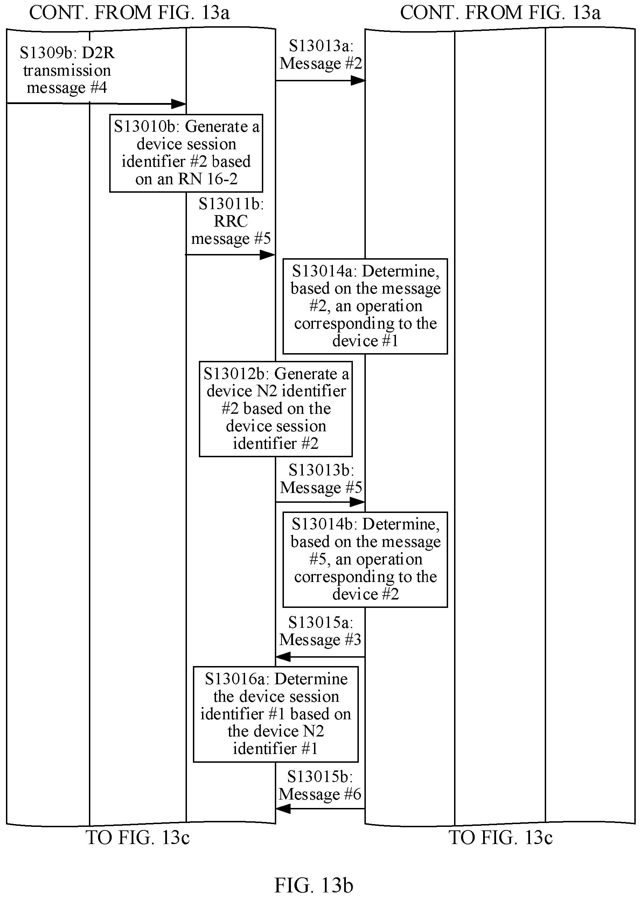

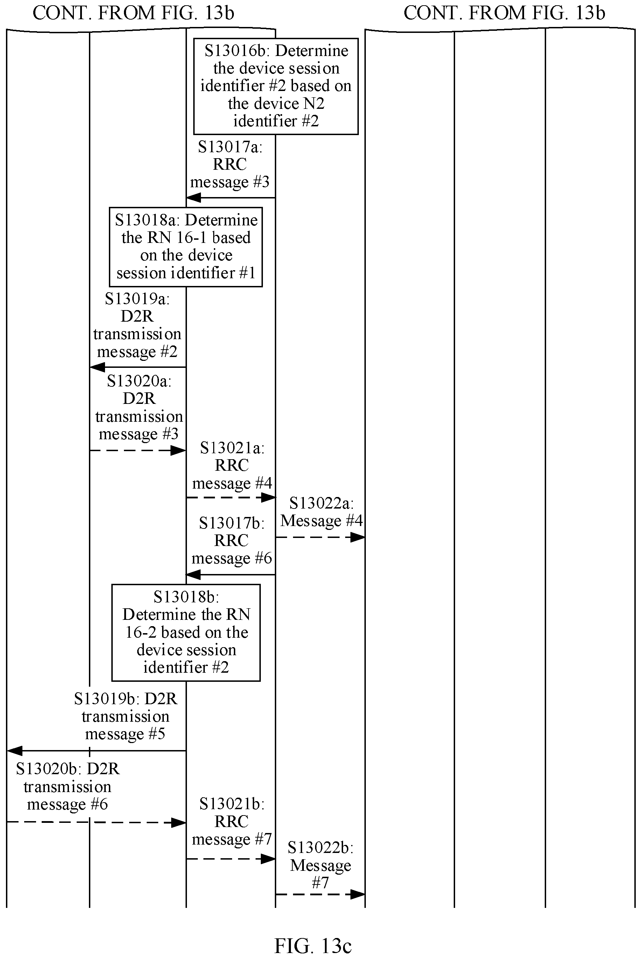

FIG. 13a to FIG. 13c are a schematic flowchart 6 of a communication method according to an embodiment of this application. The method is applicable to the communication system shown in FIG. 10, and mainly relates to interaction between a device #1 (the foregoing first terminal device), a device #2, a reader, a RAN (the foregoing access network device), an AIoTMF (the foregoing core network element), a UDM, an NEF, and an AF. In Scenario 1, when the AF needs to perform operations on the device #1 and the device #2, the reader allocates a temporarily used identifier to the device based on an identifier in a random access request sent by the device (the device #1 or the device #2), and the RAN allocates a new temporary identifier to the device based on the identifier, to complete an operation on the device by identifying uplink and downlink signaling via the temporary identifier.

S1301: The AF sends an ambient IoT service request 1 to the NEF. Correspondingly, the NEF receives the ambient IoT service request 1 from the AF.

The AF is a service requester, and the AF may also be replaced with an AS. This may be specifically set according to an actual situation, and is not limited.

The ambient IoT service request #1 includes at least one of the following: an identifier of a service requester (for example, an identifier of an AF or an IP address/port number of the AF), a target reader set (a target set ID or a reader ID(s)), a device list, geographical location information (such as a coordinate value, longitude and latitude, or tracking area information), or an instruction parameter. The target reader set indicates one or more readers. The device list indicates devices on which operations need to be performed, and the device list includes an identifier of the device #1 and an identifier of the device #2. The geographical location information indicates a geographical location of UE on which the AF requests an operation. The instruction parameter includes a related parameter of an operation that needs to be performed on the device, for example, a write operation or a read operation.

S1302: The NEF performs an AIoTMF selection operation.

In other words, the NEF selects, from at least one AIoTMF, an AIoTMF that performs an operation. For example, the NEF may select, based on the geographical location information, the identifier of the service requester, and the target reader set, the AIoTMF that performs the operation.

S1303: The NEF sends an ambient IoT service request 2 to the AIoTMF. Correspondingly, the AIoTMF receives the ambient IoT service request 2 from the NEF.

The ambient IoT service request #2 includes at least one of the following: an identifier of a service requester (for example, an identifier of an AF or an IP address/port number of the AF), a target reader set (a target set ID or a reader ID(s)), geographical location information (such as a coordinate value, longitude and latitude, or tracking area information), or an instruction parameter. For each parameter, refer to the foregoing related descriptions in "S1301". Details are not described herein again.

S1304: The AIoTMF authorizes a service request, and constructs a mask.

In other words, the AIoTMF may authorize a current service request, and determine a subsequently used mask.

Authorizing the current service operation request may be understood as follows: The AIoTMF determines whether the service requester requesting an operation has permission to operate the device list, and/or whether the parameter provided by the service requester complies with subscription information of the service requester and/or subscription information of one or more devices in the list of devices requesting operations.

Determining the subsequently used mask may be understood as follows: The AIoTMF determines the subsequently used mask based on one or more of the identifier of the service requester, an identifier of a user to which a device requesting an operation belongs, an identifier of a home network of the device requesting the operation, and identifier information of the device requesting the operation. The mask is used to enable a device that meets the mask to randomly access the reader in a paging operation initiated by the reader.

Optionally, the AIoTMF performs a reader selection operation.

If the ambient IoT service request #2 includes the target reader set, the AIoTMF may select, based on the target reader set, a reader that executes a current task.

For example, when the AIoTMF stores reader information corresponding to the target reader set, the AIoTMF may select, based on the stored reader information corresponding to the target reader set, a reader that executes a current task. Alternatively, the AIoTMF may obtain, from a UDM/UDR, reader information corresponding to the target reader set, and select, based on the obtained reader information corresponding to the target reader set, a reader that executes a current task. Alternatively, if the target reader set is the reader ID(s), the AIoTMF may directly determine a reader based on the target reader set.

If the IoT service request #2 does not include the target reader set, the AIoTMF may determine, based on the geographical location information for the requested operation, a reader that executes a current task. For example, the AIoTMF determines, based on location information of a reader and the geographical location information, a reader that executes a current task.

S1305: The AIoTMF sends a message #1 to the RAN. Correspondingly, the RAN receives the message #1 from the AIoTMF.

The message #1 includes at least one of the following: a task identifier, the mask, or an operation instruction #11. The task identifier identifies an operation corresponding to the operation request #2. For details, refer to the foregoing related descriptions in the embodiment shown in FIG. 12. Details are not described herein again. The operation instruction #11 is used to subsequently trigger the reader to initiate a paging operation.

It may be understood that, if the AIoTMF does not select a reader in S1305, the message #1 further carries the geographical location information and/or the target reader set. In this case, the RAN selects, based on the geographical location information and/or the target reader set, a reader that executes a current task.

S1306: The RAN sends an RRC message #1 to the reader. Correspondingly, the reader receives the RRC message #1 from the RAN.

The foregoing reader is the reader that executes the current task, and the reader belongs to at least one reader indicated by the target reader set.

The RRC message #1 includes at least one of the following: the task identifier, the mask, or the operation instruction #11. The operation instruction #11 may be used to trigger the reader to initiate the paging operation.

S1307: The reader performs the paging operation.

The reader broadcasts a paging message, where the paging message carries the mask.

S1308: The device #1 and the device #2 perform random access operations.

The following describes, through S1309a to S13013a, a specific process in which the device #1 performs a random access operation, and describes, through S1304a to S13022a, a specific process in which the device #1 undergoes an operation. In addition, a specific process in which the device #2 performs a random access operation is described through S1309b to S13013b, and a specific process in which the device #1 undergoes an operation is described through S1304b to S13022b.

It may be understood that S1309a and S1309b may be performed simultaneously, or may be performed in sequence. For example, S1309a is performed before S1309b, or S1309b is performed before S1309a. This may be specifically set based on an actual situation, and is not limited. In addition, random access procedures and procedures of performing the operations on the device #1 and the device #2 may be performed in parallel, that is, the related operations of the device #2 do not need to be performed only after the operations on the device #1 are completed. For details, refer to a sequence of the steps in FIG. 13a to FIG. 13c for understanding. Details are not described herein again.

S1309a: The device #1 sends a D2R (Device to Reader) transmission message #1 to the reader. Correspondingly, the reader receives the D2R (Device to Reader) transmission message #1 from the device #1.

The D2R transmission message #1 includes an RN 16-1 and the identifier (denoted as an identifier #1) of the device #1. The identifier #1 is carried in an AIoT NAS message (or information). In addition, the identifier #1 corresponds to the foregoing first information, and the RN 16-1 corresponds to the foregoing second identifier.

S13010a: The reader generates a device session identifier (device session ID) #1 based on the RN 16-1.

The device session identifier #1 corresponds to the foregoing first identifier.

In addition, the reader maintains a correspondence between the RN 16-1 and the device session identifier #1. The correspondence may be stored in a temporary context of the reader, for example, a context obtained through indexing based on the task identifier, or a context obtained through indexing based on the RN 16-1/device session identifier #1.

S13011a: The reader sends an RRC message #2 to the RAN. Correspondingly, the RAN receives the RRC message #2 from the reader.

The RRC message #2 includes at least one of the following: the device session identifier #1, the task identifier, or the identifier #1. The identifier #1 is carried in the AIoT NAS message (or information).

S13012a: The RAN generates a device N2 identifier #1 based on the device session identifier #1.

The device N2 identifier #1 corresponds to the foregoing third identifier.

In addition, the RAN maintains a correspondence between the session identifier #1 and the device N2 identifier #1. The correspondence may be stored in a temporary context of the RAN, for example, a context obtained through indexing based on the task identifier, or a context obtained through indexing based on the device N2 identifier #1/device session identifier #1.

S13013a: The RAN sends a message #2 to the AIoTMF. Correspondingly, the AIoTMF receives the message #2 from the RAN.

The message #2 includes at least one of the following: the device N2 identifier #1, the task identifier, an identifier (for example, an AIoT NGAP ID) of the reader, or the identifier #1.

S13014a: The AIoTMF determines, based on the message #2, an operation corresponding to the device #1.

In other words, the AIoTMF may determine, based on the identifier #1 and/or the task identifier, an operation that needs to be performed on the device #1.

In addition, the AIoTMF stores a correspondence between the identifier #1, the device N2 identifier #1, and the identifier of the reader, and the correspondence may be stored in a context of the device #1.

S13015a: The AIoTMF sends a message #3 to the RAN. Correspondingly, the RAN receives the message #3 from the AIoTMF.

The message #3 includes at least one of the following: the device N2 identifier #1, the identifier of the reader, the task identifier, or the operation instruction #1. The identifier of the reader corresponds to the identifier of the foregoing reader.

S13016a: The RAN determines the device session identifier #1 based on the device N2 identifier #1.

The RAN determines the device session identifier #1 based on a correspondence between the device N2 identifier #1 and the device session identifier #1. For example, the RAN may obtain a correspondence between the device N2 identifier #1 and the device session identifier #1 through indexing based on the task identifier, and determine the device session identifier #1 based on the correspondence. Alternatively, the RAN may obtain a temporary context of the device #1 on the RAN through indexing based on the device N2 identifier #1, determine a correspondence between the device N2 identifier #1 and the device session identifier #1 based on the temporary context, and determine the device session identifier #1 based on the correspondence.

S13017a: The RAN sends an RRC message #3 to the reader. Correspondingly, the reader receives the RRC message #3 from the RAN.

The RRC message #3 includes at least one of the following: the device session identifier #1, the operation instruction #1, or the task identifier. The RRC message #3 corresponds to the foregoing first operation request message.

S13018a: The reader determines the RN 16-1 based on the device session identifier #1.

The reader may determine the RN 16-1 based on a correspondence between the device session identifier #1 and the RN 16-1. For example, the reader may obtain a correspondence between the device session identifier #1 and the RN 16-1 through indexing based on the task identifier, and determine the RN 16-1 based on the correspondence. Alternatively, the reader may obtain a temporary context of the device #1 on the reader through indexing based on the device session identifier #1, determine a correspondence between the device session identifier #1 and the RN 16-1 based on the temporary context, and determine the RN 16-1 based on the correspondence.

S13019a: The reader sends a D2R transmission message #2 to the device #1. Correspondingly, the device #1 receives the D2R transmission message #2 from the reader.

The D2R transmission message #2 includes the operation instruction #1. In this case, the reader may determine a frequency band and a frequency that correspond to the RN 16-1, and send the D2R transmission message #2 based on the frequency band and the frequency.

Optionally, the D2R transmission message #2 further includes the RN 16-1.

S13020a: The device #1 sends a D2R transmission message #3 to the reader. Correspondingly, the reader receives the D2R transmission message #3 from the device #1.

The D2R transmission message #3 includes an operation result #1. The operation result #1 indicates a result of the device #1 performing the operation indicated by the operation instruction.

Optionally, the D2R transmission message #3 further includes the RN 16-1.

S13021a: The reader sends an RRC message #4 to the RAN. Correspondingly, the RAN receives the RRC message #4 from the reader.

The RRC message #4 includes at least one of the following: the device session identifier #1, the operation result #1, or the task identifier.

S13022a: The RAN sends a message #4 to the AIoTMF. Correspondingly, the AIoTMF receives the message #4 from the RAN.

The message #4 includes at least one of the following: the device N2 identifier #1 or the operation result #1.

S1309b: The device #2 sends a D2R transmission message #4 to the RAN. Correspondingly, the RAN receives the D2R transmission message #4 from the device #2.

The D2R transmission message #4 includes an RN 16-2 and the identifier (denoted as an identifier #2) of the device #2. The identifier #2 is carried in an AIoT NAS message (or information). In addition, the identifier #2 corresponds to the foregoing first information, and the RN 16-2 corresponds to the foregoing second identifier.

S13010b: The RAN generates a device session identifier #2 based on the RN 16-2.

The device session identifier #2 corresponds to the foregoing first identifier.

S13011b: The reader sends an RRC message #5 to the RAN. Correspondingly, the RAN receives the RRC message #5 from the reader.

The RRC message #5 includes at least one of the following: the device session identifier #2, the task identifier, or the identifier #2. The identifier #2 is carried in the AIoT NAS message (or information).

S13012b: The RAN generates a device N2 identifier #2 based on the device session identifier #2.

The device N2 identifier #2 corresponds to the foregoing third identifier.

In addition, the RAN maintains a correspondence between the session identifier #2 and the device N2 identifier #2. The correspondence may be stored in a temporary context of the RAN, for example, a context obtained through indexing based on the task identifier, or a context obtained through indexing based on the device N2 identifier #2/device session identifier #2.

S13013b: The RAN sends a message #5 to the AIoTMF. Correspondingly, the AIoTMF receives the message #5 from the RAN.

The message #5 includes at least one of the following: the device N2 identifier #2, the task identifier, the identifier of the reader, or the identifier #2.

S13014b: The AIoTMF determines, based on the message #5, an operation corresponding to the device #2.

In other words, the AIoTMF may determine, based on the identifier #2 and/or the task identifier, an operation that needs to be performed on the device #2.

In addition, the AIoTMF stores a correspondence between the identifier #2, the device N2 identifier #2, and the identifier of the reader, and the correspondence may be stored in a context of the device #2.

S13015b: The AIoTMF sends a message #6 to the RAN. Correspondingly, the RAN receives the message #6 from the AIoTMF.

The message #6 includes at least one of the following: the device N2 identifier #2, the identifier of the reader, the task identifier, or an operation instruction #2.

S13016b: The RAN determines the device session identifier #2 based on the device N2 identifier #2.

The RAN determines the device session identifier #2 based on a correspondence between the device N2 identifier #2 and the device session identifier #2. For example, the RAN may obtain a correspondence between the device N2 identifier #2 and the device session identifier #2 through indexing based on the task identifier, and determine the device session identifier #2 based on the correspondence. Alternatively, the RAN may obtain a temporary context of the device #2 on the RAN through indexing based on the device N2 identifier #2, determine a correspondence between the device N2 identifier #1 and the device session identifier #1 based on the temporary context, and determine the device session identifier #2 based on the correspondence.

S13017b: The RAN sends an RRC message #6 to the reader. Correspondingly, the reader receives the RRC message #6 from the RAN.

The RRC message #6 includes at least one of the following: the device session identifier #2, the operation instruction #2, or the task identifier. The RRC message #6 corresponds to the foregoing second operation request message.

S13018b: The reader determines the RN 16-2 based on the device session identifier #2.

The reader may determine the RN 16-2 based on a correspondence between the device session identifier #2 and the RN 16-2. For example, the reader may obtain a correspondence between the device session identifier #2 and the RN 16-2 through indexing based on the task identifier, and determine the RN 16-2 based on the correspondence. Alternatively, the reader may obtain a temporary context of the device #2 on the reader through indexing based on the device session identifier #2, determine a correspondence between the device session identifier #2 and the RN 16-2 based on the temporary context, and determine the RN 16-2 based on the correspondence.

S13019b: The reader sends a D2R transmission message #5 to the device #2. Correspondingly, the device #2 receives the D2R transmission message #5 from the reader.

The D2R transmission message #5 includes the operation instruction #2. In this case, the reader may determine a frequency band and a frequency that correspond to the RN 16-2, and send the D2R transmission message #5 based on the frequency band and the frequency.

Optionally, the D2R transmission message #5 further includes the RN 16-2.

S13020b: The device #2 sends a D2R transmission message #6 to the reader. Correspondingly, the reader receives the D2R transmission message #6 from the device #2.

The D2R transmission message #6 includes an operation result #2, and the operation result #2 indicates a result of the device #2 performing an operation indicated by the operation instruction.

Optionally, the D2R transmission message #6 further includes the RN 16-1.

S13021b: The reader sends an RRC message #7 to the RAN. Correspondingly, the RAN receives the RRC message #7 from the reader.

The RRC message #7 includes at least one of the following: the device session identifier #2, the operation result #2, or the task identifier.

S13022b: The RAN sends a message #7 to the AIoTMF. Correspondingly, the AIoTMF receives the message #7 from the RAN.

The message #7 includes at least one of the following: the device N2 identifier #2 or the operation result #2.

It may be understood that specific implementations of S1309a to S13002a are similar to specific implementations of S1309b to S13002b. Mutual reference may be made for understanding, and details are not described herein again. In addition, for S1301 to S13022b, refer to the foregoing related descriptions of the embodiment shown in FIG. 12. Details are not described herein again. In addition, the foregoing messages (for example, the RRC message and the D2R message) may be replaced with other types of messages based on an actual situation. This is not limited.

It may be further understood that, in Scenario 1, the AIoTMF may further interact with the RAN via an AMF. In this case, the AIoTMF may send, to the AMF, information sent by the NEF. In addition, after receiving the information from the AIoTMF, the AMF may send corresponding information to the RAN based on the information. Alternatively, after receiving information from the RAN, the AMF may send corresponding information to the AIoTMF based on the information.

For example, for S1303, in this case, the NEF may send the ambient IoT service request #2 to the AIoTMF. After receiving the ambient IoT service request #2, the AIoTMF may send an N1N2 transmission message to the AMF based on the ambient IoT service request #2, so that the AMF sends an N2 message to the RAN based on the N1N2 transmission message. The N1N2 transmission message may include at least one of the following: an identifier (for example, an SUPI) of the reader, a task identifier, a mask, or an operation instruction #11. The N2 message may include at least one of the following: an identifier (for example, a pair of a RAN NGAP UE ID and an AMF NGAP UE ID) of the reader, the task identifier, the mask, or the operation instruction #11.

It may be understood that the foregoing content is merely an example, and a specific implementation may be correspondingly set based on an actual situation. This is not limited herein.

### Scenario 2:

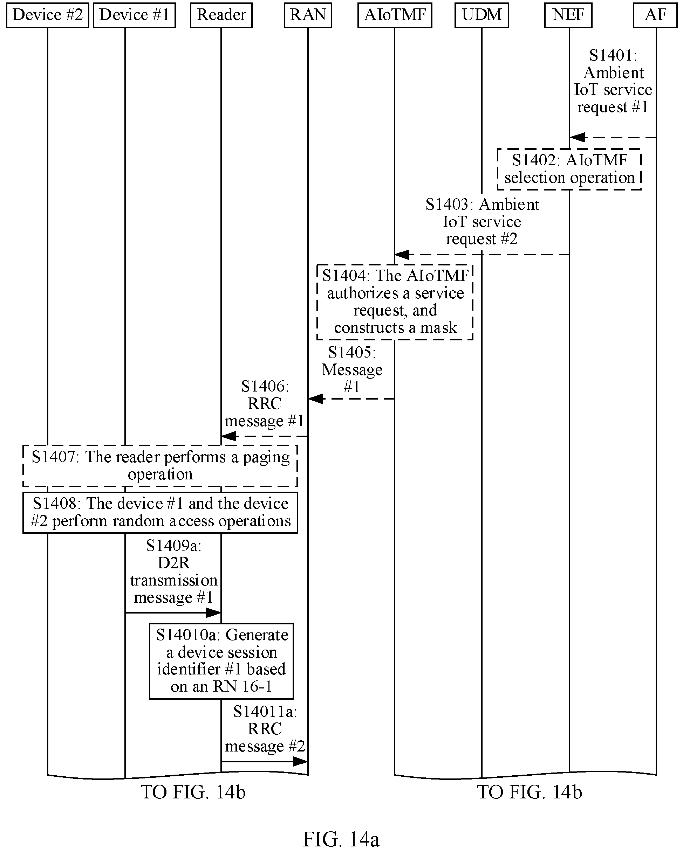

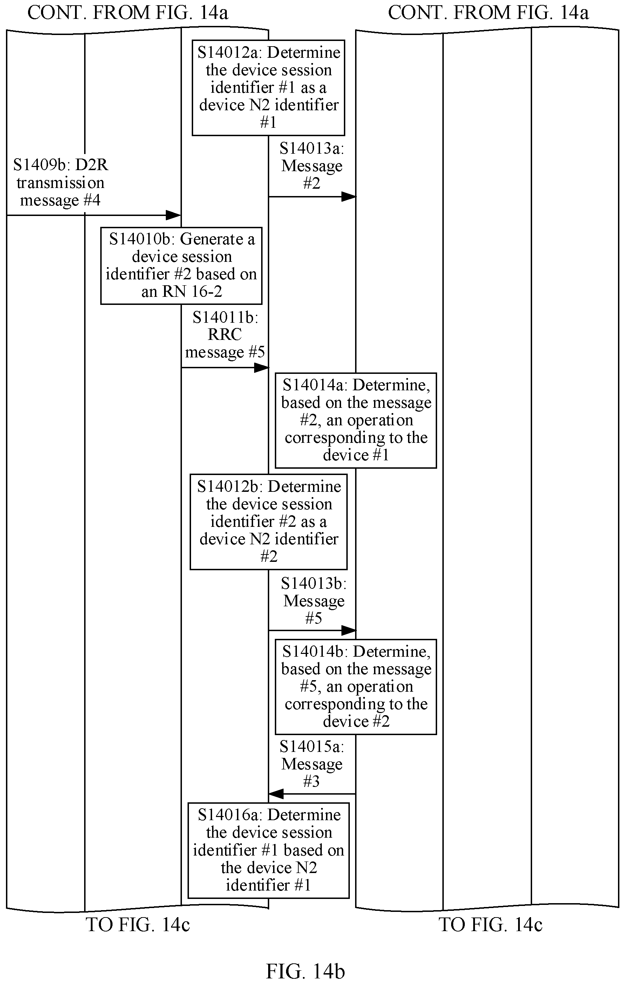

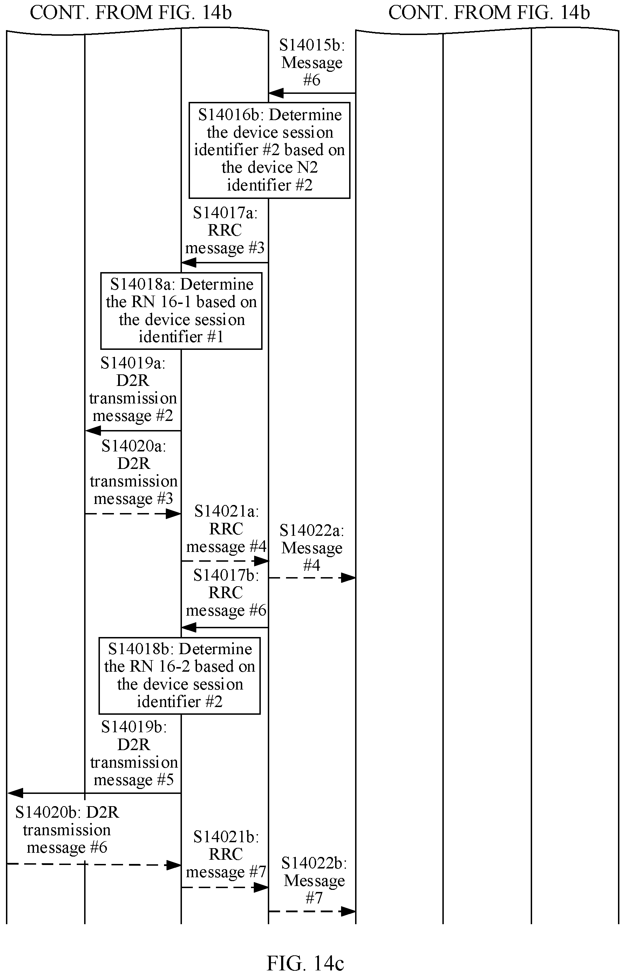

FIG. 14a to FIG. 14c are a schematic flowchart 7 of a communication method according to an embodiment of this application. The method is applicable to the communication system shown in FIG. 10, and mainly relates to interaction between a device #1 (the foregoing first terminal device), a device #2, a reader, a RAN (the foregoing access network device), an AIoTMF (the foregoing core network element), a UDM, an NEF, and an AF. In Scenario 2, when the AF needs to perform operations on the device #1 and the device #2, the reader allocates a temporarily used identifier to the device based on an identifier in a random access request sent by the device (the device #1 or the device #2), and the RAN may reuse the identifier, to complete an operation on the device by identifying uplink and downlink signaling via the temporary identifier.

It may be understood that the embodiment shown in FIG. 14a to FIG. 14c is similar to the embodiment shown in FIG. 13a to FIG. 13c, and a difference lies in that in the embodiment shown in FIG. 13a to FIG. 13c, after receiving a device session identifier (for example, the device session identifier #1 or the device session identifier #2) from the reader, the RAN generates a device N2 identifier (for example, the device N2 identifier #1 or the device N2 identifier #2) based on the device session identifier, for example, in S13012a and S13012b. However, in the embodiment shown in FIG. 14a to FIG. 14c, after receiving a device session identifier from the reader, the RAN may reuse the device session identifier, for example, in S14012a and S14012b shown in FIG. 14a to FIG. 14c. In addition, for steps other than S14012a and S14012b in the embodiment shown in FIG. 14a to FIG. 14c, refer to the related descriptions in the embodiment shown in FIG. 13a to FIG. 13c for understanding. Details are not described herein again.

### Scenario 3:

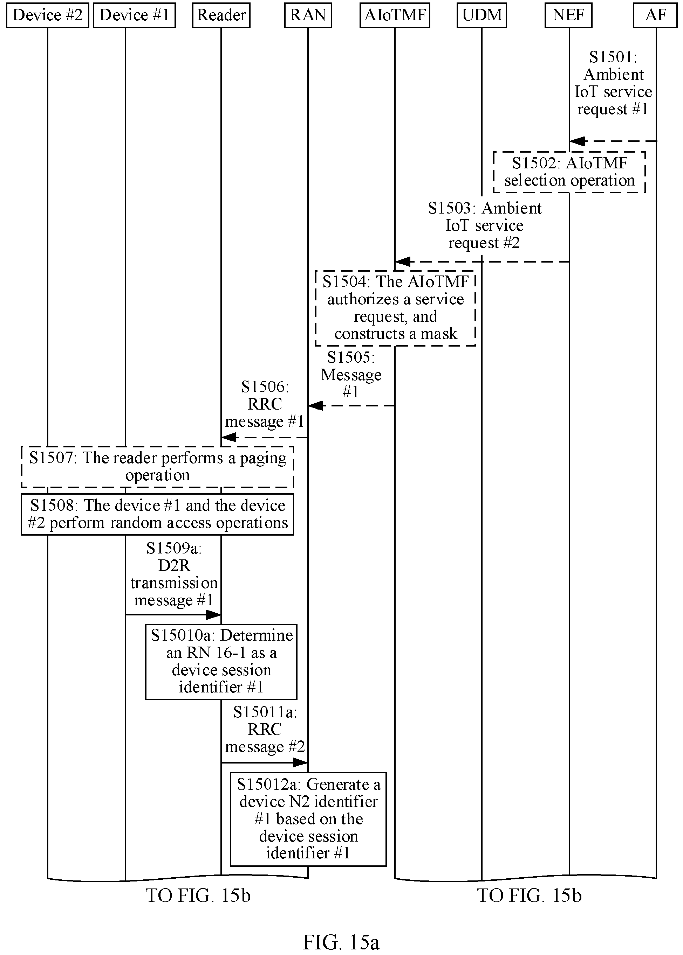

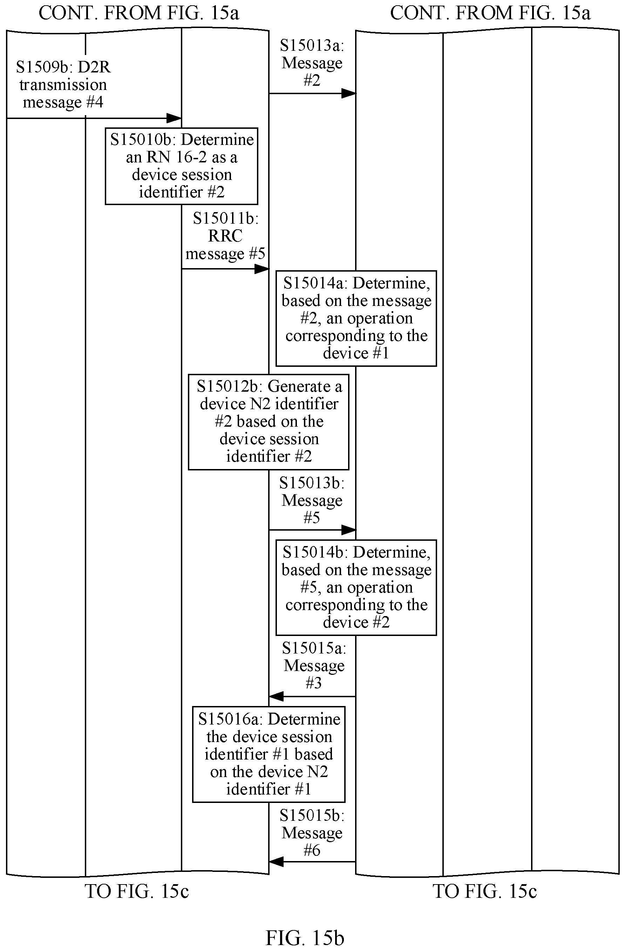

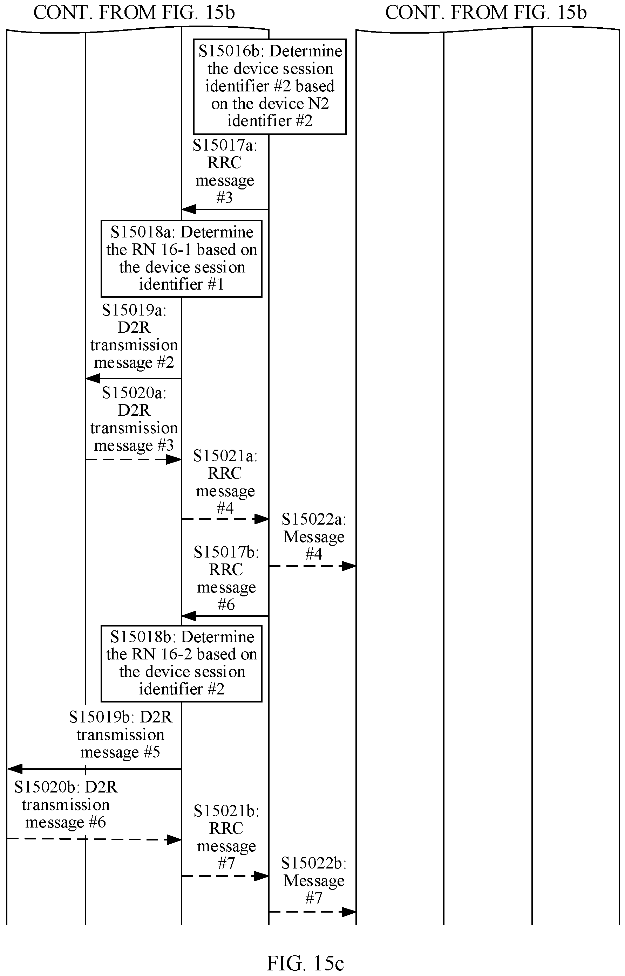

FIG. 15a to FIG. 15c are a schematic flowchart 8 of a communication method according to an embodiment of this application. The method is applicable to the communication system shown in FIG. 10, and mainly relates to interaction between a device #1 (the foregoing first terminal device), a device #2, a reader, a RAN (the foregoing access network device), an AIoTMF (the foregoing core network element), a UDM, an NEF, and an AF. In Scenario 3, when the AF needs to perform operations on the device #1 and the device #2, the reader reuses an identifier in a random access request sent by the device (the device #1 or the device #2), and the RAN allocates a new temporary identifier to the device based on the identifier, to complete an operation on the device by identifying uplink and downlink signaling via the temporary identifier.

It may be understood that the embodiment shown in FIG. 15a to FIG. 15c is similar to the embodiment shown in FIG. 13a to FIG. 13c, and a difference lies in that in the embodiment shown in FIG. 13a to FIG. 13c, after receiving an identifier (for example, the RN 16-1 or the RN 16-2) sent by the device in a random access request procedure, the reader generates a device session identifier (for example, the device session identifier #1 or the device session identifier #2) based on the identifier, for example, in S13010a and S13010b. However, in the embodiment shown in FIG. 14a to FIG. 14c, after receiving an identifier sent by the device in a random access request procedure, the reader may reuse the identifier, for example, in S15010a and S15010b shown in FIG. 15a to FIG. 15c. In addition, for steps other than S15010a and S15010b in the embodiment shown in FIG. 15a to FIG. 15c, refer to the related descriptions in the embodiment shown in FIG. 13a to FIG. 13c for understanding. Details are not described herein again.

### Scenario 4:

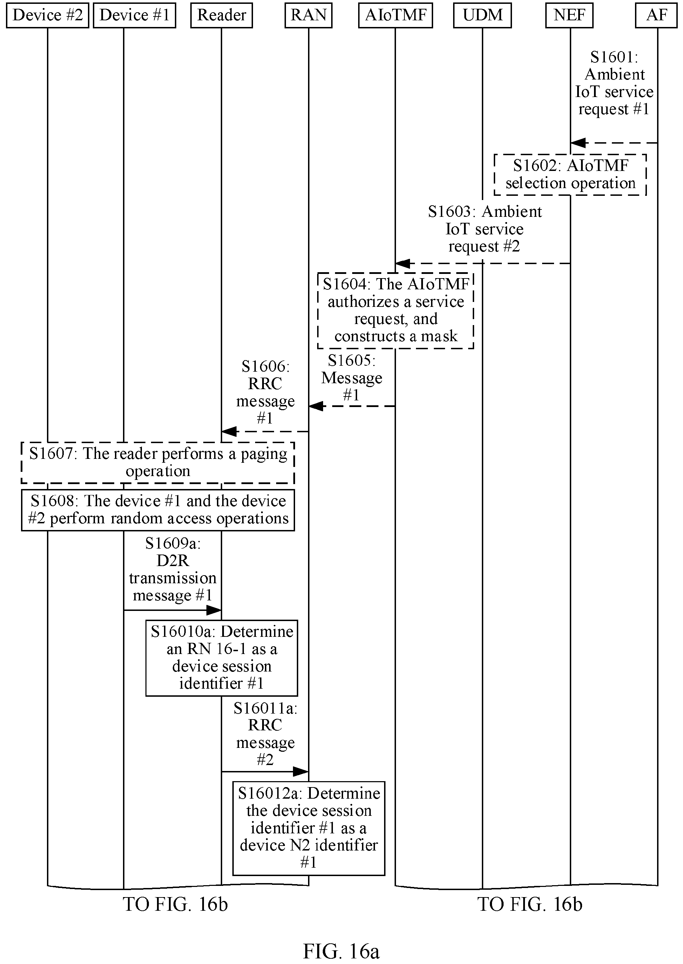

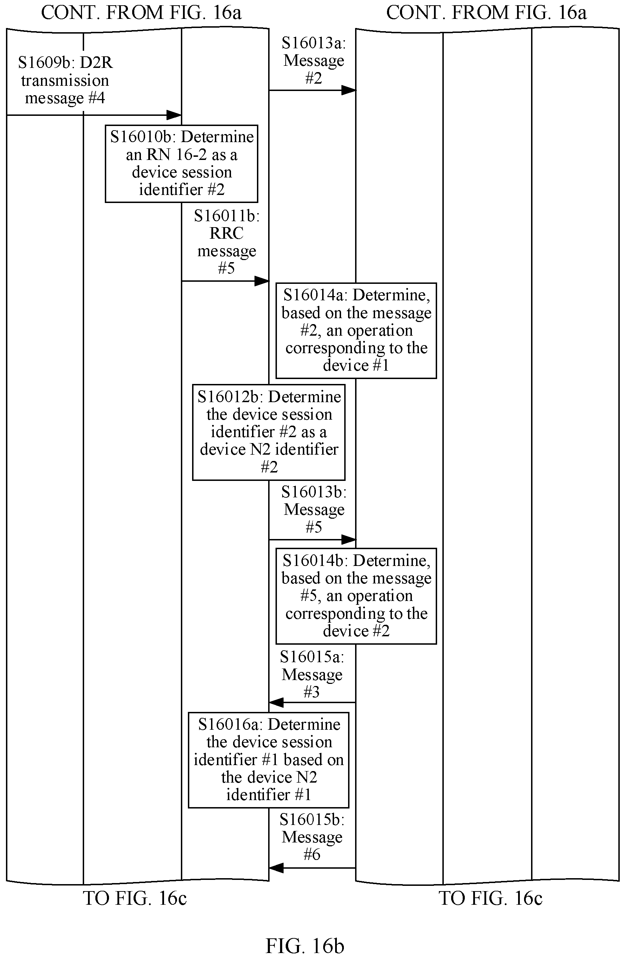

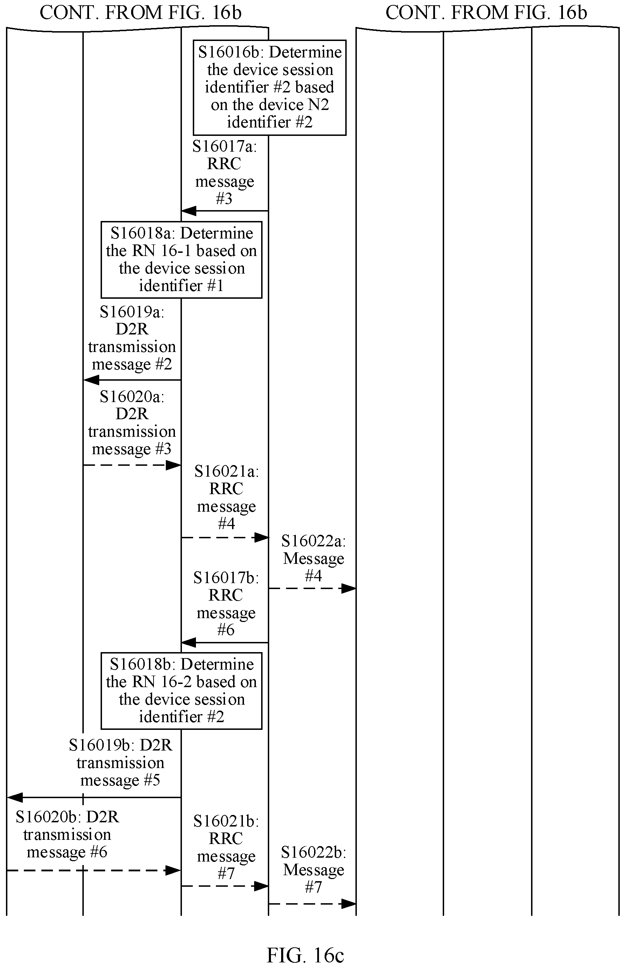

FIG. 16a to FIG. 16c are a schematic flowchart 8 of a communication method according to an embodiment of this application. The method is applicable to the communication system shown in FIG. 10, and mainly relates to interaction between a device #1 (the foregoing first terminal device), a device #2, a reader, a RAN (the foregoing access network device), an AIoTMF (the foregoing core network element), a UDM, an NEF, and an AF. In Scenario 4, when the AF needs to perform operations on the device #1 and the device #2, the reader and the RAN reuse an identifier in a random access request sent by the device (the device #1 or the device #2), to complete an operation on the device by identifying uplink and downlink signaling via the temporary identifier.

It may be understood that the embodiment shown in FIG. 16a to FIG. 16c is similar to the embodiment shown in FIG. 13a to FIG. 13c, and a difference lies in that after receiving an identifier (for example, the RN 16-1 or the RN 16-2) sent by the device in a random access request procedure, the reader generates a device session identifier (for example, the device session identifier #1 or the device session identifier #2) based on the identifier, for example, in S13010a and S13010b; and after receiving the device session identifier (for example, the device session identifier #1 or the device session identifier #2) from the reader, the RAN generates a device N2 identifier (for example, the device N2 identifier #1 or the device N2 identifier #2) based on the device session identifier, for example, in S13012a and S13012b. However, in the embodiment shown in FIG. 14a to FIG. 14c, after receiving an identifier sent by the device in a random access request procedure, the reader may reuse the identifier, for example, in S16010a and S16010b shown in FIG. 16a to FIG. 16c. After receiving a device session identifier from the reader, the RAN may reuse the device session identifier, for example, in S16012a and S16012b shown in FIG. 16a to FIG. 16c. In addition, for steps other than S16010a, S16010b, S16012a, and S16012b in the embodiment shown in FIG. 16a to FIG. 16c, refer to the related descriptions in the embodiment shown in FIG. 13a to FIG. 13c for understanding. Details are not described herein again.

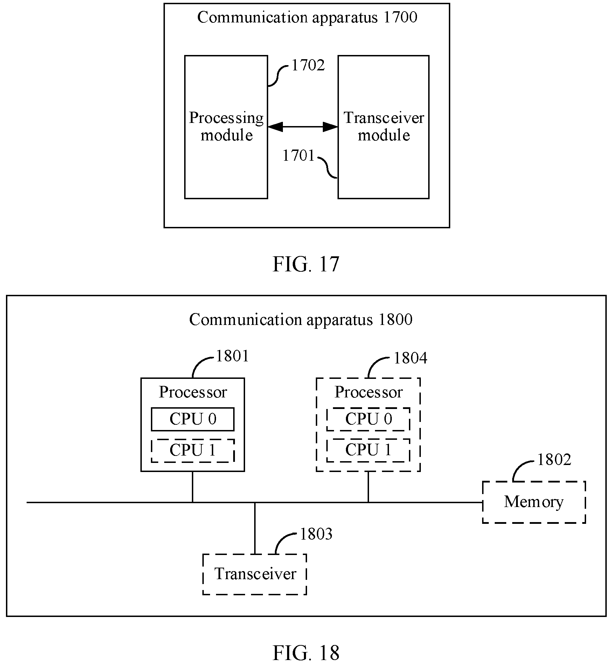

The communication methods provided in embodiments of this application are described above in detail with reference to FIG. 6 to FIG. 9a and FIG. 9b and FIG. 12 to FIG. 16a to FIG. 16c. Communication apparatus configured to perform the communication methods provided in embodiments of this application are described below in detail with reference to FIG. 17 and FIG. 18.

FIG. 17 is a diagram 1 of a structure of a communication apparatus according to an embodiment of this application. For example, as shown in FIG. 17, the communication apparatus 1700 includes a transceiver module 1701 and a processing module 1702. For ease of description, FIG. 17 shows only main components of the communication apparatus.

The transceiver module 1701 is configured to perform receiving and sending functions in the methods shown in FIG. 6 to FIG. 9a and FIG. 9b and FIG. 12 to FIG. 16a to FIG. 16c, and the processing module 1702 is configured to perform functions other than the receiving and sending functions in the methods shown in FIG. 6 to FIG. 9a and FIG. 9b and FIG. 12 to FIG. 16a to FIG. 16c.

Optionally, the transceiver module 1701 may include a sending module (not shown in FIG. 17) and a receiving module (not shown in FIG. 17). The sending module is configured to implement a sending function of the communication apparatus 1700, and the receiving module is configured to implement a receiving function of the communication apparatus 1700.

Optionally, the communication apparatus 1700 may further include a storage module (not shown in FIG. 17). The storage module stores a program or instructions. When the processing module 1702 executes the program or the instructions, the communication apparatus 1700 is caused to perform functions of the terminal device (for example, the reader) or the network device (for example, the access network device, the core network element, or the core network device) in the methods shown in FIG. 6 to FIG. 9a and FIG. 9b and FIG. 12 to FIG. 16a to FIG. 16c.

It may be understood that the communication apparatus 1700 may be a terminal device or a network device, or may be a chip (system) or another component or assembly that may be disposed in the terminal device or the network device, or may be an apparatus including the terminal device or the network device. This is not limited in this application.

In addition, for technical effects of the communication apparatus 1700, refer to the technical effects of the communication methods shown in FIG. 6 to FIG. 9a and FIG. 9b and FIG. 12 to FIG. 16a to FIG. 16c. Details are not described herein again.

FIG. 18 is a diagram 2 of a structure of a communication apparatus according to an embodiment of this application. For example, the communication apparatus may be a terminal device, an access network device, or a core network device, or may be a chip (system) or another component or assembly that can be disposed in the terminal device, the access network device, or the core network device. As shown in FIG. 18, the communication apparatus 1800 may include a processor 1801. Optionally, the communication apparatus 1800 may further include a memory 1802 and/or a transceiver 1803. The processor 1801 is coupled to the memory 1802 and the transceiver 1803, for example, may be connected through a communication bus.

Each component of the communication apparatus 1800 is described below in detail with reference to FIG. 18.

The processor 1801 is a control center of the communication apparatus 1800, and may be one processor, or may be a collective term of a plurality of processing elements. For example, the processor 1801 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 1801 may run or execute a software program stored in the memory 1802, and invoke data stored in the memory 1802, to perform various functions of the communication apparatus 1800, for example, perform the foregoing communication method.

During specific implementation, in an embodiment, the processor 1801 may include one or more CPUs, for example, a CPU 0 and a CPU 1 shown in FIG. 18.

During specific implementation, in an embodiment, the communication apparatus 1800 may alternatively include a plurality of processors, for example, the processor 1801 and a processor 1804 shown in FIG. 18. Each of these processors may be a single-core processor (single-CPU) or may be a multi-core processor (multi-CPU). The processor herein may be one or more devices, circuits, and/or processing cores configured to process data (for example, computer program instructions).

The memory 1802 is configured to store a software program for executing the solutions in this application, and the processor 1801 controls execution. For a specific implementation, refer to the foregoing method embodiments. Details are not described herein again.

Optionally, the memory 1802 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to: carry or store expected program code in a form of instructions or a data structure and that can be accessed by a computer, but is not limited thereto. The memory 1802 may be integrated with the processor 1801, or may exist independently, and is coupled to the processor 1801 through an interface circuit (not shown in FIG. 18) of the communication apparatus 1800. This is not specifically limited in embodiments of this application.

The transceiver 1803 is configured to communicate with another communication apparatus. For example, the communication apparatus 1800 is a terminal, and the transceiver 1803 may be configured to: communicate with a network apparatus or communicate with another terminal apparatus. For another example, the communication apparatus 1800 is a network apparatus, and the transceiver 1803 may be configured to: communicate with a terminal or communicate with another network apparatus.

Optionally, the transceiver 1803 may include a receiver and a transmitter (not separately shown in FIG. 18). The receiver is configured to implement a receiving function, and the transmitter is configured to implement a sending function.

Optionally, the transceiver 1803 may include a transmitter, a receiver, a radio frequency circuit, an antenna, and an input/output apparatus (not separately shown in FIG. 6). The transmitter is configured to implement a sending function. The receiver is configured to implement a receiving function. The radio frequency circuit is mainly configured to: perform conversion between a baseband signal and a radio frequency signal, and process the radio frequency signal. The antenna is mainly configured to: receive and send the radio frequency signal in a form of an electromagnetic wave. The input/output apparatus may include a touchscreen, a display, a keyboard, or the like. The input/output apparatus is mainly configured to: receive data input by a user, and output data to the user. It needs to be noted that some types of terminal devices may not have the input/output apparatus.

When data needs to be sent, the processor outputs the baseband signal to the radio frequency circuit after performing baseband processing on the to-be-sent data. Then, the radio frequency circuit performs radio frequency processing on the baseband signal, and then sends the radio frequency signal to the outside in a form of an electromagnetic wave through the antenna. When data is sent to the terminal device, the radio frequency circuit receives the radio frequency signal through the antenna. The radio frequency circuit converts the radio frequency signal into the baseband signal, and outputs the baseband signal to the processor. The processor converts the baseband signal into data, and processes the data. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver module of the terminal device, and the processor having a processing function may be considered as a processing module of the terminal device.

Optionally, the transceiver 1803 may be integrated with the processor 1801, or may exist independently, and is coupled to the processor 1801 through an interface circuit (not shown in FIG. 18) of the communication apparatus 1800. This is not specifically limited in embodiments of this application.

When the communication apparatus 1800 is a communication chip, the transceiver 1803 may be an input interface and an output interface of the chip. The input interface is configured to implement a receiving function, and the output interface is configured to implement a sending function. The processor may be a processing module, a microprocessor, or an integrated circuit integrated on the chip. The sending operation of the network device or the terminal device in the foregoing method embodiments may be understood as an output of the chip, and the receiving operation of the network device or the terminal device in the foregoing method embodiments may be understood as an input of a chip.

It may be understood that, the structure of the communication apparatus 1800 shown in FIG. 18 does not constitute a limitation on the communication apparatus. An actual communication apparatus may include more or fewer components than those shown in the figure, combine some components, or have different component arrangement.

In addition, for technical effects of the communication apparatus 1800, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of random access memories (random access memory, RAM) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network apparatus, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, wherein the method comprises:
after receiving a first random access request from a first terminal device, determining, by an access network device, a first identifier of the first terminal device, wherein the first identifier indicates the first terminal device at a first signaling layer;
sending, by the access network device, the first identifier and an identifier of the first terminal device to a core network device, wherein the identifier of the first terminal device indicates the first terminal device at a second signaling layer;
receiving, by the access network device, an operation request message from the core network device, wherein the operation request message is determined based on the identifier of the first terminal device, and the operation request message comprises the first identifier and an operation instruction;
obtaining, by the access network device, a second identifier based on the first identifier, wherein the second identifier indicates the first terminal device at an access control layer; and
sending, by the access network device, the operation instruction and the second identifier to the first terminal device.

2. The method according to claim 1, wherein the method further comprises:
receiving, by the access network device, the first random access request, wherein the first random access request comprises the second identifier; and
the determining the first identifier of the first terminal device comprises:
allocating, by the access network device, the first identifier to the first terminal device based on the second identifier.

3. The method according to claim 2, wherein the method further comprises:
storing, by the access network device, a context of the first terminal device, wherein the context of the first terminal device comprises the second identifier and the first identifier.

4. The method according to claim 3, wherein the operation request message further comprises first indication information, and the first indication information indicates the access network device to delete the context of the first terminal device after the access network device completes an operation on the first terminal device.

5. The method according to claim 3, wherein before receiving, by the access network device, the first random access request, the method further comprises:
receiving, by the access network device, an operation task request message from the core network device, wherein the operation task request message comprises a task identifier; and
broadcasting, by the access network device, a second random access request based on the operation task request message; and wherein the context of the first terminal device further comprises the task identifier.

6. The method according to claim 1, wherein the method further comprises:
receiving, by the access network device, the first random access request, wherein the first random access request comprises the second identifier; and
the determining the first identifier of the first terminal device comprises:
determining, by the access network device, the second identifier as the first identifier.

7. The method according to claim 6, wherein before receiving, by the access network device, the first random access request, the method further comprises:
receiving, by the access network device, an operation task request message from the core network device, wherein the operation task request message comprises a task identifier;
broadcasting, by the access network device, a second random access request based on the operation task request message; and
after the access network device determines the second identifier as the first identifier, storing, by the access network device, a context of the first terminal device, wherein the context of the first terminal device comprises the task identifier and the first identifier.

8. The method according to claim 5 or 7, wherein after storing, by the access network device, the context of the first terminal device, the method further comprises:
receiving, by the access network device, the task identifier and second indication information from the core network device, wherein the second indication information indicates the access network device to delete the context comprising the task identifier; and
deleting, by the access network device, the context of the first terminal device based on the task identifier and the second indication information.

9. The method according to any one of claims 1 to 8, wherein the method further comprises:
receiving, by the access network device, an operation result from the first terminal device, wherein the operation result is a result of the first terminal device performing an operation indicated by the operation instruction; and
sending, by the access network device, the operation result and the first identifier to the core network device.

10. A communication method, wherein the method comprises:
receiving, by a core network device, a first identifier and an identifier of a first terminal device from an access network device, wherein the first identifier indicates the first terminal device at a first signaling layer, and the identifier of the first terminal device indicates the first terminal device at a second signaling layer;
determining, by the core network device, an operation on the first terminal device based on the identifier of the first terminal device; and
sending, by the core network device, an operation request message to the access network device, wherein the operation request message comprises the first identifier and an operation instruction.

11. The method according to claim 10, wherein the operation request message further comprises first indication information, and the first indication information indicates the access network device to delete a context of the first terminal device after the access network device completes an operation on the first terminal device.

12. The method according to claim 10, wherein before receiving, by the core network device, the first identifier and the identifier of the first terminal device from the access network device, the method further comprises:
sending, by the core network device, an operation task request message to the access network device, wherein the operation task request message comprises a task identifier; and
after determining that an operation task indicated by the task identifier is completed, sending, by the core network device, the task identifier and second indication information to the access network device, wherein the second indication information indicates the access network device to delete a context comprising the task identifier.

13. A communication method, wherein the method comprises:
after receiving a first random access request from a first terminal device, determining, by a reader, a first identifier of the first terminal device, wherein the first identifier indicates the first terminal device at an access control layer;
sending, by the reader, the first identifier and first information to an access network device, wherein the first information indicates the first terminal device at a first signaling layer;
receiving, by the reader, a first operation request message from the access network device, wherein the first operation request message comprises the first identifier and an operation instruction, and the operation instruction is determined based on the first information;
obtaining, by the reader, a second identifier based on the first identifier, wherein the second identifier indicates the first terminal device at a second signaling layer; and
sending, by the reader, the operation instruction and the second identifier to the first terminal device.

14. The method according to claim 13, wherein the method further comprises:
receiving, by the reader, the first random access request, wherein the first random access request comprises the second identifier; and
the determining, by the reader, the first identifier of the first terminal device comprises:
allocating, by the reader, the first identifier to the first terminal device based on the second identifier.

15. The method according to claim 14, wherein the method further comprises:
storing, by the reader, a first context of the first terminal device, wherein the first context comprises the first identifier and the second identifier.

16. The method according to claim 15, wherein the first operation request message further comprises first indication information, and the first indication information indicates the reader to delete the first context after the reader completes an operation on the first terminal device.

17. The method according to any one of claims 13 to 16, wherein the method further comprises:
receiving, by the reader, an operation result from the first terminal device, wherein the operation result is a result of the first terminal device performing an operation indicated by the operation instruction; and
sending, by the reader, the operation result and the first identifier to the access network device.

18. A communication method, wherein the method comprises:
after receiving a first identifier and first information from a reader, determining, by an access network device, a third identifier, wherein the first identifier indicates the first terminal device at an access control layer, the first information indicates the first terminal device at a first signaling layer, and the third identifier indicates the first terminal device at a third signaling layer;
sending, by the access network device, the third identifier and the first information to a core network element;
receiving, by the access network device, a second operation request message from the core network element, wherein the second operation request message is determined based on the first information, and the second operation request message comprises the third identifier and an operation instruction;
obtaining, by the access network device, the first identifier based on the third identifier; and
sending, by the access network device, a first operation request message to the reader, wherein the first operation request message comprises the operation instruction and the first identifier.

19. The method according to claim 18, wherein the method further comprises:
receiving, by the access network device, the first identifier and the first information; and
the determining, by the access network device, the third identifier comprises:
allocating, by the access network device, the third identifier to the first terminal device based on the first identifier.

20. The method according to claim 19, wherein the method further comprises:
storing, by the access network device, a second context of the first terminal device, wherein the second context comprises the first identifier and the third identifier.

21. The method according to claim 20, wherein the second operation request message further comprises second indication information, and the second indication information indicates the access network device to delete the context of the first terminal device after the access network device completes an operation on the first terminal device.

22. The method according to any one of claims 18 to 21, wherein the method further comprises:
receiving, by the access network device, an operation result from the reader, wherein the operation result is a result of the first terminal device performing an operation indicated by the operation instruction; and
sending, by the access network device, the operation result and the third identifier to the core network element.

23. A communication method, wherein the method comprises:
receiving, by a core network element, a third identifier and first information from an access network device, wherein the third identifier indicates the first terminal device at a third signaling layer, and the first information indicates the first terminal device at a first signaling layer;
determining, by the core network element, an operation on the first terminal device based on the first information; and
sending, by the core network element, a second operation request message to the access network device, wherein the second operation request message comprises the third identifier and an operation instruction.

24. The method according to claim 23, wherein the second operation request message further comprises second indication information, and the second indication information indicates the access network device to delete a context of the first terminal device after the access network device completes an operation on the first terminal device.

25. The method according to claim 23 or 24, wherein the method further comprises:
storing, by the core network element, a correspondence between an identifier of a reader and the third identifier, wherein the reader is configured to serve the first terminal device.

26. A communication apparatus, wherein the apparatus comprises a module configured to perform the method according to any one of claims 1 to 25.

27. A communication apparatus, wherein the communication apparatus is configured to perform the communication method according to any one of claims 1 to 25.

28. A communication apparatus, comprising a processor and a memory, wherein the memory is configured to store computer instructions, and the processor is configured to execute the instructions to cause the communication apparatus to perform the communication method according to any one of claims 1 to 25.

29. A communication chip, wherein the communication chip comprises a logic circuit and a communication interface, wherein the logic circuit is configured to execute computer instructions, the communication interface is used by the communication chip to communicate with another apparatus or chip, and when the logic circuit executes the computer instructions, the method according to any one of claims 1 to 25 is implemented.

30. A computer-readable storage medium, wherein the computer-readable storage medium comprises a computer program or instructions, and when the computer program or the instructions are executed on a communication apparatus, the communication apparatus is caused to perform the method according to any one of claims 1 to 25.

31. A computer program product, wherein the computer program product comprises a computer program or instructions, and when the computer program or the instructions are executed by a communication apparatus, the method according to any one of claims 1 to 25 is performed.
